# EUROPÄISCHE PATENTSCHRIFT

(11) **EP 2 771 735 B1**
(45) Veröffentlichungstag und Bekanntmachung des Hinweises auf die Patenterteilung: **24.01.2018**
(21) Anmeldenummer: 12762537.4
(22) Anmeldetag: 25.09.2012
(51) Int. Cl.: C09K 19/54, C09K 19/30, C09K 19/58, C09K 19/38, C09K 19/42, E06B 3/67, G02F 1/13, C09K 19/04, C09K 19/20, G02F 1/1334, G02F 1/137

(54) **SCHALTELEMENT ENTHALTEND EIN FLÜSSIGKRISTALLINES MEDIUM**
SWITCH ELEMENT COMPRISING A LIQUID CRYSTALLINE MEDIUM
ÉLÉMENT DE COMMUTATION CONTENANT UNE SUBSTANCE À CRISTAUX LIQUIDES

(30) Priorität: 24.10.2011 EP 11008518; 15.03.2012 US 201261611193 P
(43) Veröffentlichungstag der Anmeldung: 03.09.2014
(73) Patentinhaber: Merck Patent GmbH, 64293 Darmstadt (DE)
(72) Erfinder: JUNGE, Michael, 64319 Pfungstadt (DE); BEYER, Andreas, 63452 Hanau (DE)
(86) Internationale Anmeldenummer: PCT/EP2012/004003
(87) Internationale Veröffentlichungsnummer: WO 2013/060406

(56) Entgegenhaltungen:
- US-A1- 2008 089 073
- US-A1- 2011 234 944
- US-B2- 7 755 829

## Beschreibung

Die vorliegende Erfindung betrifft ein temperaturgesteuertes Schaltelement zur Regulation des Lichtdurchtritts. Weiterhin betrifft die Erfindung eine Mischung enthaltend mindestens eine flüssigkristalline Verbindung, mindestens eine Monomerverbindung, welche eine monofunktionelle Verbindung darstellt, und mindestens eine Monomerverbindung, welche eine multifunktionelle Verbindung darstellt. Nochmals weiterhin betrifft die Erfindung die Verwendung der genannten Mischung zur Herstellung des erfindungsgemäßen Schaltelements.

Die Energieeffizienz von Gebäuden gewinnt mit steigenden Energiekosten an Bedeutung. Fenster und Glasfassaden wurden in diesem Zusammenhang als diejenigen Elemente eines Gebäudes identifiziert, durch die der Großteil an Wärmeenergie eines Gebäudes bei niedrigen Außentemperaturen verloren geht, bzw. durch die der Großteil des Energie-Eintrags in ein Gebäude bei intensiver Sonneneinstrahlung stattfindet.

Es besteht daher Bedarf an Vorrichtungen, welche den Lichtdurchtritt und damit den Energiefluss durch Fenster bzw. Glasflächen kontrollieren. Insbesondere besteht Bedarf an Vorrichtungen, welche den Energiefluss durch Glasflächen an die zum jeweiligen Zeitpunkt vorherrschenden Bedingungen (Hitze, Kälte, hohe Sonneneinstrahlung, niedrige Sonneneinstrahlung) anpassen können.

Von besonderem Interesse ist die Bereitstellung solcher Vorrichtungen in gemäßigten Klimazonen, in denen über das Jahr ein Wechsel von warmen Außentemperaturen kombiniert mit hoher Sonneneinstrahlung (Sommer) und kalten Außentemperaturen kombiniert mit niedriger Sonneneinstrahlung (Winter) auftritt.

Beispielsweise ist es in der kalten Jahreszeit erwünscht, dass ein Maximum an Licht und damit transportierter Wärmeenergie durch Glasflächen in ein Gebäude gelangt. Dadurch können Heiz- und Beleuchtungskosten eingespart werden.

Andererseits ist es in der warmen Jahreszeit erwünscht, dass ein möglichst geringer Energie-Eintrag durch Glasflächen in ein Gebäude erfolgt. Dadurch kann ein angenehmeres Raumklima erreicht werden, bzw. es können Kosten für die Klimatisierung eingespart werden. Weiterhin kann in diesen Fällen eine Herabsetzung der einfallenden Lichtintensität erwünscht sein, beispielsweise um Blendung durch direkte Sonneneinstrahlung zu verringern.

Es besteht daher Bedarf an Schaltelementen, welche den Lichtdurchtritt durch Fenster oder sonstige Glasflächen regulieren. Insbesondere besteht Bedarf an Schaltelementen, welche die Regulation des Lichtdurchtritts automatisch an die vorherrschenden Bedingungen, wie oben dargestellt, anpassen (smart windows). Weiterhin besteht Bedarf an Schaltelementen, welche energieeffizient arbeiten, mit möglichst geringem technischem Aufwand installierbar sind, technisch zuverlässig sind und ästhetischen Ansprüchen genügen. Weitere Aspekte sind eine leichte Verarbeitbarkeit des Schaltelements, Robustheit im Betrieb und Nachrüstbarkeit an bestehenden Glasflächen von Gebäuden.

Im Stand der Technik bekannt sind Vorrichtungen, die bei Anlegen einer elektrischen Spannung reversibel von einem transparenten Zustand hin zu einem weniger lichtdurchlässigen, beispielsweise einem trüben (lichtstreuenden) oder einem dunkel-transparenten Zustand geschaltet werden können (z. B. C. M. Lampert et al., Solar Energy Materials & Solar Cells, 2003, 489-499).

Elektrisch schaltbare Vorrichtungen wie die oben genannten Vorrichtungen weisen jedoch den Nachteil auf, dass sie sich nicht unmittelbar und automatisch an die Umgebungsbedingungen anpassen können. Weiterhin benötigen sie elektrische Anschlüsse, was einen erhöhten Aufwand bei der Installation sowie einen erhöhten Wartungsbedarf mit sich bringt.

In US 2009/0015902 und US 2009/0167971 werden temperatur-reaktive Vorrichtungen offenbart, die ein flüssigkristallines Medium in einer Schicht zwischen zwei Polarisatoren enthalten. Dabei wird das Schalten zwischen einem Zustand mit höherer Lichttransmission und einem Zustand mit geringerer Lichttransmission durch einen Phasenübergang des flüssigkristallinen Mediums von einem nematischen Zustand zu einem isotropen Zustand erreicht, ohne dass das Anlegen einer Spannung notwendig wird.

Die in den genannten Anmeldungen offenbarten Vorrichtungen weisen jedoch den Nachteil auf, dass die Schicht enthaltend das flüssigkristalline Medium flüssig ist. Die Vorrichtung ist daher anfälliger gegenüber Beschädigungen.

Weiterhin wäre es wünschenswert, flexible Schaltelemente zur Verfügung zu haben, welche wie Folien aufgerollt und geschnitten werden können. Dies ist jedoch bei Vorrichtungen enthaltend eine flüssige Schicht weniger gut möglich, da es in diesen Fällen zu einem Herausdrücken der Flüssigkeit und zu einer Bildung von Luftblasen in der flüssigen Schicht kommen kann.

Nochmals weiterhin wäre es wünschenswert, die Resttransmission der Vorrichtung im geschlossenen Zustand sowie ihre Schalteigenschaften variieren zu können.

Flüssigkristalline Medien enthaltend polymere Verbindungen sind im Stand der Technik bekannt. Beispielsweise offenbart Appl. Phys. Lett. 84, 1233 Mischungen enthaltend flüssigkristalline Verbindungen sowie Polymere (polymer network liquid crystal, PDLC) zur Verwendung in elektrisch angesteuerten Lichtmodulatoren. Solche Mischungen weisen jedoch in vielen Fällen den Nachteil auf, trüb bzw. lichtstreuend zu sein.

US2011/234944 offenbart die Merkmale des bezeichnenden Teils des Anspruchs 1.

Gegenstand der vorliegenden Erfindung ist ein temperaturgesteuertes Schaltelement zur Regulation des Lichtdurchtritts gemäß des unabhängigen Anspruchs 1. Unter dem Begriff Licht wird im Rahmen der vorliegenden Erfindung elektromagnetische Strahlung im UV-A-, VIS-, sowie NIR-Bereich verstanden. Insbesondere wird darunter Strahlung verstanden, welche von den üblicherweise in Fenstern verwendeten Materialien (z. B. Glas) nicht oder nur in einem vernachlässigbaren Umfang absorbiert wird.

Gemäß den üblicherweise auf dem Gebiet der Strahlungsphysik verwendeten Definitionen wird unter UV-A-Licht Strahlung einer Wellenlänge von 320 bis 380 nm verstanden, unter VIS-Licht Strahlung einer Wellenlänge von 380 nm bis 780 nm verstanden und unter NIR-Licht Strahlung einer Wellenlänge von 780 nm bis 3000 nm verstanden. Unter dem Begriff Licht wird im Rahmen der vorliegenden Erfindung daher Strahlung einer Wellenlänge von 320 bis 3000 nm verstanden.

Unter dem Begriff Schaltelement zur Regulation des Lichtdurchtritts wird im Rahmen der vorliegenden Erfindung eine Vorrichtung verstanden, welche eine definierte Fläche bedeckt und die Transmission von Licht durch diese Fläche, abhängig von dem Schaltzustand, in dem die Vorrichtung vorliegt, unterschiedlich stark reduziert.

Unter dem Begriff flüssigkristalline Verbindung wird eine Verbindung verstanden, welche unter bestimmten Bedingungen flüssigkristalline Eigenschaften zeigt, und insbesondere eine Verbindung, welche unter bestimmten Bedingungen eine nematische flüssigkristalline Phase ausbildet.

Unter einer mesogenen Gruppe wird im Rahmen der vorliegenden Erfindung ein Strukturelement verstanden, welches bereits für sich alleine, d. h. auch ohne Zusammenwirken mit einer weiteren Gruppe wie einer Abstandsgruppe oder einer reaktiven Gruppe (vgl. Offenbarung zu Monomerverbindungen unten) flüssigkristalline Eigenschaften der Verbindung bewirkt. Mesogene Gruppen sind typischerweise solche chemischen Gruppen oder Einheiten, wie sie auch bei niedermolekularen, nicht reaktiven flüssigkristallinen Verbindungen vorkommen. Beispiele sind u. a. Biscyclohexyle, Phenylcyclohexyle, Biphenyle und Phenylbenzoate.

Die mesogene Gruppe ist erfindungsgemäß in mindestens einer Wiederholeinheit des Polymers enthalten. Sie kann in einer Seitenkette und/oder in der Hauptkette des Polymers enthalten sein. Bevorzugt ist sie in der Seitenkette enthalten.

Unter einer Wiederholeinheit wird eine Einheit des Polymers verstanden, welche mehrfach, mindestens zweimal, im Polymer vorkommt. Bevorzugt entspricht die Zahl ihres Auftretens im Polymer dem Anteil von Monomer enthaltend die Wiederholeinheit an den zur Polymerisation eingesetzten Monomeren.

Bevorzugt enthalten mindestens 10 % der Wiederholeinheiten des Polymers eine oder mehrere mesogene Gruppen, besonders bevorzugt mindestens 30 %, ganz besonders bevorzugt mindestens 60 % und noch stärker bevorzugt mindestens 90 %. Am stärksten bevorzugt enthalten im wesentlichen alle Wiederholeinheiten des Polymers eine oder mehrere mesogene Gruppen.

Als die beiden Schaltzustände des Schaltelements liegen erfindungsgemäß ein Schaltzustand mit höherer Lichttransmission durch das Schaltelement (Schaltzustand I oder offener Zustand) und ein Schaltzustand mit geringerer Lichttransmission durch das Schaltelement (Schaltzustand II oder geschlossener Zustand) vor.

Der Unterschied in der Lichttransmission zwischen den beiden Zuständen wird gemäß der vorliegenden Anmeldung als der Schalthub der Vorrichtung bezeichnet.

Das Schaltelement ist gemäß der Erfindung temperaturgesteuert, worunter verstanden wird, dass der Schaltvorgang durch eine Änderung der Temperatur der Vorrichtung bewirkt werden kann. Die zwei Schaltzustände der Vorrichtung sind folglich mit zwei unterschiedlichen Temperaturbereichen der Vorrichtung verbunden. Die Temperatursteuerung des Schaltelements findet erfindungsgemäß in einem Temperaturbereich zwischen 0 °C und 80 °C, bevorzugt zwischen 10 °C und 70 °C und ganz besonders bevorzugt zwischen 20 °C und 60 °C statt.

Gemäß einer bevorzugten Ausführungsform der Erfindung liegt der Schaltzustand mit höherer Lichttransmission durch das Schaltelement bei niedrigeren Temperaturen des Schaltelements vor, und der Schaltzustand mit geringerer Lichttransmission liegt bei höheren Temperaturen des Schaltelements vor.

Die Funktionsweise des Schaltelements beruht darauf, dass einfallendes Licht durch den ersten Polarisator polarisiert wird. Dies bedeutet, dass nur Licht mit bestimmten Polarisationseigenschaften durch den Polarisator hindurchgelassen wird. Die polarisationsbeeinflussende Schaltschicht verändert in einem der beiden Schaltzustände die Polarisationseigenschaften des polarisierten Lichts, welches den ersten Polarisator verlässt und in die Schaltschicht gelangt. Dadurch kann ein höherer oder ein niedrigerer Anteil des polarisierten Lichts durch den zweiten Polarisator hindurchtreten, je nachdem wie dessen Polarisationsebene relativ zu der des ersten Polarisators angeordnet ist. Im anderen der beiden Schaltzustände verändert die polarisationsbeeinflussende Schaltschicht die Polarisationseigenschaften des durch sie hindurchtretenden Lichts nicht oder nur in geringem Umfang.

Dies soll an einem Beispiel verdeutlicht werden: sind die beiden Polarisationsebenen der Polarisatoren um einen Winkel x gegeneinander gedreht und dreht im ersten Schaltzustand des Schaltelements die Schaltschicht die Polarisationsebene ebenfalls um einen Winkel x, so tritt ein Großteil des Lichts, welches durch den ersten Polarisator gelangt ist, auch durch den zweiten Polarisator und damit durch das gesamte Schaltelement hindurch. Im anderen der beiden Schaltzustände der Schaltschicht wird die Polarisationsebene des Lichts durch die Schaltschicht nicht gedreht oder nur geringfügig gedreht, so dass aufgrund der Drehung der Polarisationsebenen der beiden Polarisatoren gegeneinander nur ein geringer Teil des Lichts, welches durch den ersten Polarisator hindurchtritt, durch den zweiten Polarisator hindurchgelassen wird. Es tritt somit in diesem Zustand des Schaltelements nur ein geringer Teil des Lichts, welches auf das Schaltelement trifft, durch dieses hindurch. In diesem Beispiel ist der polarisationsbeeinflussende Zustand der Schaltschicht somit mit Schaltzustand I verbunden, und der die Polarisation nicht beeinflussende, inaktive Zustand ist mit Schaltzustand II verbunden.

In allen Fällen gilt jedoch, dass der Zustand der Schaltschicht (polarisationsbeeinflussend oder inaktiv) den Zustand des Schaltelements (Schaltzustand I oder Schaltzustand II) bestimmt. Erfindungsgemäß ist der polarisationsbeeinflussende Zustand der Schaltschicht mit einem flüssigkristallinen, optisch anisotropen Zustand der Schicht verbunden, und der inaktive Zustand der Schaltschicht ist mit einem isotropen Zustand der Schicht verbunden. Hierbei kann jedoch eine Rest-Anisotropie der Schaltschicht bedingt durch anisotropes Polymer verbleiben.

Allgemein wird unter einem isotropen Zustand der Schaltschicht ein Zustand weitgehender Isotropie verstanden. Es ist dabei nicht ausgeschlossen, dass eine Rest-Anisotropie auch im als isotrop bezeichneten Zustand vorhanden ist. Dies kann beispielsweise durch das Polymer verursacht sein, welches in beiden Zuständen der Vorrichtung zumindest zum Teil anisotrope Eigenschaften aufweist.

Gemäß einer bevorzugten Ausführungsform liegt die Schaltschicht im Schaltzustand I des Schaltelements im polarisationsbeeinflussenden Zustand vor und im Schaltzustand II im inaktiven Zustand vor. Erfindungsgemäß verläuft der Schaltvorgang zwischen den beiden Schaltzuständen nicht abrupt bei einer bestimmten Temperatur, welche die beiden oben genannten Temperaturbereiche trennt, sondern graduell in einem Übergangsbereich, welcher in einer Temperaturspanne liegt. Diese Temperaturspanne des Übergangsbereichs weist bevorzugt eine Breite von 5 bis 100 Graden Celsius auf, verläuft also beispielweise zwischen 15 und 110 °C. Besonders bevorzugt weist die Temperaturspanne eine Breite von 10 bis 50 Graden Celsius auf.

Als Übergangsbereich zwischen den beiden Schaltzuständen wird im Rahmen der vorliegenden Anmeldung jener Temperaturbereich verstanden, in dem weniger als das 0.8-fache der Transmission des Schaltzustands mit der höheren Lichttransmission und mehr als das 1.2-fache der Transmission des Schaltzustands mit der niedrigeren Lichttransmission vorliegen.

Es ist für den Fachmann offensichtlich, dass mit einem ausgedehnteren Übergangsbereich des Schaltvorgangs eine geringere Empfindlichkeit des Schaltens gegenüber einer Temperaturänderung verbunden ist, und umgekehrt mit einem engen Übergangsbereich des Schaltvorgangs eine höhere Empfindlichkeit des Schaltvorgangs gegenüber einer Temperaturänderung verbunden ist.

Anstelle einer Beschreibung der oben genannten Empfindlichkeit des Schaltvorgangs durch die Breite des Übergangsbereichs kann alternativ und für den Fachmann austauschbar auch eine Beschreibung über die relative Steigung der Kurve einer Auftragung von Transmission (y-Achse) gegen Temperatur (x-Achse) erfolgen. In diesem Fall ist mit einer betragsgroßen Steigung der Kurve eine hohe Empfindlichkeit des Schaltvorgangs verbunden, und mit einer betragskleinen Steigung der Kurve eine niedrige Empfindlichkeit des Schaltvorgangs verbunden.

Gemäß einer möglichen Ausführungsform der Erfindung weist die Temperaturspanne des Übergangsbereichs zwischen den beiden Schaltzuständen eine Breite von 5 bis 30 Graden Celsius auf, besonders bevorzugt eine Breite von 10 bis 20 Graden Celsius (Schaltelement Typ A' mit hoher Empfindlichkeit des Schaltvorgangs).

Eine solche Ausführungsform ist bevorzugt, wenn der Schaltvorgang in einem möglichst engen Temperaturbereich stattfinden soll (hohe Empfindlichkeit des Schaltvorgangs, vgl. oben). Dies kann erfindungsgemäß erreicht werden beispielsweise durch die Verwendung eines geringen Anteils an Polymer in der Schaltschicht oder durch die Verwendung geeigneter Arten von Monomeren in der Polymerisationsreaktion zum Polymer. Explizite Ausgestaltungen für diese Ausführungsform werden in einem folgenden Abschnitt beschrieben.

Gemäß einer alternativen Ausführungsform der Erfindung weist die Temperaturspanne des Übergangsbereichs zwischen den beiden Schaltzuständen eine Breite von 30 bis 100 Graden Celsius auf, besonders bevorzugt eine Breite von 50 bis 80 Graden Celsius (Schaltelement Typ B' mit geringer Empfindlichkeit des Schaltvorgangs). Eine solche Ausführungsform ist bevorzugt, wenn der Schaltvorgang über einen ausgedehnten Temperaturbereich stattfinden soll (niedrige Empfindlichkeit des Schaltvorgangs, vgl. oben). Dies kann erfindungsgemäß erreicht werden beispielsweise durch die Verwendung eines höheren Anteils an Polymer in der Schaltschicht oder durch die Verwendung geeigneter Arten von Monomeren in der Polymerisationsreaktion zum Polymer. Explizite Ausgestaltungen für diese Ausführungsform werden in einem folgenden Abschnitt beschrieben.

Gemäß einer möglichen Ausführungsform der Erfindung weist der Schaltzustand mit geringerer Lichtdurchlässigkeit eine Transmission im VIS-Bereich von mehr als 5 %, bevorzugt von mehr als 10 %, besonders bevorzugt von mehr als 15 % und ganz besonders bevorzugt von mehr als 25 % auf, wobei diese Transmission durch die polarisationsbeeinflussende Schaltschicht bewirkt wird (Schaltelement Typ B" mit hoher Resttransmission).

Eine solche Ausführungsform des Schaltelements mit einer beträchtlichen Transmission auch im Schaltzustand mit geringerer Lichtdurchlässigkeit kann bevorzugt sein in Verwendungsarten, in denen eine völlige Sperrung des Lichtdurchtritts in keinem Fall eintreten soll. Dies ist beispielsweise denkbar bei der Verwendung des Schaltelements in einem Fenster eines Büro- oder eines Wohngebäudes.

An dieser Stelle soll hervorgehoben werden, dass die oben genannte Lichttransmission im Schaltzustand mit geringerer Lichtdurchlässigkeit in Vorrichtungen wie den erfindungsgemäßen Schaltelementen prinzipiell auch durch die Anordnung der Polarisatoren zueinander beeinflusst werden kann. Möglichkeiten hierzu sind dem Fachmann geläufig. Beispielsweise kann eine erhöhte Lichttransmission im Schaltzustand mit geringerer Lichtdurchlässigkeit durch eine Anordnung, in der die Polarisationsrichtungen der Polarisatoren um einem von 90° abweichenden Winkel gegeneinander gedreht sind, erreicht werden.

Wie obenstehend explizit erwähnt wurde, wird die Transmission von mehr als 5 %, bevorzugt mehr als 10 % und besonders bevorzugt mehr als 25 % in der oben genannten erfindungsgemäßen Ausführungsform jedoch durch die Schaltschicht bewirkt und nicht durch die Stellung der Polarisatoren zueinander.

Dies kann erfindungsgemäß erreicht werden beispielsweise durch die Verwendung von Monomeren mit hohen Werten für die Doppelbrechung Δn in der Polymerisation zum Polymer, insbesondere durch die Verwendung von hohen Anteilen solcher Monomere und/oder durch einen hohen Anteil von Polymer insgesamt in der Mischung von Polymer und flüssigkristalliner Verbindung in der Schaltschicht.

Gemäß einer alternativen bevorzugten Ausführungsform der Erfindung weist der Schaltzustand mit geringerer Lichtdurchlässigkeit eine Transmission im VIS-Bereich von höchstens 5 %, bevorzugt von höchstens 4 % und besonders bevorzugt von höchstens 3 % auf (Schaltelement Typ A" mit geringer Resttransmission).

Dies kann erfindungsgemäß erreicht werden durch die Verwendung von Monomeren mit niedrigen Werten für die Doppelbrechung Δn in der Polymerisation zum Polymer, insbesondere durch die Verwendung von niedrigen Anteilen solcher Monomere und/oder durch einen niedrigen Anteil von Polymer insgesamt in der Mischung von Polymer und flüssigkristalliner Verbindung in der Schaltschicht.

Gemäß einer alternativen besonders bevorzugten Ausführungsform treten die Ausführungsformen A' (Schaltelement mit hoher Empfindlichkeit des Schaltvorgangs) und A" (Schaltelement mit geringer Resttransmission) kombiniert in einem erfindungsgemäßen Schaltelement auf. Ein solches besonders bevorzugtes Schaltelement mit den oben genannten Eigenschaften wird als Schaltelement des Typs A bezeichnet.

Gemäß einer besonders bevorzugten Ausführungsform treten die Ausführungsformen B' (Schaltelement mit geringer Empfindlichkeit des Schaltvorgangs) und B" (Schaltelement mit hoher Resttransmission) kombiniert in einem erfindungsgemäßen Schaltelement auf. Ein solches besonders bevorzugtes Schaltelement mit den oben genannten Eigenschaften wird als Schaltelement des Typs B bezeichnet.

Erfindungsgemäß wurde gefunden, dass durch Einstellung bestimmter Parameter betreffend die Konzentration der für die Polymerisationsreaktion zum Polymer verwendeten Monomere, deren Doppelbrechung Δn sowie deren Zahl von reaktiven funktionellen Gruppen (monofunktionelle vs. multifunktionelle Monomere) nach Wahl entweder Schaltelemente des Typs A oder des Typs B erhalten werden können. Auf diese Aspekte wird in einem folgenden Abschnitt näher eingegangen.

Das erfindungsgemäße Schaltelement ist bevorzugt dadurch gekennzeichnet, dass es keine Vorrichtungen zur elektrischen Ansteuerung des Schaltvorgangs enthält. Besonders bevorzugt enthält es keinerlei Vorrichtungen zur elektrischen Ansteuerung wie beispielsweise Drähte, Kabel, elektrische Anschlüsse oder Schaltkreise.

Das erfindungsgemäße Schaltelement ist bevorzugt in einer beliebigen baulichen Öffnung eines Gebäudes oder eines sonstigen weitgehend nach außen abgeschlossenen Kompartiments angebracht.

Besonders bevorzugt ist das Schaltelement in einer baulichen Öffnung in einer Seitenwand oder Decke eines Gebäudes angebracht.

Prinzipiell sind jedoch alle Arten von Öffnungen in einem weitgehend nach außen abgeschlossenen Kompartiment zur Anbringung des Schaltelements geeignet, sofern sie Lichtdurchlässigkeit aufweisen.

Unter einem weitgehend nach außen abgeschlossenen Kompartiment werden im Rahmen der vorliegenden Anmeldung insbesondere ein Gebäude oder einzelne Räume eines Gebäudes verstanden. Das Gebäude kann dabei unter anderem ein privates Gebäude, beispielsweise ein Wohnhaus sein, oder es kann ein öffentliches Gebäude oder ein gewerblich genutztes Gebäude wie beispielsweise ein Fabrikgebäude, eine Lagerhalle oder ein Bürogebäude sein. Das Kompartiment kann gemäß einer alternativen Ausführungsform aber auch ein Fahrzeug, beispielsweise ein Auto oder ein Lastkraftwagen, oder ein Container, beispielsweise ein Transportcontainer sein.

Bevorzugt sind bauliche Öffnungen wie Fenster oder Decken einer Größe von mehr als 0.5 m², besonders bevorzugt mehr als 1 m², ganz besonders bevorzugt mehr als 3 m². Dies ist dadurch bedingt, dass durch solche Flächen, wenn sie von der Sonne bestrahlt werden, eine hohe Energieaufnahme in den Innenraum erfolgt, sofern keine geeigneten Maßnahmen getroffen werden, um die Lichttransmission und damit die Energieaufnahme in den Innenraum zu verringern. Bevorzugt sind weiterhin bauliche Öffnungen, die aufgrund ihrer räumlichen Ausrichtung und/oder der geographischen und klimatischen Lage des Gebäudes einer hohen Sonneneinstrahlung ausgesetzt sind.

Das Schaltelement ist bevorzugt flächendeckend auf der baulichen Öffnung angeordnet, so dass die Lichttransmission durch die Öffnung möglichst vollständig reguliert werden kann. In einer möglichen Ausführungsform erfolgt die Abdeckung durch ein einziges Schaltelement. In einer alternativen Ausführungsform kann die Abdeckung aber auch durch mehrere Schaltelemente erfolgen, die entweder unmittelbar aneinander angrenzen oder unter Lückenlassung angeordnet sind.

In vielen Fällen wird die bauliche Öffnung mit einem durchsichtigen Material abgedeckt sein, beispielsweise durch eine Glasscheibe oder eine Plexiglasscheibe. Gemäß einer bevorzugten Ausführungsform wird das erfindungsgemäße Schaltelement direkt auf dieser Scheibe aufgebracht.

Eine solche Aufbringung kann durch Nachrüsten einer bereits bestehenden Anordnung oder durch kompletten Neueinbau erfolgen.

Eine unter dem Gesichtspunkt der Wärmedämmung vorteilhafte Ausführungsform der Abdeckung einer baulichen Öffnung ist eine Anordnung enthaltend zwei oder mehr Glasscheiben, wobei der Zwischenraum zwischen den Glasscheiben mit Luft oder mit einer speziellen Gasmischung gefüllt ist (Mehrscheiben-Isolierglas). Entsprechend ist es erfindungsgemäß bevorzugt, das Schaltelement im Inneren einer solchen Mehrscheiben-Isolierglasscheibe anzubringen oder außen an eine solche Scheibe anzubringen.

Allgemein bevorzugt ist die Verwendung auf einer zum Innenraum hin gerichteten Seite einer Scheibe oder im Zwischenraum zwischen zwei Glasscheiben bei Mehrscheiben-Isolierglas. Es sind jedoch auch andere Anordnungen denkbar und in bestimmten Fällen vorzuziehen. Der Fachmann kann Vor- und Nachteile bestimmter Anordnungen bezüglich der Haltbarkeit des Schaltelements, optischen und ästhetischen Gesichtspunkten, praktischen Gesichtspunkten bezüglich der Reinigung der Scheiben sowie bezüglich der Reaktivität des Schaltelements gegenüber Temperaturänderungen des Innenraums und der äußeren Umgebung gegeneinander abwägen und eine für den vorliegenden Fall optimale Ausgestaltungsform auswählen.

Gemäß einer bevorzugten Ausführungsform ist das Schaltelement dadurch gekennzeichnet, dass es eine Flächenausdehnung von mindestens 0.05 m², bevorzugt von 0.1 m² bis 20 m² und besonders bevorzugt von 0.2 m² bis 5 m² aufweist.

Gemäß einer bevorzugten Ausführungsform wird das Schaltelement zur temperaturabhängigen Beeinflussung der Lichttransmission verwendet, besonders bevorzugt zur Beeinflussung der Lichttransmission ausgehend von der Sonne in einen Innenraum.

Bei der erfindungsgemäßen Verwendung sind die oben genannten sowie auch die in folgenden Teilen aufgeführten bevorzugten Ausführungsformen des Schaltelements ebenfalls bevorzugt.

Die Lichttransmission von der Umgebung in einen Innenraum bedeutet einen Energieeintrag in den Innenraum, welcher aufgrund allgemeiner physikalischer Gesetze zu einer Temperaturerhöhung des Innenraums führt. Die Beeinflussung der Lichttransmission durch das erfindungsgemäße Schaltelement bedeutet somit nicht nur, dass der Lichteintrag, unter anderem in Form von VIS-Licht, in einen Innenraum reguliert werden kann, sondern auch, dass der Wärmeeintrag und damit die Temperatur des Innenraums reguliert werden kann. Die Verwendung des Schaltelements zu diesem Zweck ist ebenfalls Gegenstand der vorliegenden Erfindung.

Aufgrund der weiter oben beschriebenen Temperaturabhängigkeit des Schaltelements, wobei gemäß einer bevorzugten Ausführungsform der offene Schaltzustand bei einer niedrigeren Temperatur und der geschlossene Schaltzustand bei einer höheren Temperatur vorliegt, kann somit eine Selbstregulation der Temperatur des Innenraums erfolgen. Dabei wird bei einer niedrigen Temperatur die Lichttransmission und damit der Wärmeeintrag erhöht, so dass die Innenraumtemperatur ansteigt. Entsprechend wird bei einer höheren Temperatur die Lichttransmission und damit der Wärmeeintrag verringert, so dass die Innenraumtemperatur absinkt.

Das Schalten zwischen den beiden Schaltzuständen erfolgt temperaturreguliert. Gemäß einer bevorzugten Ausführungsform wird das Schaltelement rein temperaturreguliert verwendet, ohne dass die Schaltschicht durch das Anlegen eines elektrischen Feldes beeinflusst wird.

Wie dem Fachmann bekannt ist, kann die polarisationsbeeinflussende Schaltschicht, welche unter anderem mindestens eine flüssigkristalline Verbindung enthält, unter bestimmten Bedingungen durch das Anlegen eines elektrischen Feldes von einem Schaltzustand in einen anderen Schaltzustand gebracht werden. Ein solche elektrisch bewirkte Beeinflussung der Schaltschicht und somit des gesamten Schaltelements kann unter bestimmten Bedingungen bevorzugt sein, beispielsweise um einen ursprünglichen Zustand der Schaltschicht nach einer größeren Zahl von Schaltvorgängen wiederherzustellen. Es ist jedoch festzuhalten, dass es ein Merkmal der Erfindung ist, dass das Schaltelement für den regulären Gebrauch rein temperaturgesteuert verwendet wird, und dass die erfindungsgemäße Verwendung des Schaltelements kein Anlegen eines elektrischen Feldes erfordert.

Weiterhin ist eine Verwendung des Schaltelements bevorzugt, bei der die Lichttransmission unter anderem im NIR-Bereich beeinflusst wird. Strahlung im NIR-Bereich trägt zu einem großen Anteil zum Eintrag von Energie in Innenräume durch Fenster bei. Besonders bevorzugt ist aufgrund der erfindungsgemäßen Ausgestaltung der Vorrichtung, insbesondere in den bevorzugten Ausführungsformen, eine Beeinflussung der Lichttransmission im Bereich von 1000 bis 1500 nm Wellenlänge.

In einer bevorzugten Ausführungsform der Erfindung ist die polarisationsbeeinflussende Schaltschicht des Schaltelements zwischen zwei Substratschichten angeordnet.

Die Substratschichten können erfindungsgemäß unter anderem aus polymerem Material, aus Metalloxid, beispielsweise ITO, aus Glas oder aus Metall bestehen. Bevorzugt bestehen sie aus Glas oder ITO oder polymerem Material.

Das erfindungsgemäße Schaltelement kann zusätzlich zu den oben angegebenen Komponenten noch weitere Elemente umfassen, beispielsweise eine oder mehrere Orientierungsschichten. Besonders bevorzugt sind genau zwei Orientierungsschichten vorhanden. Diese sind bevorzugt jeweils zwischen der Substratschicht und der Schaltschicht angeordnet. Die Orientierungsschichten können auch als Substratschichten dienen, so dass keine Substratschichten in der Vorrichtung erforderlich sind. In einer bevorzugten Ausführungsform der Erfindung bestehen die Orientierungsschichten aus geriebenem Polyimid oder geriebenem Polyacrylat.

Es ist gemäß der vorliegenden Erfindung jedoch ebenfalls möglich und unter bestimmten Bedingungen vorteilhaft, dass das Schaltelement keine Orientierungsschicht angrenzend an die Schaltschicht enthält.

Weiterhin ist es bevorzugt, dass das erfindungsgemäße Schaltelement eine oder mehrere Filterschichten enthält, bevorzugt eine oder mehrere UV-Filterschichten. Besonders bevorzugt enthält das Schaltelement einen UV-Filter, welcher Licht mit einer Wellenlänge von weniger als 300 nm, bevorzugt Licht mit einer Wellenlänge von weniger als 320 nm, besonders bevorzugt Licht mit einer Wellenlänge von weniger als 340 nm und ganz besonders bevorzugt Licht mit einer Wellenlänge von weniger als 360 nm blockiert.

Erfindungsgemäß weist das Schaltelement zwei oder mehr Polarisatoren auf, von denen einer an der einen Seite der Schaltschicht und ein anderer an der gegenüberliegenden Seite der Schaltschicht angeordnet ist. Dabei sind Schaltschicht und die beiden Polarisatoren bevorzugt parallel zueinander angeordnet.

Die Polarisatoren können Linearpolarisatoren oder Zirkularpolarisatoren darstellen. Bevorzugt sind genau zwei Polarisatoren in der Vorrichtung vorhanden. In diesem Fall ist es weiterhin bevorzugt, dass die Polarisatoren entweder beide Linearpolarisatoren oder beide Zirkularpolarisatoren darstellen.

Sind zwei lineare Polarisatoren in der Vorrichtung vorhanden, so ist es erfindungsgemäß bevorzugt, dass die Polarisationsrichtungen der beiden Polarisatoren um einen Winkel von 45° bis 135°, besonders bevorzugt 70° bis 110° und ganz besonders bevorzugt 80° bis 100° gegeneinander gedreht sind.

Die Polarisatoren können reflektive oder absorptive Polarisatoren darstellen. Ein reflektiver Polarisator im Sinne der vorliegenden Anmeldung reflektiert Licht einer Polarisationsrichtung bzw. einer Art von circular polarisiertem Licht, während er für Licht der anderen Polarisationsrichtung bzw. der anderen Art von circular polarisiertem Licht durchlässig ist. Entsprechend absorbiert ein absorptiver Polarisator Licht einer Polarisationsrichtung bzw. einer Art von circular polarisiertem Licht, während er für Licht der anderen Polarisationsrichtung bzw. der anderen Art von circular polarisiertem Licht durchlässig ist.

Im Rahmen der vorliegenden Erfindung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Polarisatoren sind typischerweise nicht im gesamten Spektrum des UV-A, VIS- und NIR-Bereichs gleichermaßen wirksam. Gemäß einer bevorzugten Ausführungsform enthält das erfindungsgemäße Schaltelement Polarisatoren, welche Licht unter anderem im NIR-Bereich polarisieren. Gemäß einer bevorzugten Ausführungsform der Erfindung stellen der erste und der zweite Polarisator jeweils gleich oder verschieden einen absorptiven oder einen reflektiven Linearpolarisator dar. Besonders bevorzugt stellen entweder beide Polarisatoren einen absorptiven Linearpolarisator dar, oder beide Polarisatoren stellen einen reflektiven Linearpolarisator dar. Gemäß einer weiteren bevorzugten Ausführungsform ist der nach außen, d. h. vom Innenraum weg gerichtete Polarisator ein reflektiver Polarisator.

In einer möglichen erfindungsgemäßen Ausführungsform stellen die beiden Polarisatoren die Substratschichten dar, zwischen denen die Schaltschicht angeordnet ist, das heißt, es sind keine zusätzlichen Substratschichten in der Vorrichtung vorhanden.

In einer weiteren bevorzugten Ausführungsform der Erfindung befindet sich die Schaltschicht zwischen flexiblen Schichten, beispielsweise flexiblen Polymerfolien. Die erfindungsgemäße Vorrichtung ist dadurch formflexibel und biegsam und kann beispielsweise aufgerollt werden. Die flexiblen Schichten können wahlweise Substratschicht, Orientierungsschicht und/oder Polarisatoren darstellen. Weitere Schichten, welche bevorzugt ebenfalls flexibel sind, können zusätzlich vorhanden sein.

Weiterhin hat die Schaltschicht erfindungsgemäß eine gelartige oder zumindest zähflüssige Konsistenz. Dies hat den Vorteil einer höheren Robustheit der Vorrichtung. Weiterhin kann die erfindungsgemäße Vorrichtung enthaltend eine gel-artige Schaltschicht schneidbar sein, was einen Vorteil bei der Handhabung darstellt.

Obenstehend wurde angegeben, dass der Zustand der Schaltschicht entscheidet, ob das Schaltelement im offenen Zustand (Schaltzustand I) oder im geschlossenen Zustand (Schaltzustand II) vorliegt.

Gemäß einer bevorzugten Ausführungsform hat die Schaltschicht im Schaltzustand mit höherer Lichttransmission die Eigenschaft, die Polarisationsebene von linear polarisiertem Licht zu drehen. Gemäß einer bevorzugten Ausführungsform dreht die Schaltschicht in diesem Schaltzustand die Polarisationsebene um einen Betrag von 70 bis 110°, bevorzugt um einen Betrag von 80 bis 100° und besonders bevorzugt um einen Betrag von 85 bis 95°. Entsprechend hat die Schaltschicht im Schaltzustand mit geringerer Lichttransmission die Eigenschaft, die Polarisationsebene von linear polarisiertem Licht nicht oder nur geringfügig zu drehen.

Es kann jedoch erfindungsgemäß auch eine Ausführungsform der Schaltschicht vorliegen, bei der im verdrillt nematischen Zustand der Vorrichtung eine Drehung der Polarisationsebene des Lichts von mehr als 360° vorliegt, d. h. mehrere vollständige Drehungen der Polarisationsebene erfolgen.

Besonders bevorzugt ist der Zustand der Schaltschicht im Schaltzustand mit höherer Lichtdurchlässigkeit (Schaltzustand I) ein verdrillt nematischer Zustand. Entsprechend ist der Zustand der Schaltschicht im Schaltzustand mit geringerer Lichtdurchlässigkeit (Schaltzustand II) ein isotroper Zustand. Eine Rest-Anisotropie ist im isotropen Zustand nicht ausgeschlossen.

Die Schaltschicht umfasst erfindungsgemäß mindestens eine flüssigkristalline Verbindung sowie mindestens ein Polymer, wobei das Polymer mindestens eine Wiederholeinheit enthaltend eine oder mehrere mesogene Gruppen umfasst.

Bevorzugt liegt in der Schaltschicht eine Mischung verschiedener flüssigkristalliner Verbindungen vor. Besonders bevorzugt liegen in der Schaltschicht mindestens 5 und höchstens 15 verschiedene flüssigkristalline Verbindungen vor.

Die flüssigkristallinen Verbindungen können beliebig gewählt sein aus dem Fachmann bekannten flüssigkristallinen Verbindungen. Bevorzugt sind flüssigkristalline Verbindungen mit begrenzter Größe und Molekulargewicht (kleine Moleküle). Besonders bevorzugt ist es, wenn die flüssigkristalline Verbindung ein Molekulargewicht von nicht mehr als 1000 Da, ganz besonders bevorzugt von nicht mehr als 800 Da und am stärksten bevorzugt von nicht mehr als 600 Da aufweist.

Bevorzugt weist die Mischung der flüssigkristallinen Verbindungen (bzw. im Fall, dass nur eine flüssigkristalline Verbindung verwendet wird, die einzelne flüssigkristalline Verbindung) einen Klärpunkt zwischen -20 °C und 200 °C auf, besonders bevorzugt einen Klärpunkt zwischen 10 °C und 180 °C. Aufgrund der Klärpunkt-verändernden Eigenschaften des in der Schaltschicht enthaltenen Polymers sind insbesondere auch Mischungen bzw. Verbindungen mit hohen Klärpunkten, beispielsweise zwischen 80 °C und 200 °C, bevorzugt 100 °C bis 180 °C und besonders bevorzugt zwischen 120 °C und 160 °C zur Verwendung im erfindungsgemäßen Schaltelement geeignet.

Bevorzugt entsprechen die flüssigkristallinen Verbindungen der folgenden Formel (F-1) 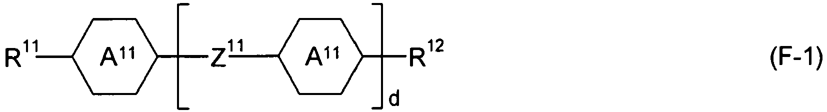 wobei
- R¹¹,R¹²: bei jedem Auftreten gleich oder verschieden F, Cl, -CN, -NCS, -SCN, R¹³-O-CO-, R¹³-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere CH₂-Gruppen durch O oder S ersetzt sein können; und
- R¹³: bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere CH₂-Gruppen durch O oder S ersetzt sein können; und 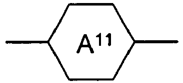
bei jedem Auftreten gleich oder verschieden ausgewählt ist aus 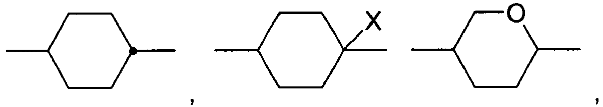 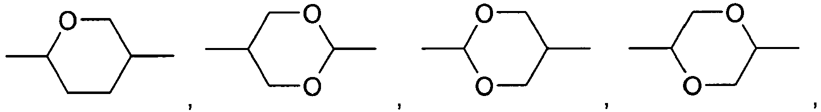 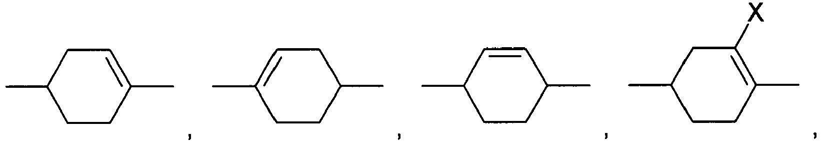 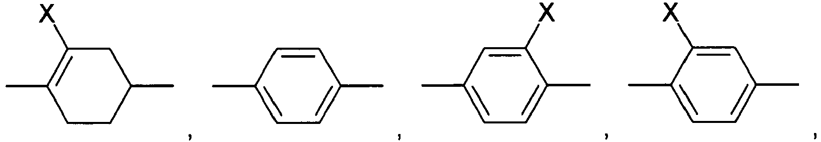 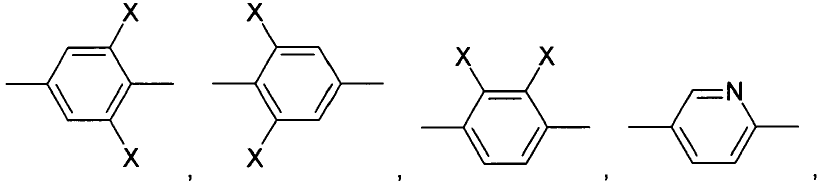 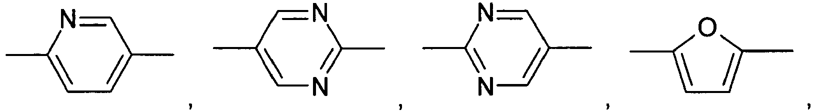 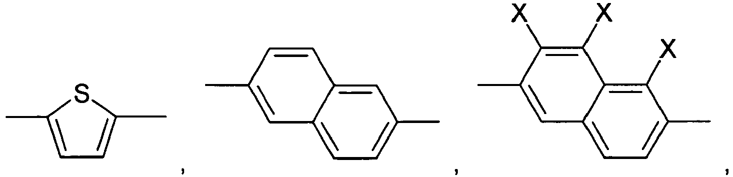 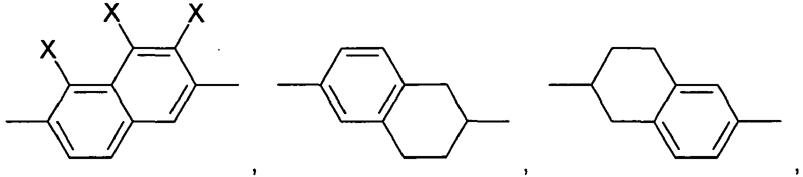 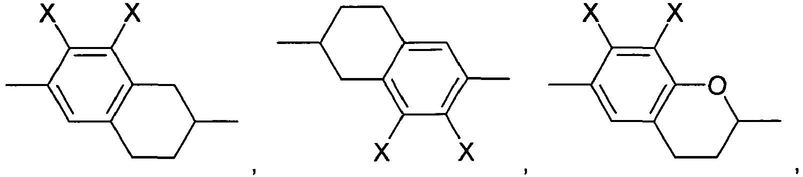 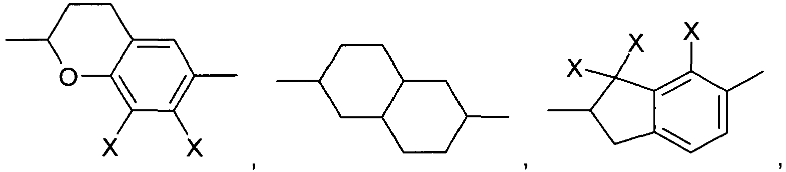 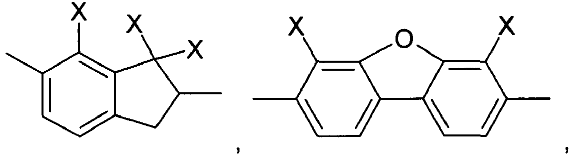 und 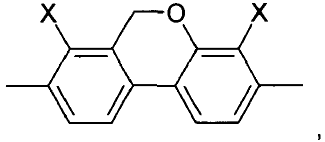 wobei
- X: bei jedem Auftreten gleich oder verschieden ausgewählt ist aus F, Cl, CN oder einer Alkyl-, Alkoxy- oder Alkylthiogruppe mit 1 bis 10 C-Atomen, wobei ein oder mehrere Wasserstoffatome in den oben genannten Gruppen durch F oder Cl ersetzt sein können, und wobei eine oder mehrere CH₂-Gruppen in den oben genannten Gruppen durch O oder S ersetzt sein können; und
- Z¹¹: bei jedem Auftreten gleich oder verschieden ausgewählt ist aus -CO-O-, -O-CO-, -CF₂-CF₂-, -CF₂-O-, -O-CF₂-, -CH₂-CH₂-, -CH=CH-, -CF=CF-, -CF=CH-, -CH=CF-, -C≡C-, -OCH₂-, -CH₂O-, und einer Einfachbindung; und
- d: einen Wert von 0, 1, 2, 3, 4, 5 oder 6 annimmt, bevorzugt 0, 1, 2 oder 3, besonders bevorzugt 1, 2 oder 3.

Gruppen der Teilformel 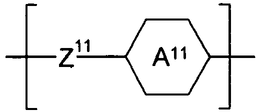 können dabei bei jedem Auftreten gleich oder verschieden sein.

Besonders bevorzugt zur Verwendung als flüssigkristalline Verbindungen sind die in den Anmeldungen WO 2011/134582, WO 2011/144299, WO 2011/154077, WO 2012/025182 und WO 2012/052100 offenbarten Mischungen von flüssigkristallinen Verbindungen.

Es ist erfindungsgemäß bevorzugt, dass die flüssigkristalline Verbindung oder die Mischung flüssigkristalliner Verbindungen in der Schaltschicht in einem Anteil von mindestens 50 %, bevorzugt mindestens 60 %, besonders bevorzugt mindestens 70 % und ganz besonders bevorzugt mindestens 80 % vorliegt.

In der Schaltschicht liegt bevorzugt eine Art Polymer vor, d. h. ein Polymer, dass in genau einer Polymerisationsreaktion aus entsprechenden Monomeren enthalten wurde. Eine Ausführungsform, in der mehrere unterschiedliche Polymere in der Schaltschicht verwendet werden, d. h. Polymere, welche in mehreren unterschiedlichen Polymerisationsreaktionen, gegebenenfalls unter Verwendung unterschiedlicher Monomere, erhalten wurden, ist jedoch ebenfalls möglich.

Es ist erfindungsgemäß bevorzugt, dass das Polymer in der Schaltschicht in einem Anteil von höchstens 50 %, bevorzugt höchstens 40 %, besonders bevorzugt höchstens 30 % und ganz besonders bevorzugt höchstens 20 % vorliegt.

Weiterhin bevorzugt liegen in der Schaltschicht die flüssigkristalline Verbindung und das Polymer in einer homogenen Mischung vor. Unter einer homogenen Mischung wird insbesondere eine Mischung verstanden, welche bei Betrachtung mit dem bloßen Auge klar erscheint. Bevorzugt wird darunter eine Mischung verstanden, welche bei Betrachtung mit einem Mikroskop keine Einschlüsse, Partikel oder sonstige Inhomogenitäten einer Größe von mehr als 20 µm, besonders bevorzugt mehr als 10 µm, ganz besonders bevorzugt mehr als 1 µm aufweist.

Die Homogenität der in der Schaltschicht enthaltenen Mischung ist wichtig für das äußere Erscheinungsbild des Schaltelements. Insbesondere führt eine möglichst gute Homogenität der Mischung der Schaltschicht dazu, dass das Schaltelement bei Durchsicht klar erscheint und möglichst wenig Trübung und Streuung aufweist.

Es ist erfindungsgemäß bevorzugt, dass die Schaltschicht zusätzlich zu der flüssigkristallinen Verbindung und dem Polymer einen oder mehrere chirale Dotierstoffe enthält.

Chirale Dotierstoffe werden in der Mischung der Schaltschicht bevorzugt in einer Gesamtkonzentration von 0.01 % bis 3 %, besonders bevorzugt von 0.05 % bis 1 % verwendet. Um hohe Werte für die Verdrillung zu erhalten, kann die Gesamtkonzentration der chiralen Dotierstoffe auch höher als 3 % gewählt werden, bevorzugt bis maximal 10 %.

Die Konzentration dieser Verbindungen und anderer Mindermengenkomponenten wird bei der Angabe der Konzentrationen der flüssigkristallinen Verbindungen und des Polymers vernachlässigt.

Bevorzugte Dotierstoffe sind die in der folgenden Tabelle abgebildeten Verbindungen:

| |
|---|
| 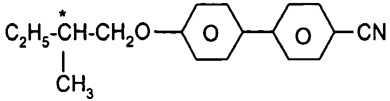 |
| **C 15** |
| 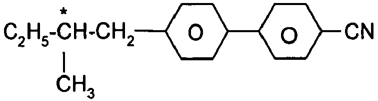 |
| **CB 15** |
| 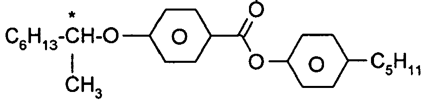 |
| **CM 21** |
| 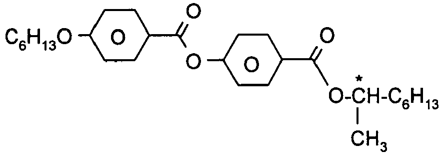 |
| **R S-811 / S-811** |
| 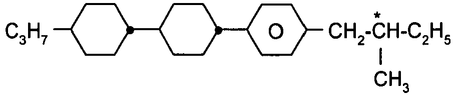 |
| **CM 44** |
| 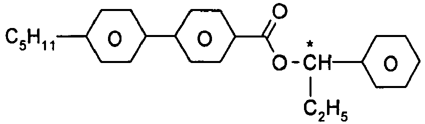 |
| **CM 45** |
| 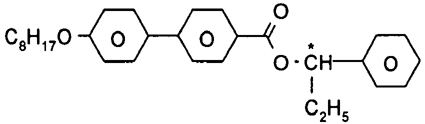 |
| **CM 47** |
| 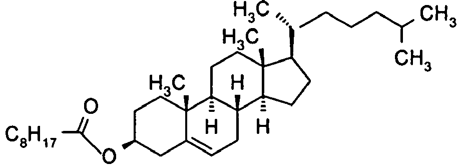 |
| **CN** |
| 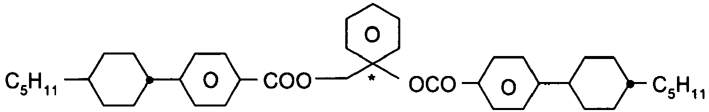 |
| **R-1011 / S-1011** |
| 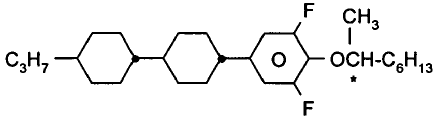 |
| **R-2011 / S-2011** |
| 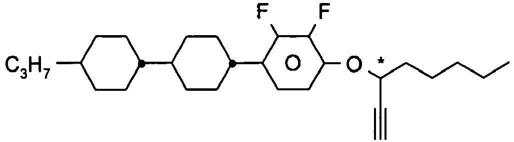 |
| **R-3011 / S-3011** |
| 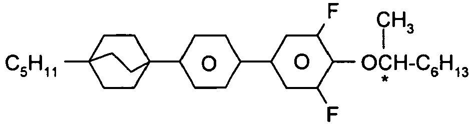 |
| **R-4011 / S-4011** |
| 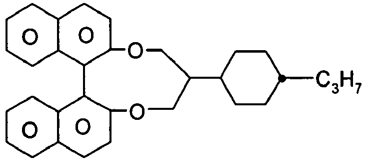 |
| **R-5011 / S-5011** |

Die Schaltschicht enthält weiterhin bevorzugt einen oder mehrere Stabilisatoren. Die Gesamtkonzentration der Stabilisatoren liegt bevorzugt zwischen 0.00001 % und 10 %, besonders bevorzugt zwischen 0.0001 % und 1 % der Gesamtmischung. Die Konzentration dieser Verbindungen und anderer Mindermengenkomponenten wird bei der Angabe der Konzentrationen der flüssigkristallinen Verbindungen und des Polymers vernachlässigt.

Bevorzugte Stabilisatorverbindungen sind in der folgenden Tabelle gezeigt:

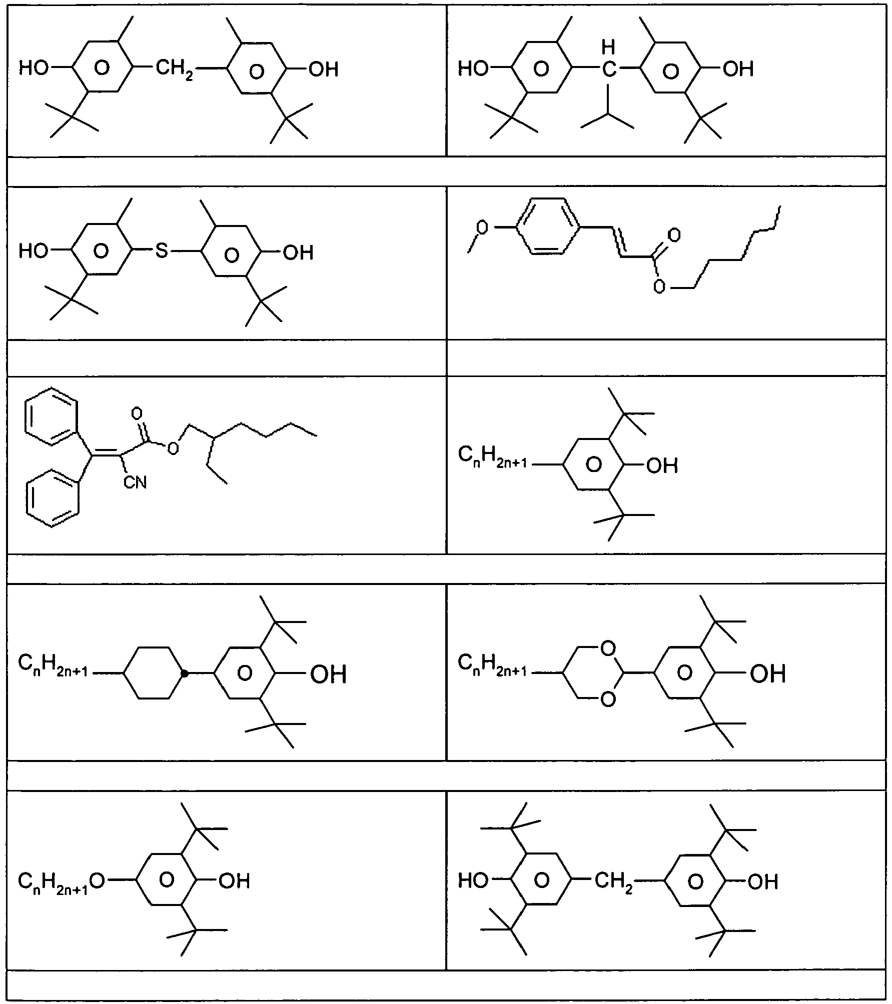

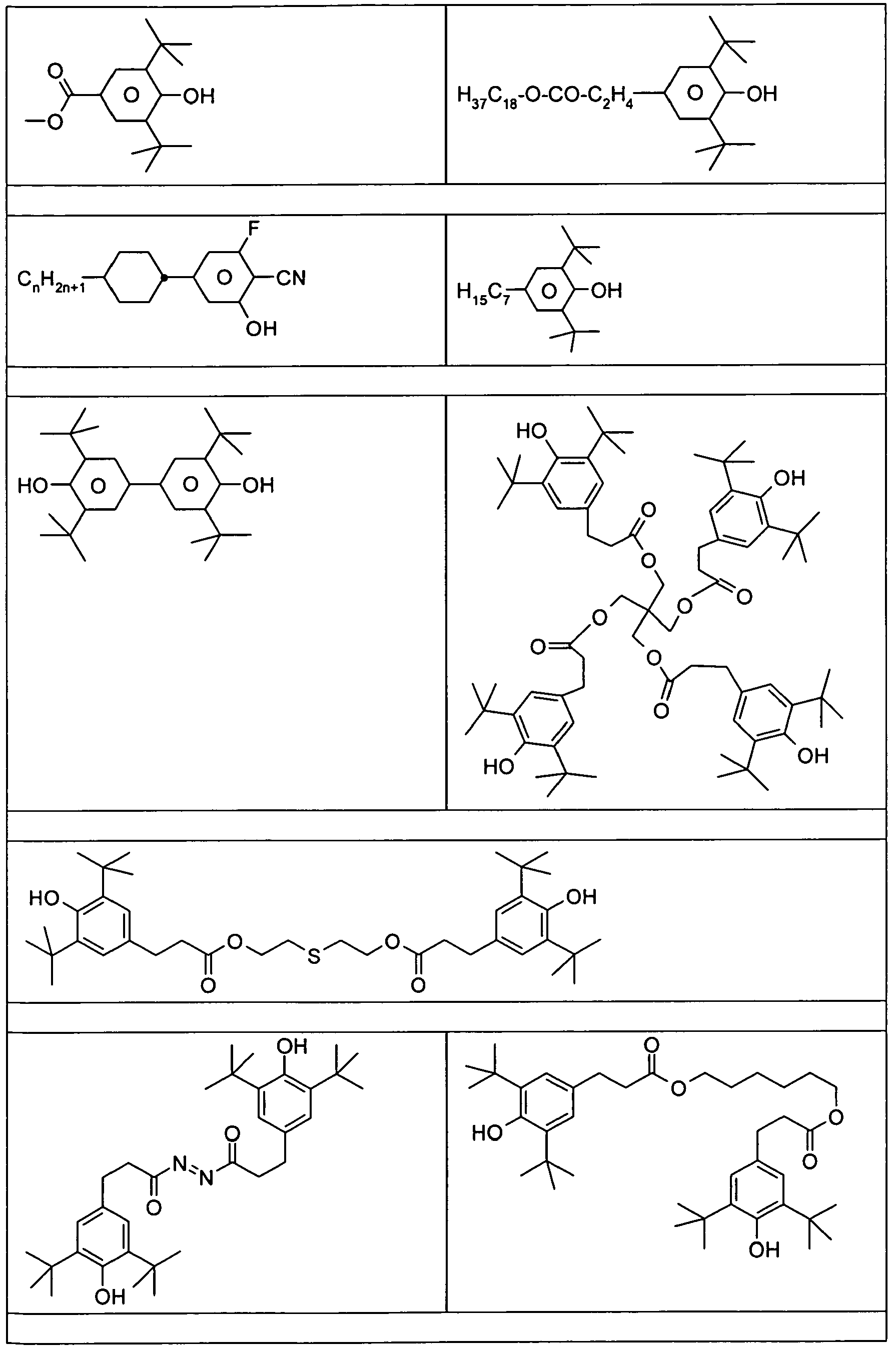

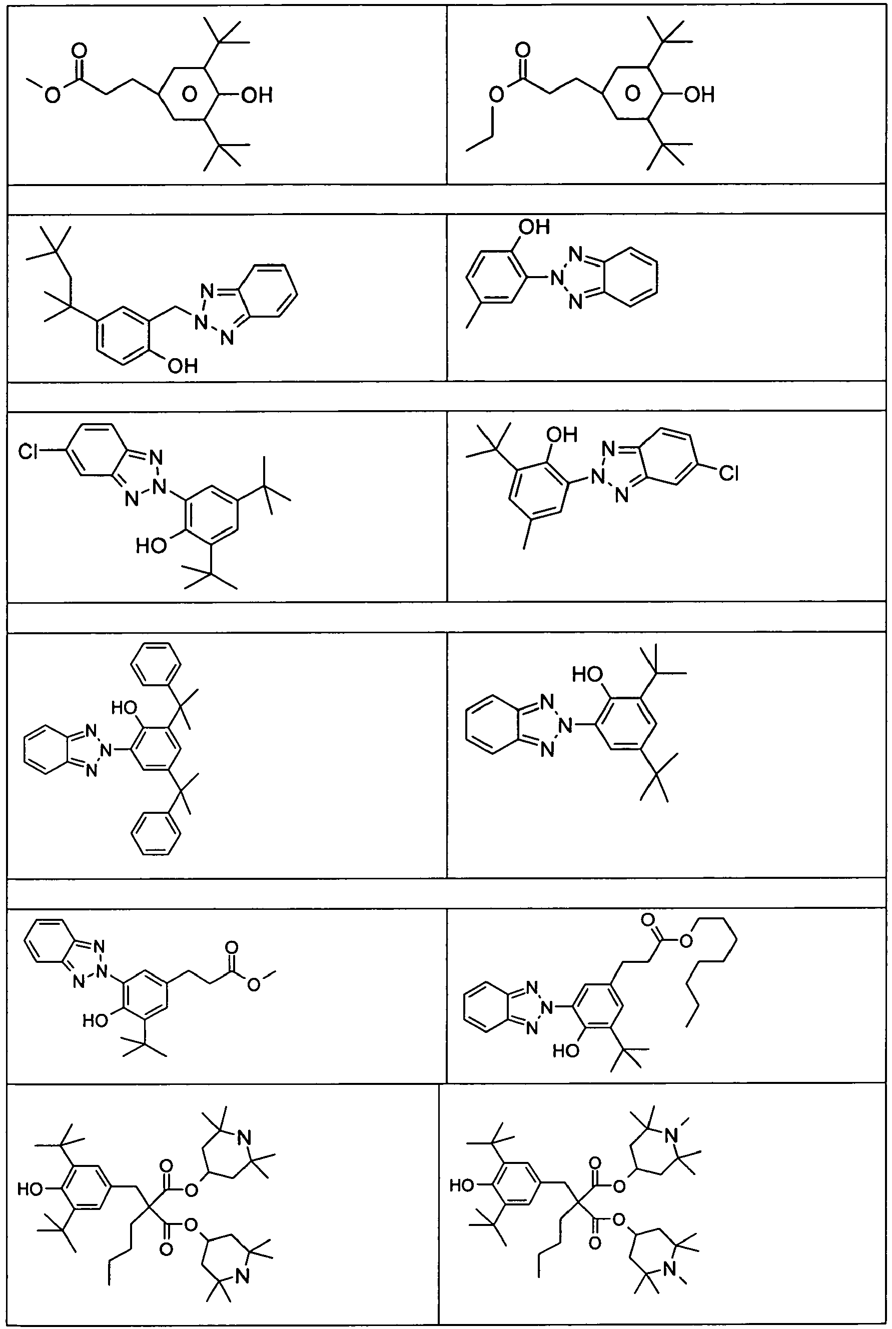

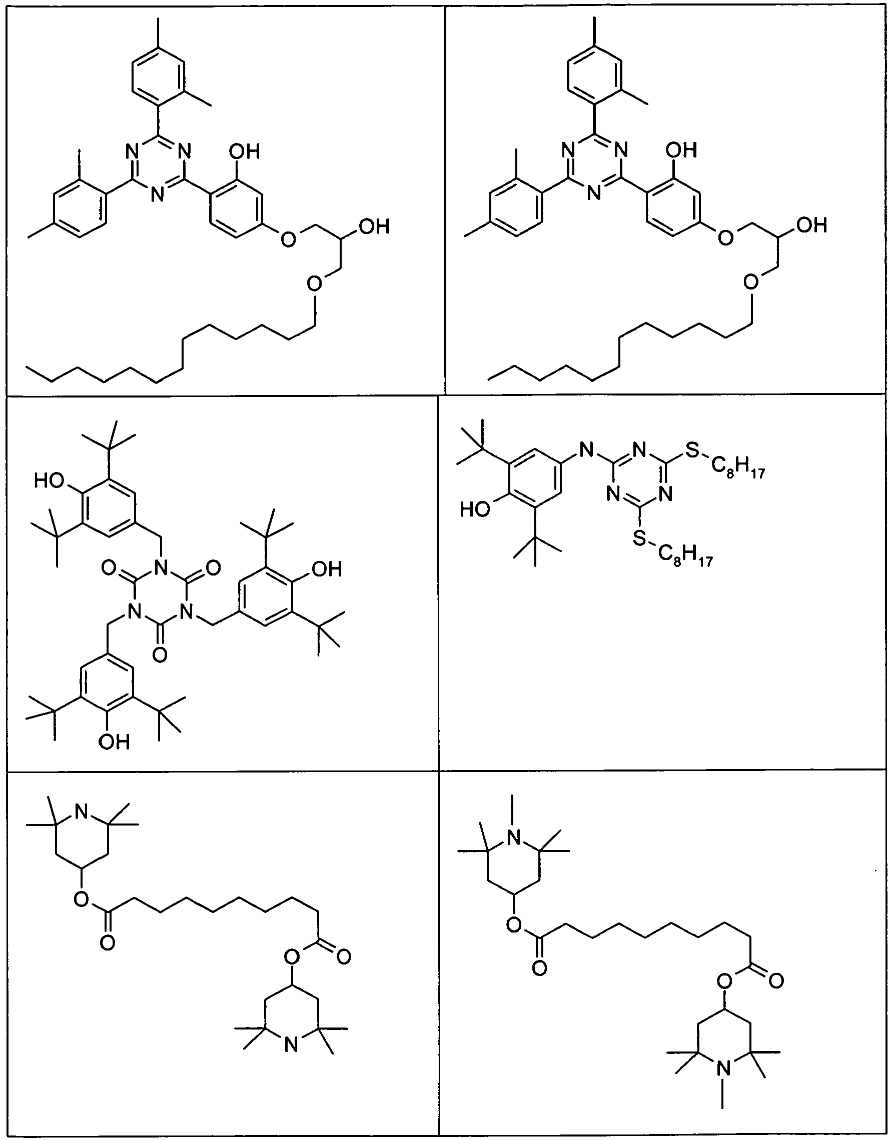

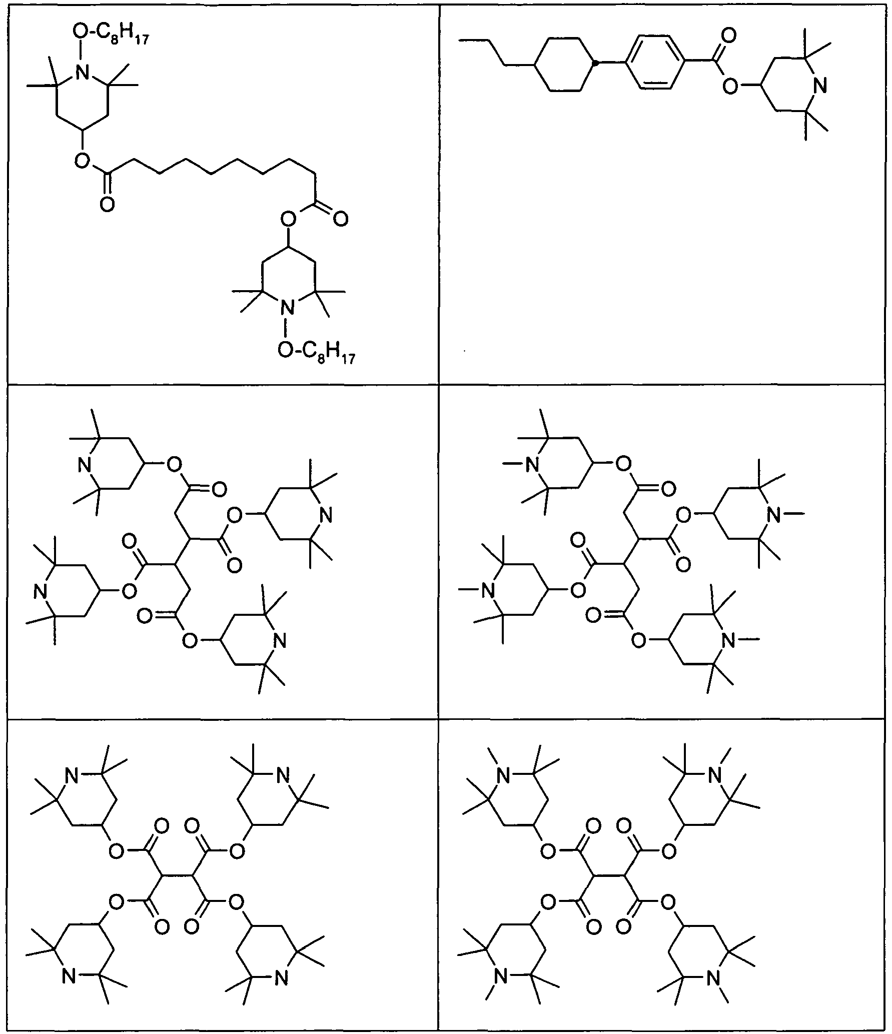

Gemäß einer bevorzugten Ausführungsform der Erfindung enthält die Schaltschicht weniger als 1 Gew.-% dichroitische Farbstoffmoleküle, besonders bevorzugt weniger als 0.1 Gew-% dichroitische Farbstoffmoleküle und ganz besonders bevorzugt weniger als 0.01 Gew-% dichroitische Farbstoffmoleküle.

Insbesondere stellen sogenannte Guest-Host-Systeme, in denen dichroitische Farbstoffmoleküle in ein flüssigkristallines Material hineindotiert werden, keine bevorzugte Ausführungsform der Erfindung dar.

Das Polymer wird bevorzugt durch Polyadditionsreaktion aus entsprechenden gleichen oder verschiedenen Monomeren gebildet. Bevorzugt erfolgt die Polymerisationsreaktion über eine photochemisch initiierte Reaktion, sie kann erfindungsgemäß aber auch thermisch gestartet werden. Besonders bevorzugt wird das Polymer durch UV-Licht-induzierte Polyadditionsreaktion gebildet.

Eine solche Art der Polymerisation hat den Vorteil, dass verglichen mit anderen Polymerisationsarten eine höhere Reinheit des Polymers erreicht werden kann. Weiterhin ist die UV-Licht-induzierte Polymerisationsreaktion hervorragend steuerbar und läuft sehr schnell ab. Nochmals weiterhin werden unerwünschte Nebenreaktionen wie Zersetzung oder Oxidation der Mischungskomponenten vermieden.

Bevorzugt wird das Polymer aus Monomerverbindungen enthaltend jeweils eine oder mehrere Gruppen gewählt aus Acrylatgruppen, Vinylethergruppen und Epoxidgruppen gebildet. Besonders bevorzugt sind Monomerverbindungen enthaltend eine, zwei, drei oder vier Acrylatgruppen, ganz besonders bevorzugt sind Monomerverbindungen enthaltend eine oder zwei Acrylatgruppen (sogenannte Monoacrylate bzw. Diacrylate).

Erfindungsgemäß bevorzugt sind Monomere, welche reaktive Gruppen lediglich eines Typs aufweisen, beispielsweise ausschließlich Acrylatgruppen. Es können jedoch auch Monomere verwendet werden, welche gemischtfunktionell sind, d. h. jeweils eine oder mehrere reaktive Gruppen eines Typs und eine oder mehrere reaktive Gruppen eines anderen Typs aufweisen, beispielsweise eine Acrylatgruppe und eine Epoxidgruppe.

Unter einer Acrylatgruppe wird im Rahmen der vorliegenden Erfindung bevorzugt eine Gruppe der folgenden Formel (A-1) verstanden: 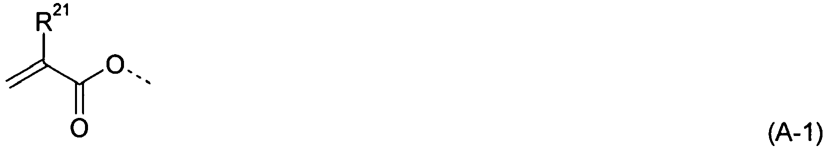 wobei die gestrichelte Bindung die Bindung an den Rest des Monomers darstellt und R²¹ einen beliebigen organischen Rest darstellt, bevorzugt H oder eine Alkylgruppe mit 1 bis 10 C-Atomen, besonders bevorzugt H. Entsprechendes gilt für ein Monomer enthaltend zwei oder mehr Acrylatgruppen.

Weiterhin bevorzugt ist es, dass das Polymer aus zwei oder mehr verschiedenen Monomerverbindungen gebildet wird, wobei mindestens eine Monomerverbindung eine monofunktionelle Verbindung, bevorzugt ein Monoacrylat, darstellt und mindestens eine andere Monomerverbindung eine multifunktionelle Verbindung, bevorzugt ein Diacrylat, darstellt.

Bevorzugt liegt dabei die multifunktionelle Verbindung in einem Anteil von maximal 80 % an allen Monomerverbindungen vor, besonders bevorzugt in einem Anteil von maximal 70 % und ganz besonders bevorzugt in einem Anteil von maximal 60 %. Bevorzugt gelten diese Bedingungen für das Diacrylat-Monomer.

Das Verhältnis von Diacrylat zu Monoacrylat in der Mischung beträgt bevorzugt 1:20 bis 2:1, besonders bevorzugt 1:15 bis 3:2 und ganz besonders bevorzugt 1:10 bis 1:1.

Es ist bevorzugt, dass mindestens ein Monomer in der Polymerisationsreaktion, in der das Polymer der Schaltschicht des erfindungsgemäßen Schaltelements gebildet wird, eine oder mehrere mesogene Gruppen enthält.

Bevorzugt ist in der Polymerisationsreaktion, in der das Polymer gebildet wird, der Anteil der Monomere enthaltend eine oder mehrere mesogene Gruppen bezogen auf die Gesamtmenge der eingesetzten Monomere mindestens 10 %. Besonders bevorzugt ist er mindestens 30 %, ganz besonders bevorzugt mindestens 60 % und stärker bevorzugt mindestens 90%.

Es ist besonders bevorzugt, dass im wesentlichen alle Monomere zur Herstellung des Polymers eine oder mehrere mesogene Gruppen aufweisen.

Ein Vorteil der Verwendung von Monomeren enthaltend mesogene Gruppen liegt darin, dass die flüssigkristalline Phase über einen weiten Konzentrationsbereich an eingesetztem Monomer stabil ist. Weiterhin wurde gefunden, dass die Verwendung von Monomeren enthaltend mesogene Gruppen die Homogenität der erhaltenen Mischung verbessert und die Lichtstreuung verringert.

Für den Fall, dass mindestens zwei verschiedene Monomere in der Polymerisationsreaktion verwendet werden, kann es bevorzugt sein, dass mindestens ein Monomer keine mesogene Gruppe aufweist und dass mindestens ein Monomer eine oder mehrere mesogene Gruppen aufweist.

Bevorzugt weisen Monomerverbindungen gemäß der vorliegenden Erfindung eine Grundstruktur der Formel (M-1) oder (M-2) auf: 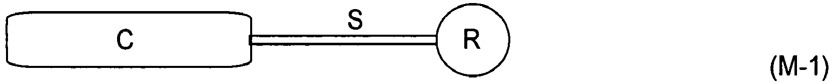 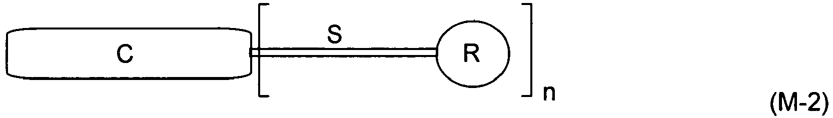 wobei die Gruppe C eine mesogene Gruppe darstellt, welche an die Gruppe S bzw. die Gruppen S bindet. Besonders bevorzugt enthält sie mindestens eine Aryl-, Heteroaryl- oder Cyclohexylgruppe.

Weiterhin stellt die Gruppe S eine beliebige Abstandsgruppe dar. Sie kann eine Einfachbindung, ein einzelnes Atom oder eine Kette mit einer Länge von 2 bis 20 Atomen darstellen. Bevorzugt stellt sie eine Kette mit einer Länge von 2 bis 10 Atomen dar, besonders bevorzugt eine Alkylen-, Alkylenoxy- oder Alkylendioxygruppe. In Abgrenzung zur mesogenen Gruppe stellt die Abstandsgruppe eine flexible Gruppe dar, die sich frei in allen Raumrichtungen ausrichten und bewegen kann, während die mesogene Gruppe typischerweise eingeschränkte Beweglichkeit aufweist.

Die Gruppe R stellt eine beliebige reaktive Gruppe dar, welche in der Polyadditionsreaktion polymerisieren kann, bevorzugt eine Acrylat-, Vinylether- oder Epoxidgruppe. Der Index n weist einen Wert von 2 bis 5 auf, bevorzugt von 2 bis 4 und besonders bevorzugt von 2.

Besonders bevorzugt sind Monomerverbindungen gemäß Formel (M-1) oder Formel (M-2), welche einer der beiden Formeln (M-1-1) oder (M-2-1) entsprechen 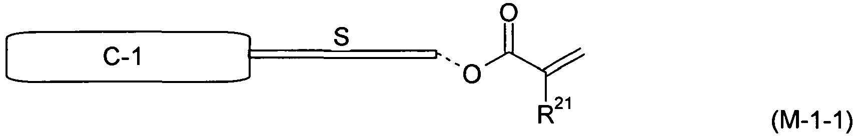 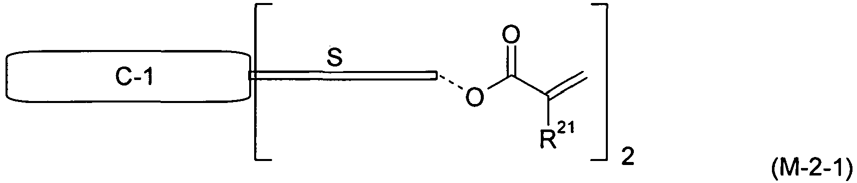 wobei die Gruppe C-1 eine mesogene Gruppe darstellt, welche eine hohe Doppelbrechung Δn aufweist, die Gruppe S wie oben definiert ist und R²¹ wie oben definiert ist.

Besonders bevorzugt sind weiterhin Monomerverbindungen gemäß Formel (M-1) oder Formel (M-2), welche einer der beiden Formeln (M-1-2) oder (M-2-2) entsprechen 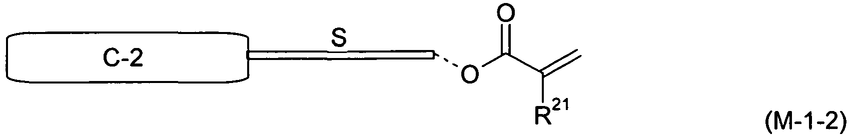 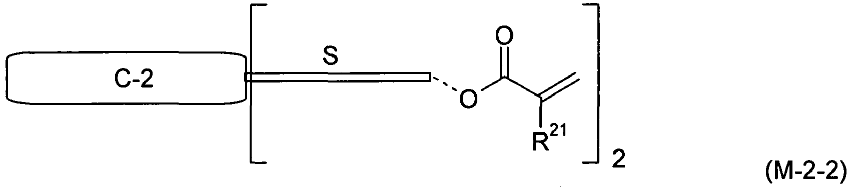 wobei die Gruppe C-2 eine mesogene Gruppe darstellt, welche eine niedrige Doppelbrechung Δn aufweist, die Gruppe S wie oben definiert ist und R²¹ wie oben definiert ist.

Besonders bevorzugte Monomerverbindungen gemäß Formel (M-1-1) sind im Folgenden abgebildet:

| | |
|---|---|
| 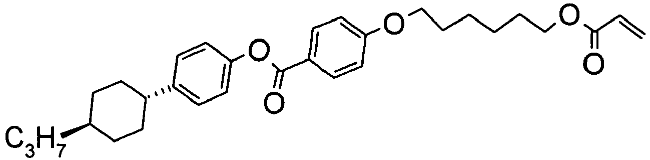 | |
| 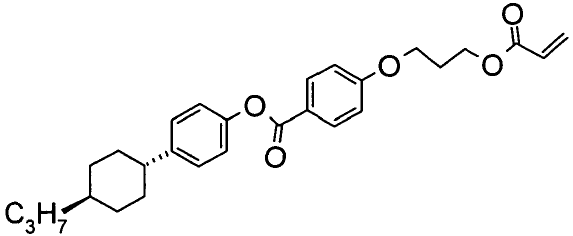 | |
| 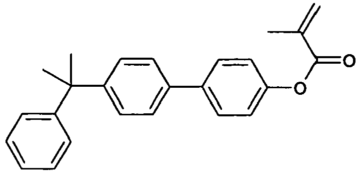 | |
| 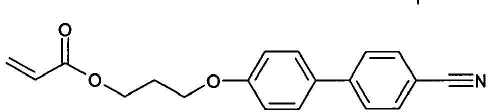 | |
| 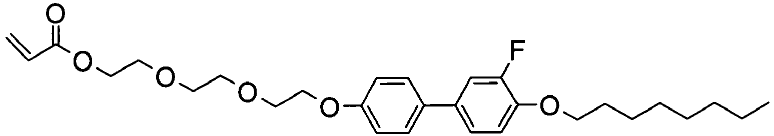 | |
| 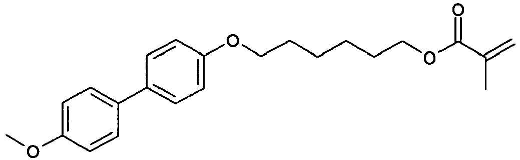 | |
| 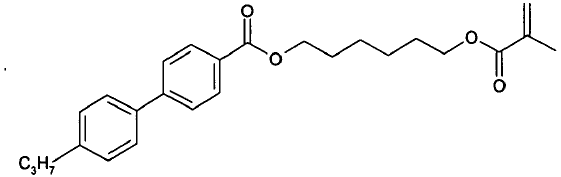 | |
| 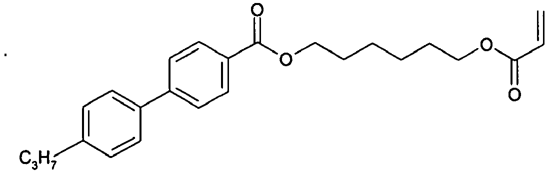 | |
| 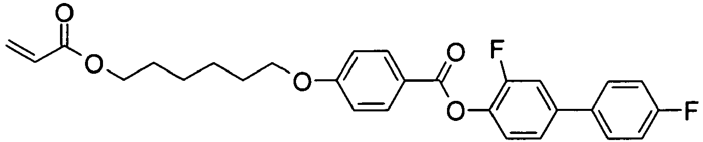 | |
| 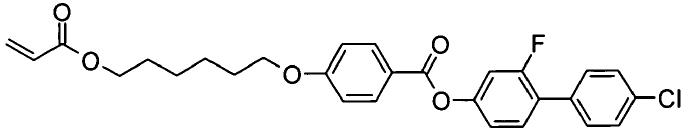 | |
| 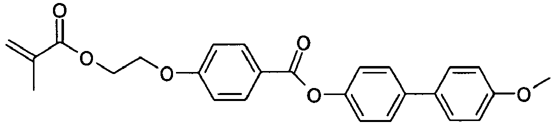 | |
| 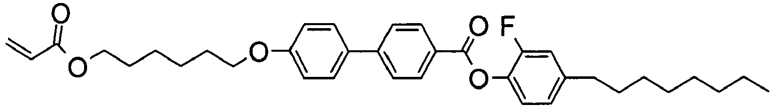 | |
| 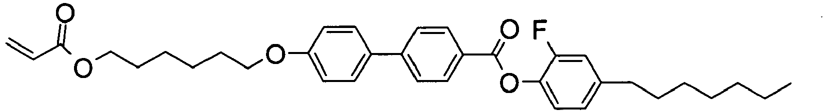 | |
| 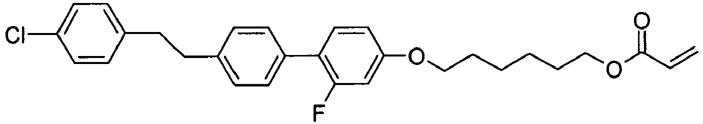 | |
| 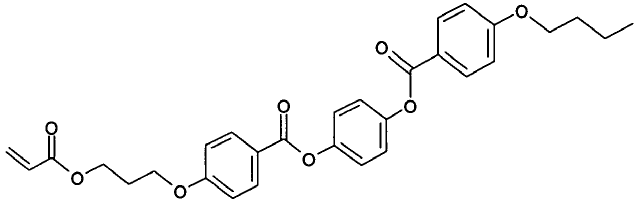 | |
| 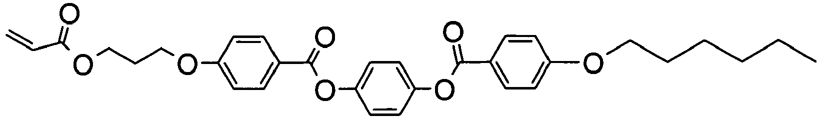 | |
| 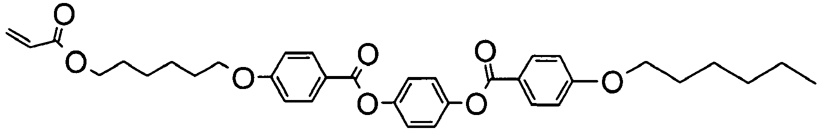 | |
| 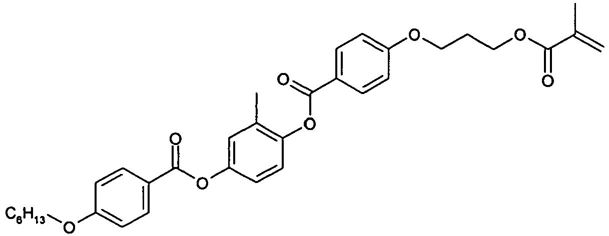 | |
| 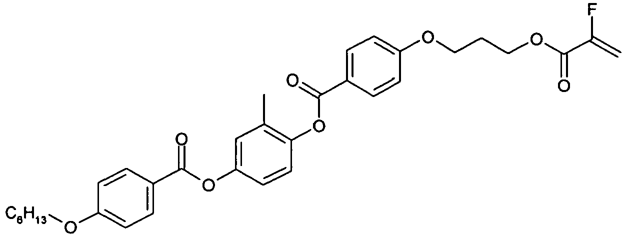 | |
| 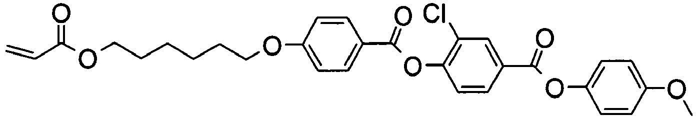 | |
| 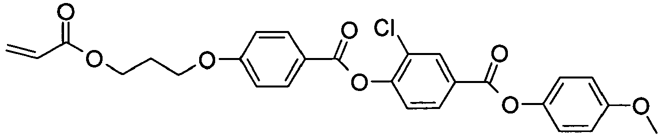 | |
| 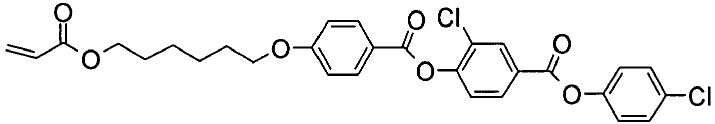 | |
| 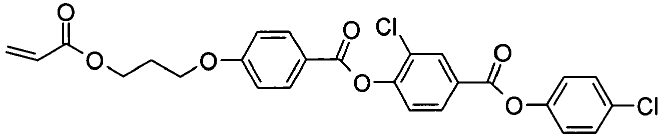 | |
| 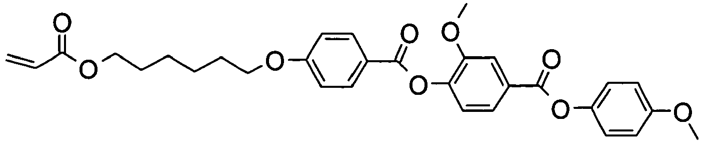 | |
| 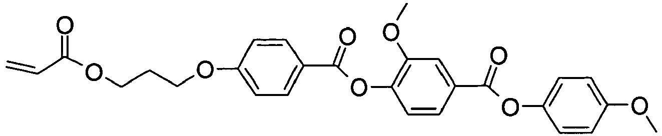 | |
| 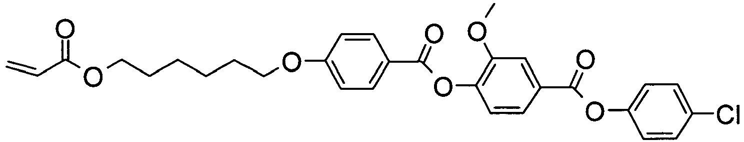 | |
| 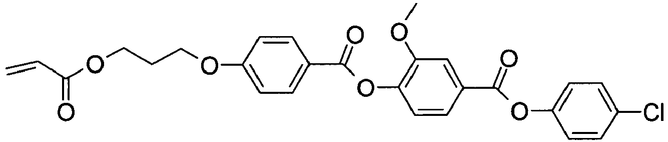 | |
| 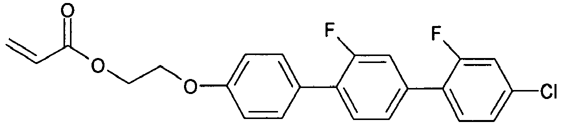 | |
| 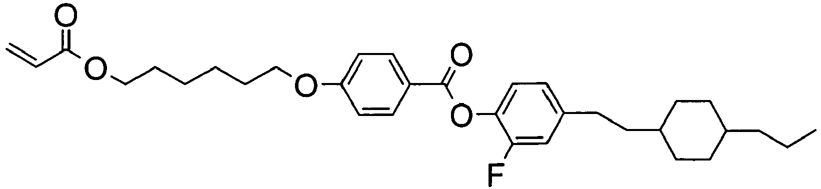 | |
| 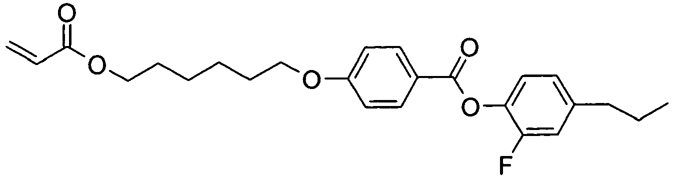 | |
| 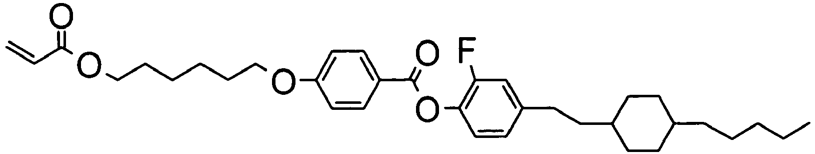 | |
| 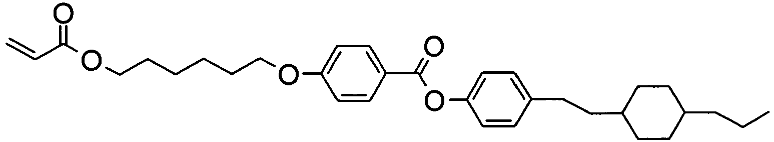 | |
| 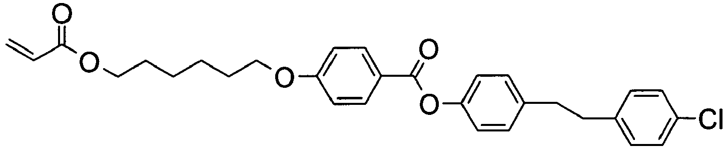 | |
| 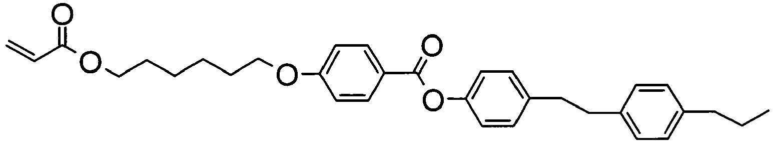 | |
| 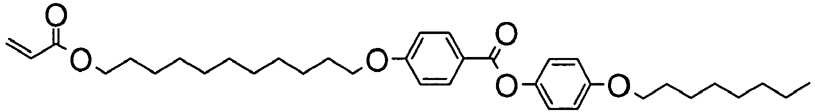 | |
| 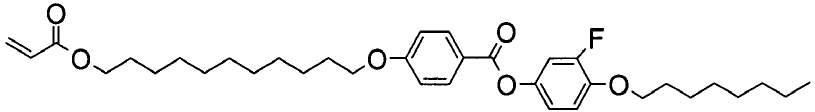 | |
| 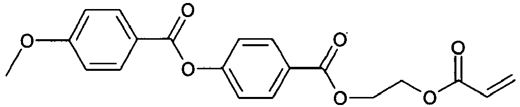 | |
| 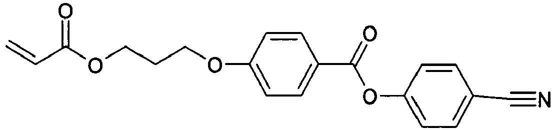 | |
| 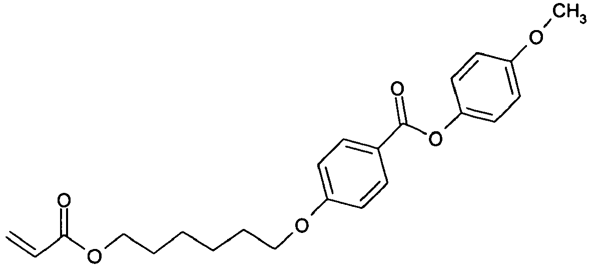 | |
| 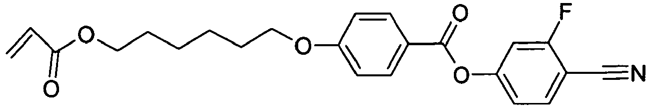 | |
| 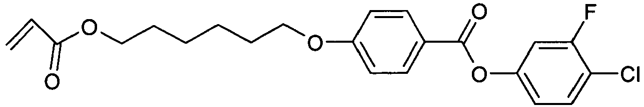 | |
| 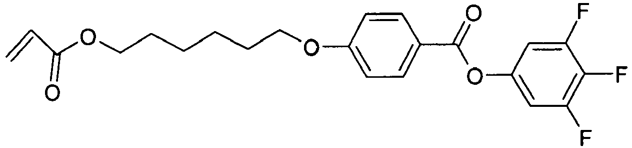 | |
| 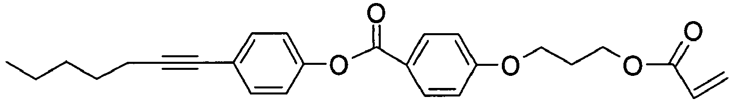 | |
| 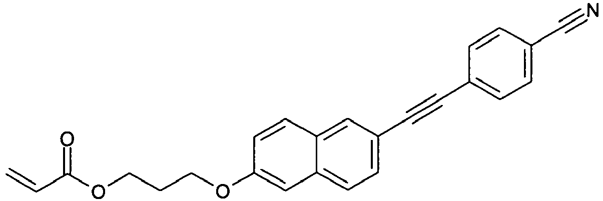 | |
| 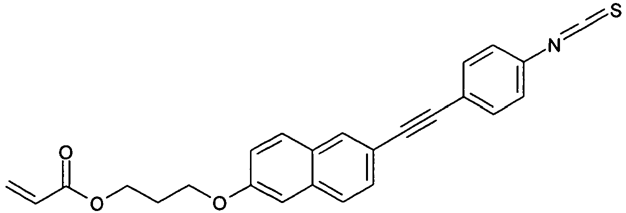 | |
| 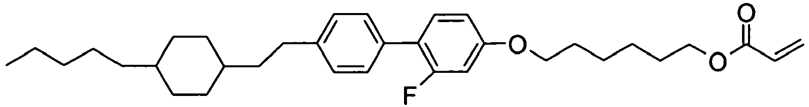 | |
| 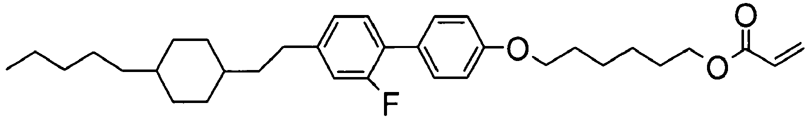 | |
| 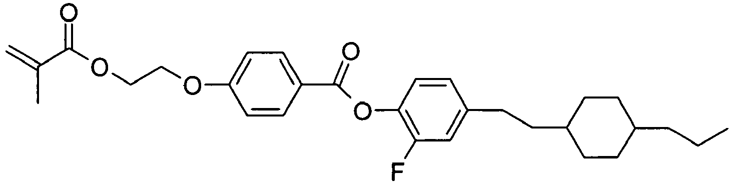 | |
| 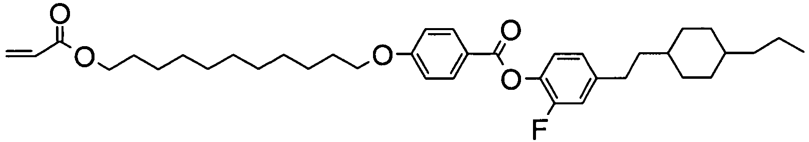 | |
| 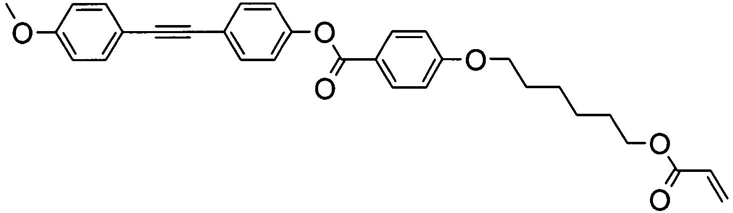 | |
| 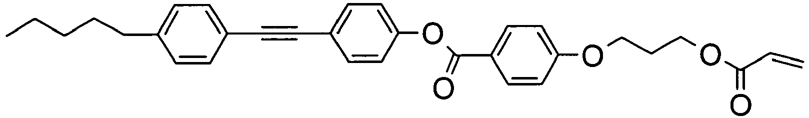 | |
| 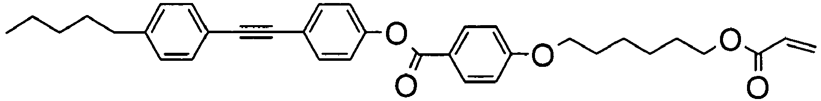 | |
| 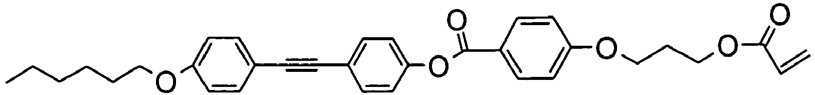 | |
| 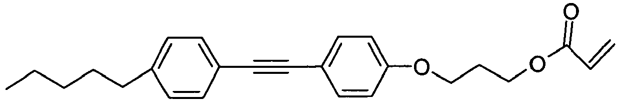 | |
| 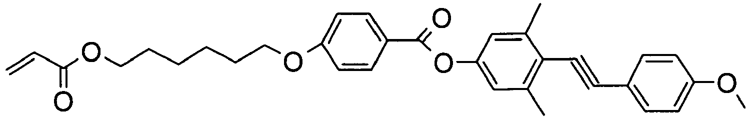 | |
| 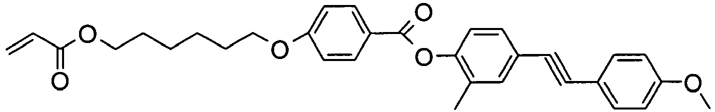 | |
| 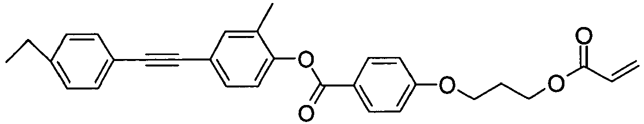 | |
| 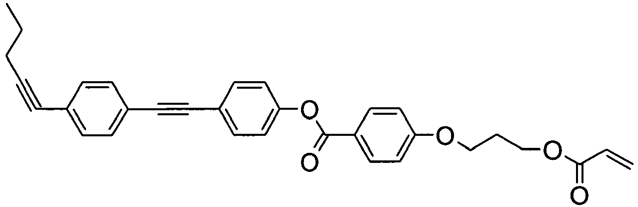 | |
| 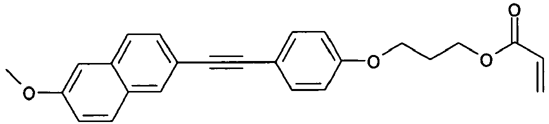 | |
| 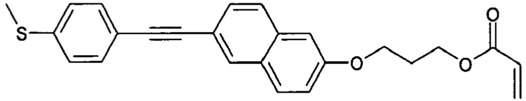 | |
| 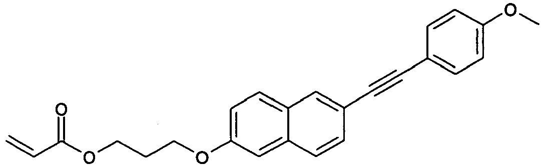 | |
| 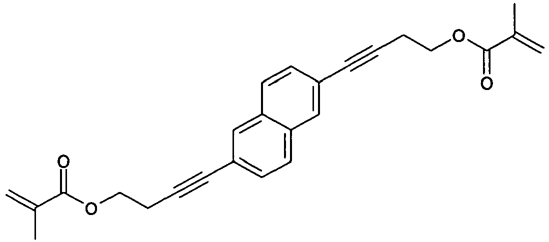 | |
| 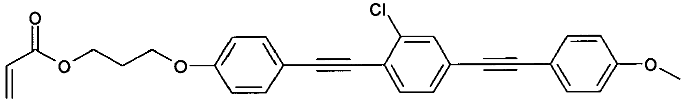 | |
| 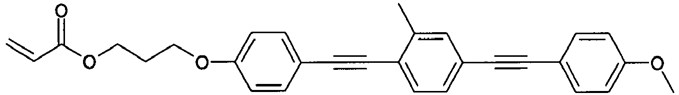 | |
| 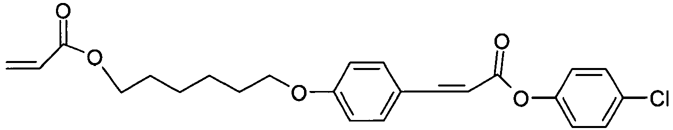 | |
| 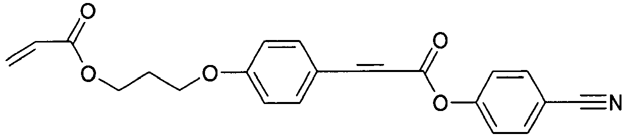 | |
| 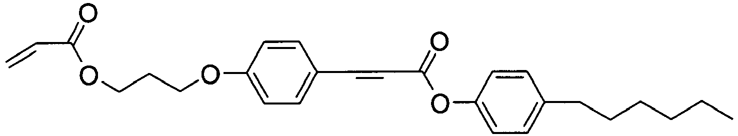 | |
| 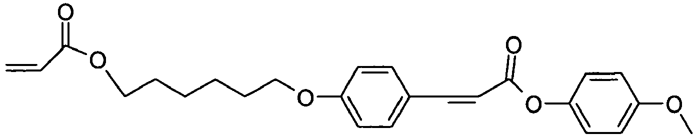 | |
| 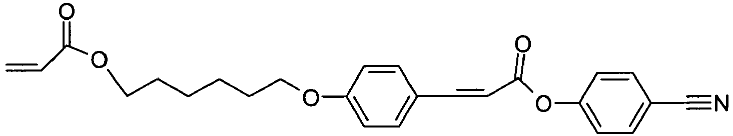 | |
| 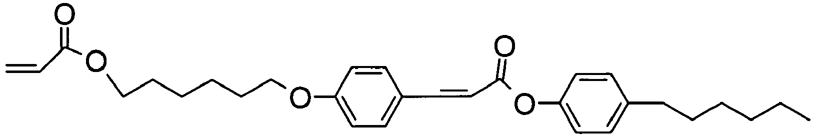 | |
| 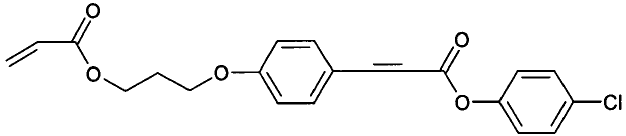 | |
| 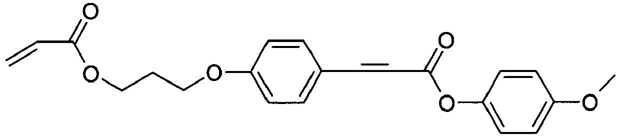 | |
| 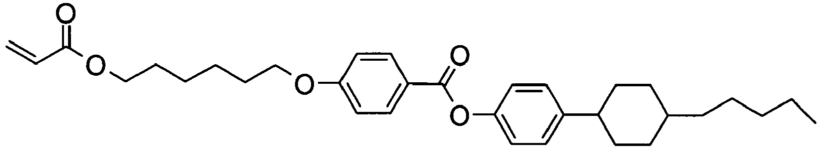 | |
| 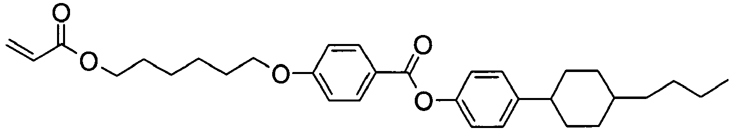 | |
| 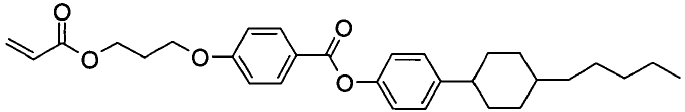 | |
| 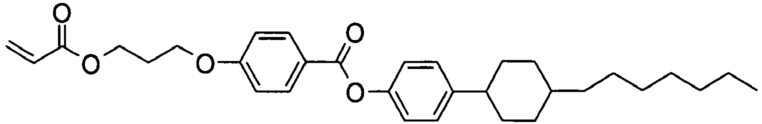 | |
| 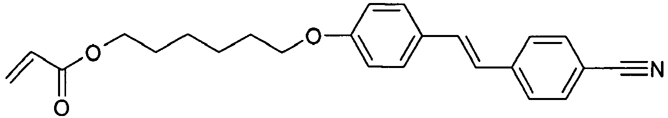 | |
| 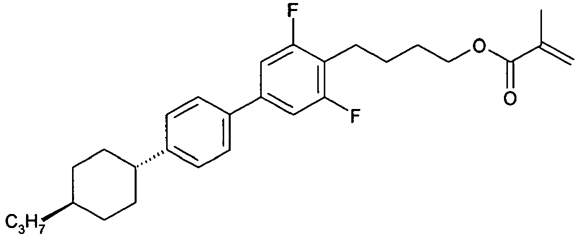 | |
| 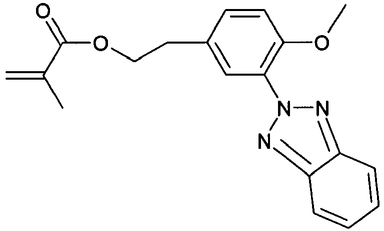 | |
| 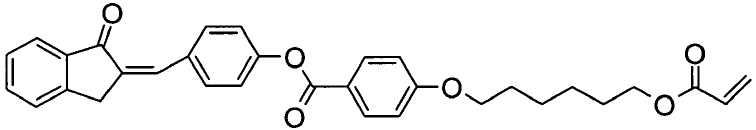 | |
| 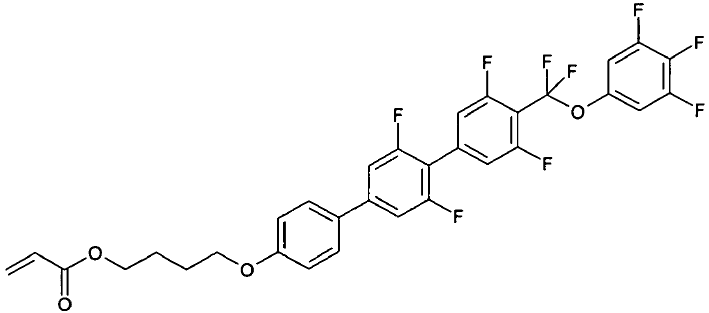 | |
| 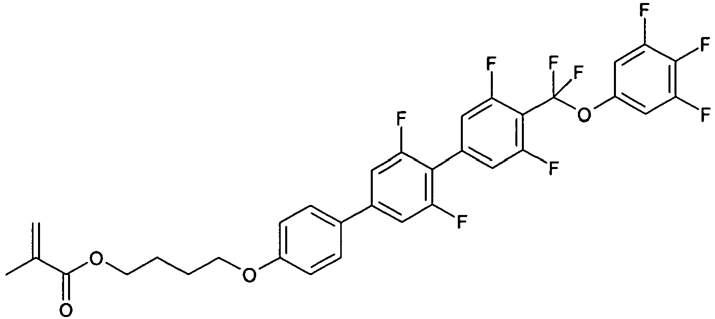 | |
| 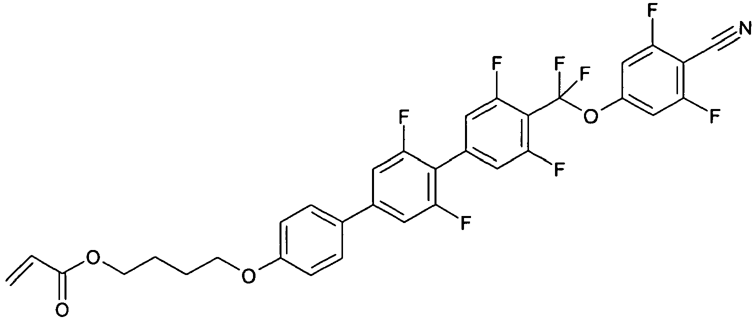 | |
| 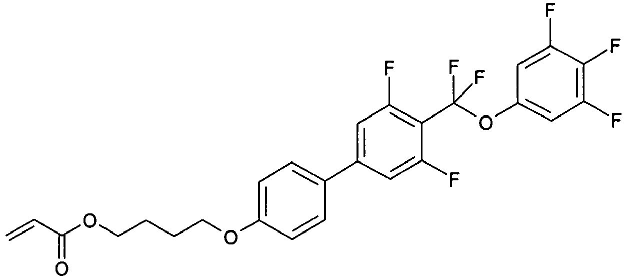 | |
| 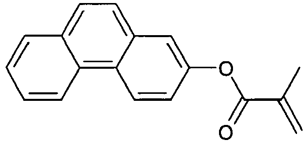 | |
| 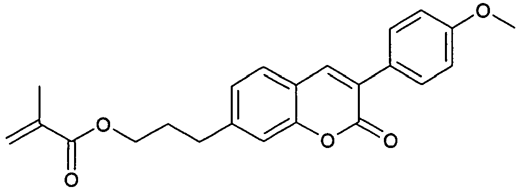 | |
| 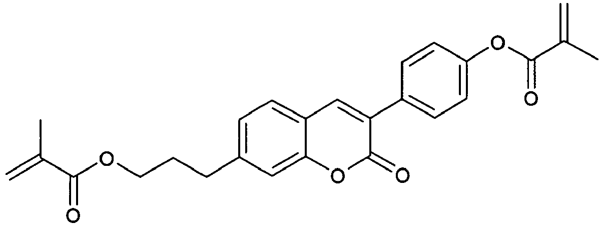 | |
| 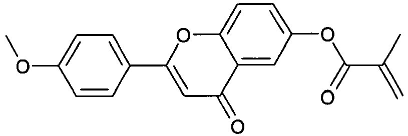 | |
| 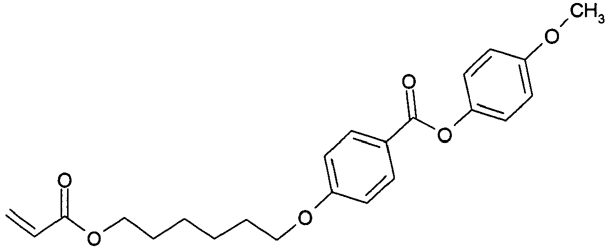 | |
| RM-M1 | |

Besonders bevorzugte Monomerverbindungen gemäß Formel (M-2-1) sind im Folgenden abgebildet:

| |
|---|
| 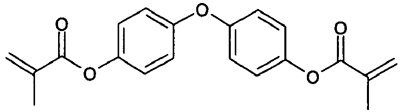 |
| 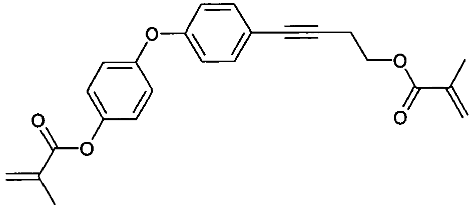 |
| 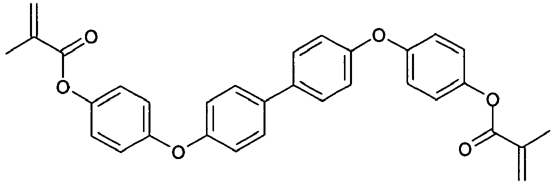 |
| 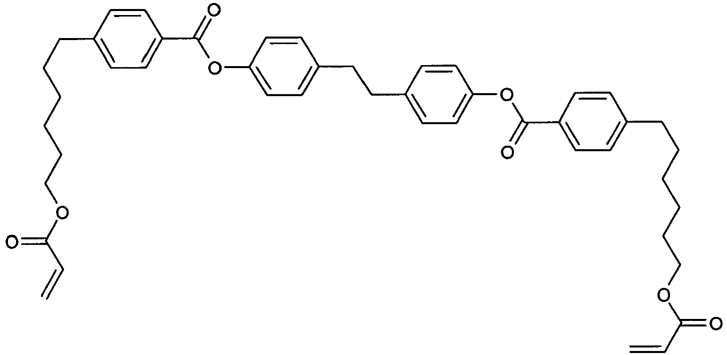 |
| 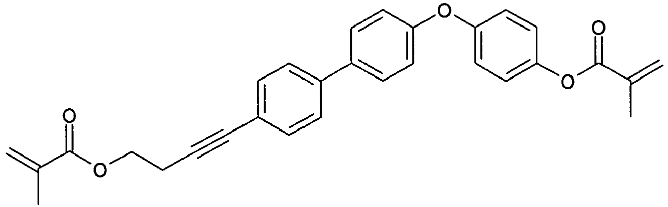 |
| 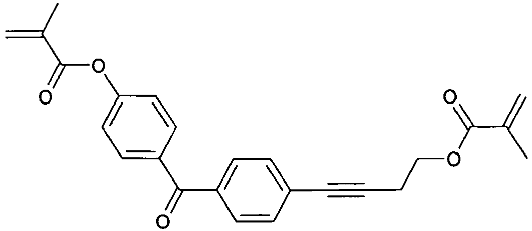 |
| 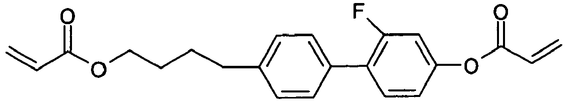 |
| 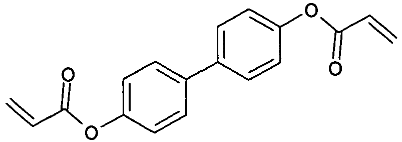 |
| 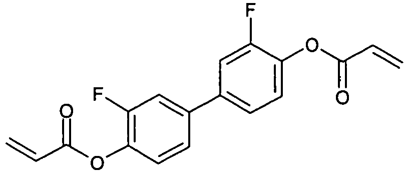 |
| 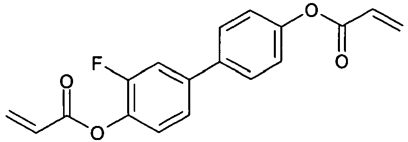 |
| 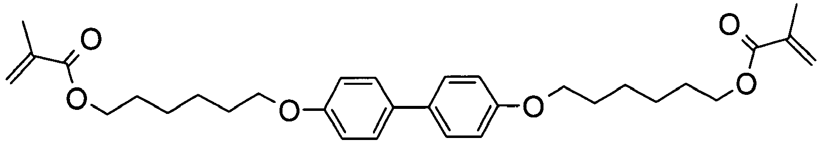 |
| 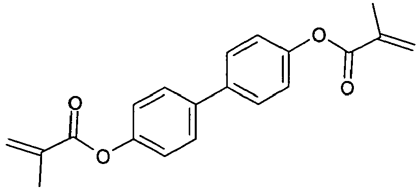 |
| 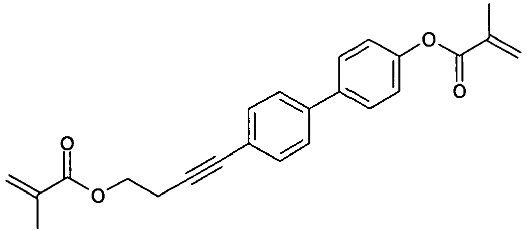 |
| 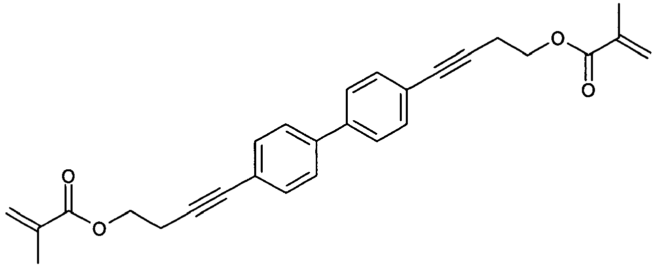 |
| 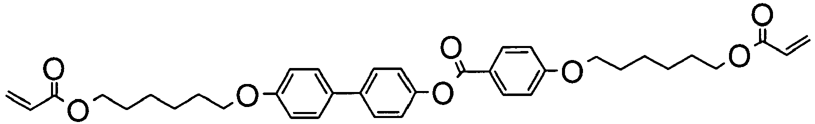 |
| 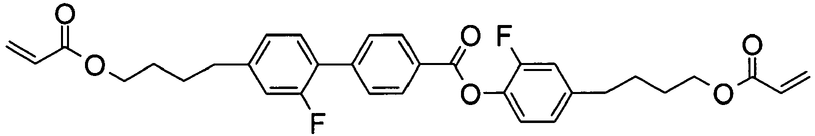 |
| 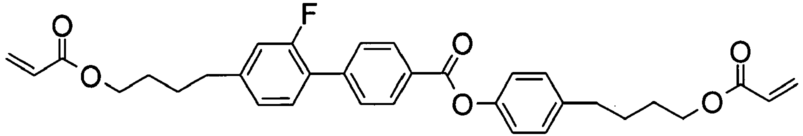 |
| 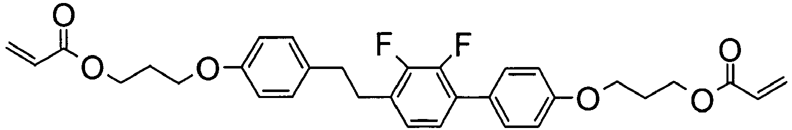 |
| 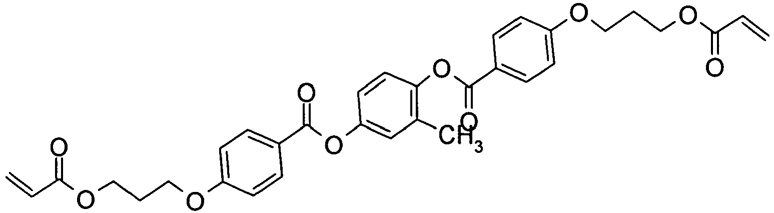 |
| 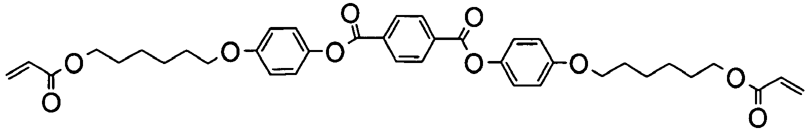 |
| 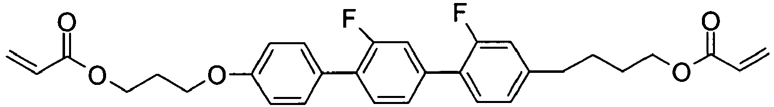 |
| 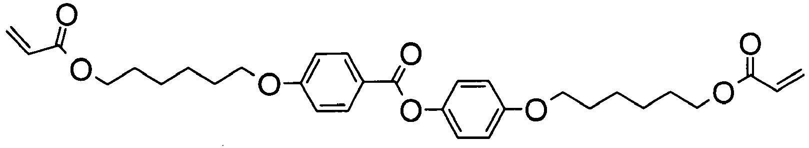 |
| 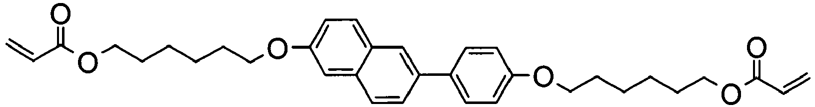 |
| 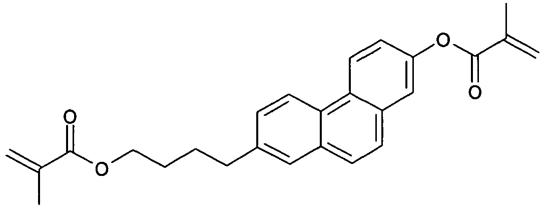 |
| 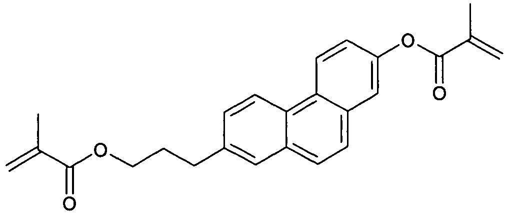 |
| 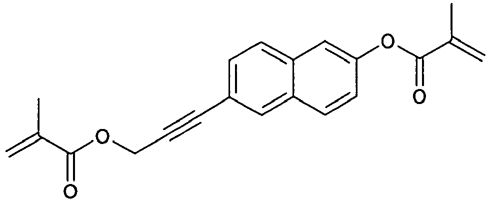 |
| 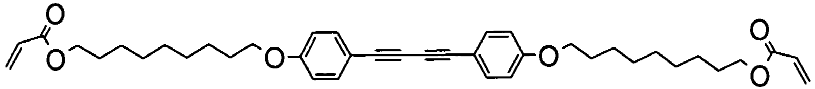 |
| 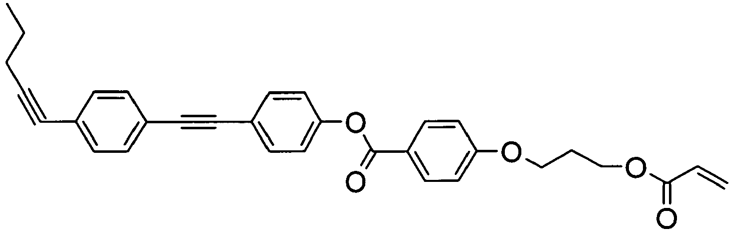 |
| 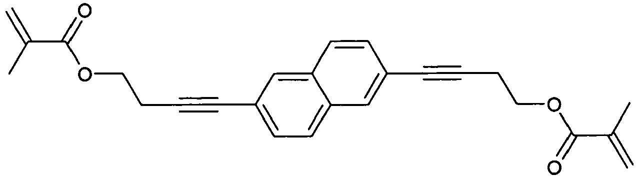 |
| 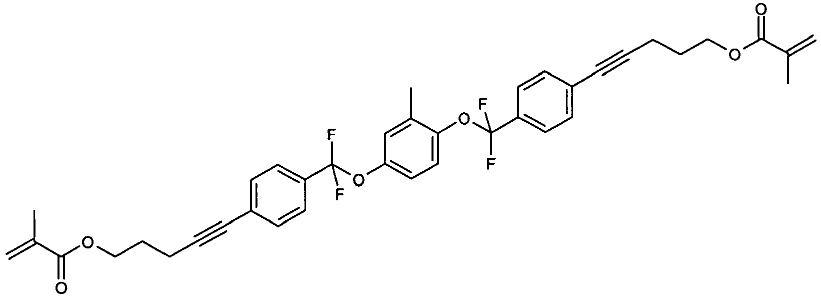 |
| 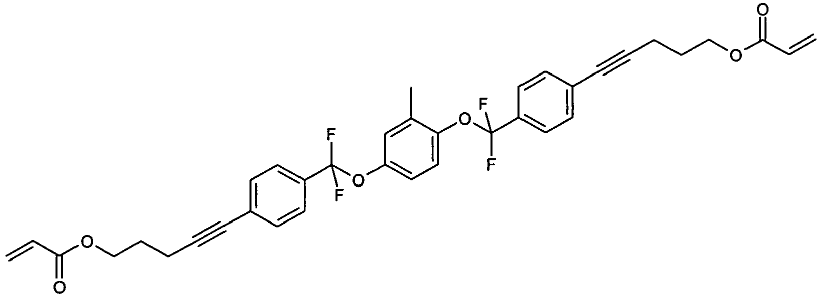 |
| 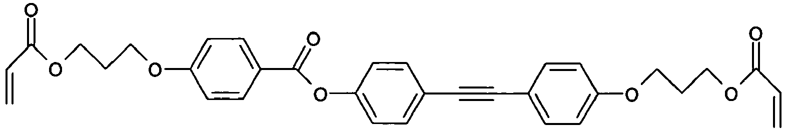 |
| 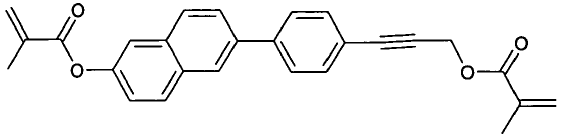 |
| 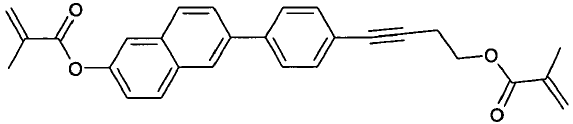 |
| 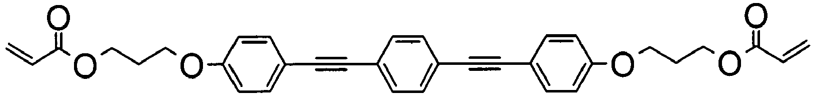 |
| 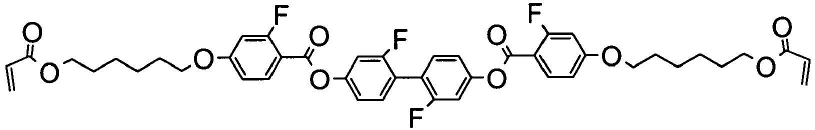 |
| 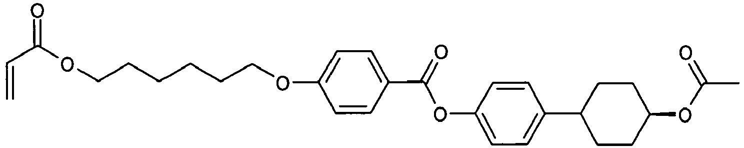 |
| 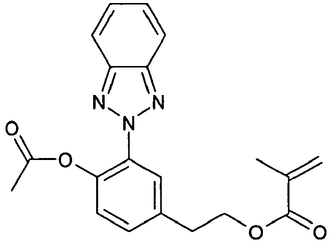 |
| 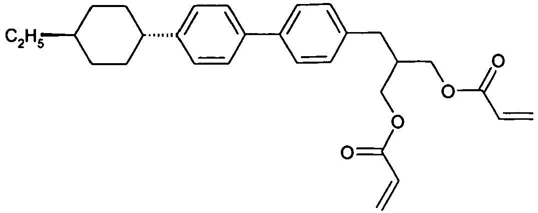 |
| 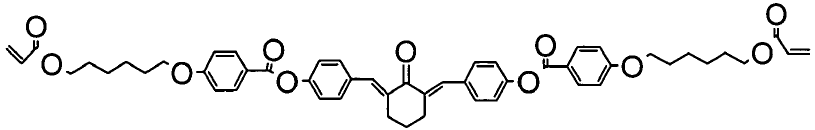 |
| 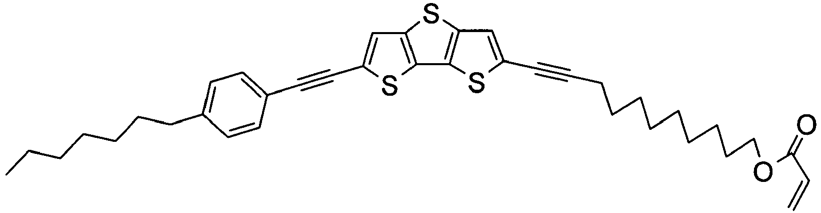 |
| 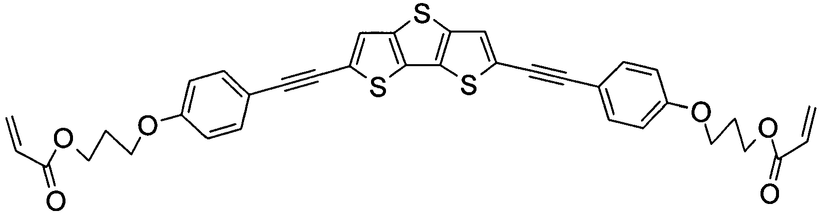 |
| 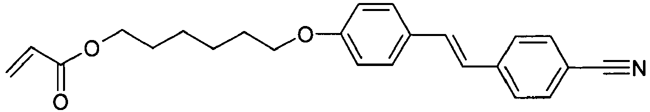 |
| 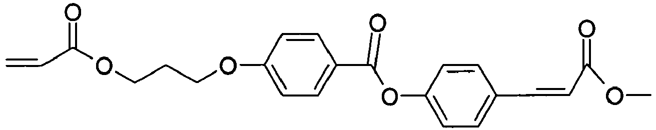 |
| 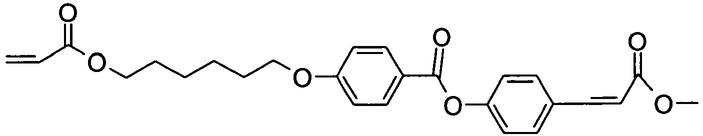 |
| 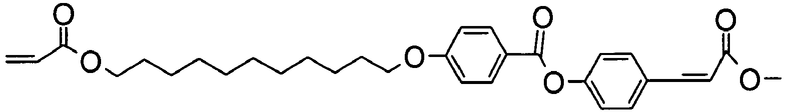 |
| 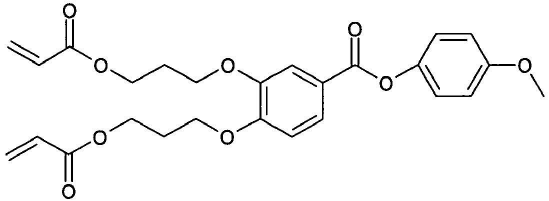 |
| 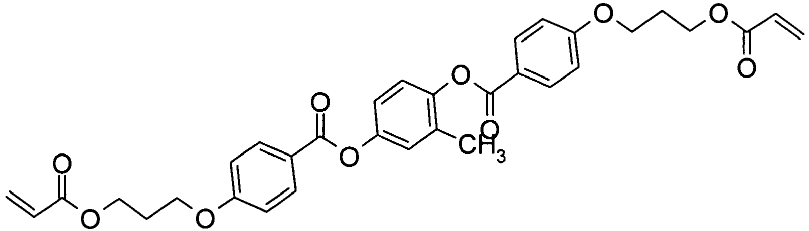 |
| RM-D1 |

Besonders bevorzugte Monomerverbindungen gemäß Formel (M-1-2) sind im Folgenden abgebildet:

| |
|---|
| 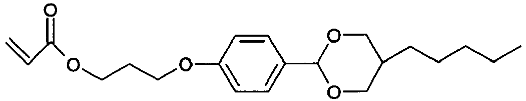 |
| 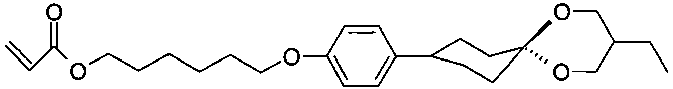 |
| 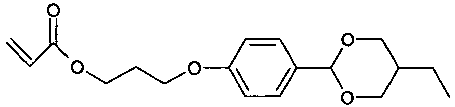 |
| 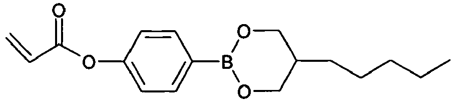 |
| 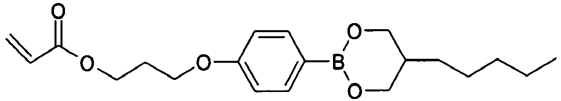 |
| 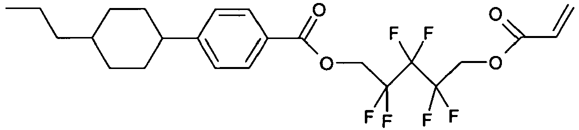 |
| 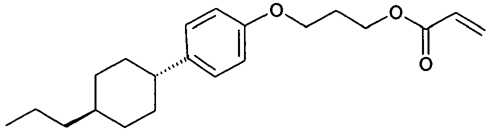 |
| 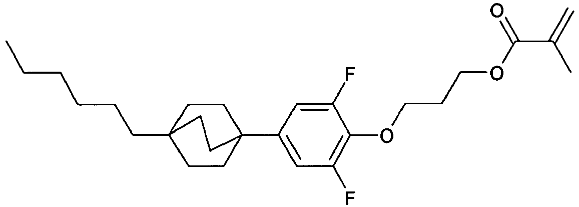 |
| 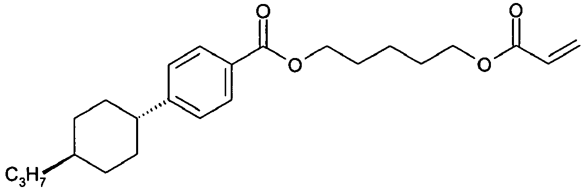 |
| 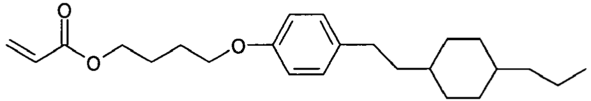 |
| 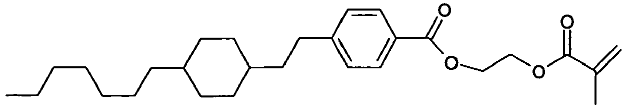 |
| 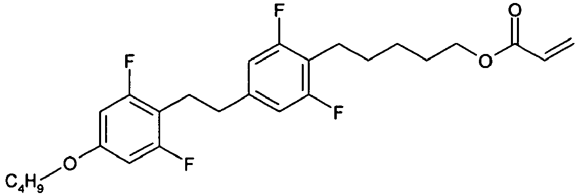 |
| 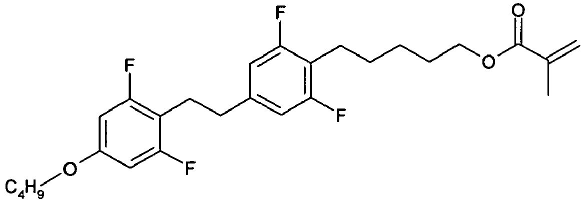 |
| 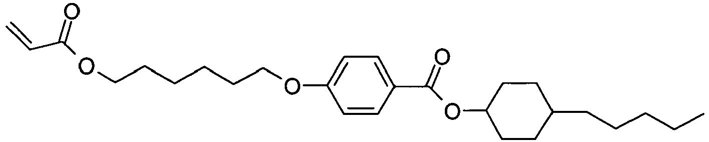 |
| 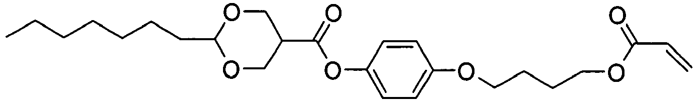 |
| 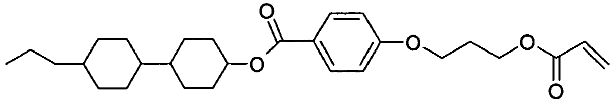 |
| 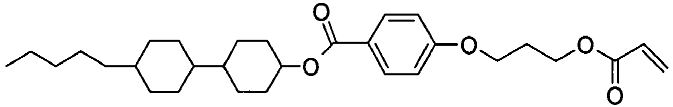 |
| 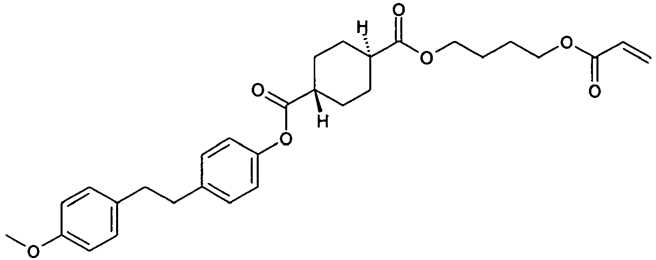 |
| 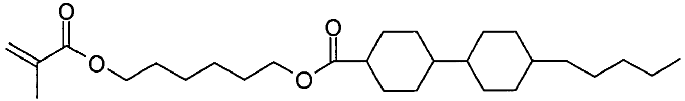 |
| 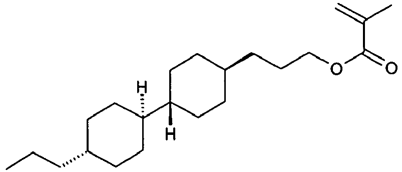 |
| 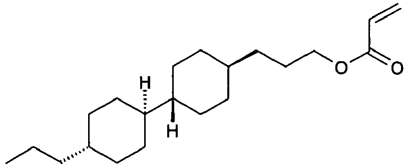 |
| 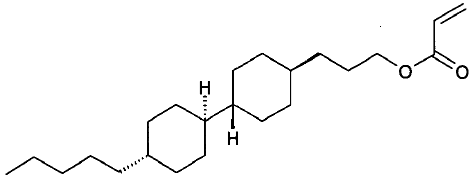 |
| 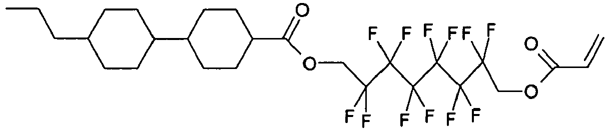 |
| 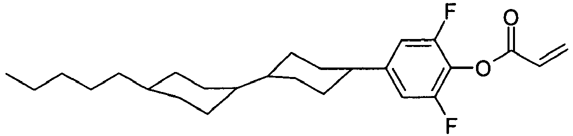 |
| 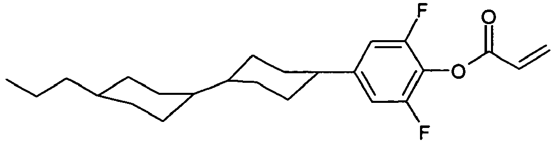 |
| 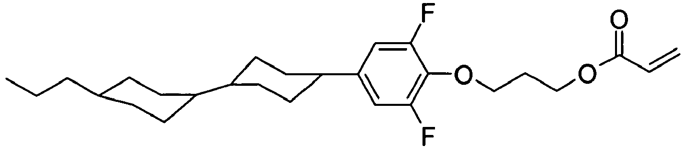 |
| 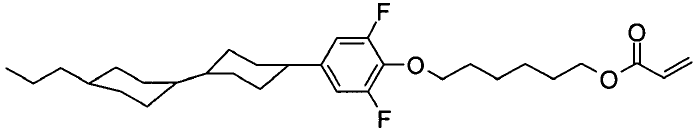 |
| 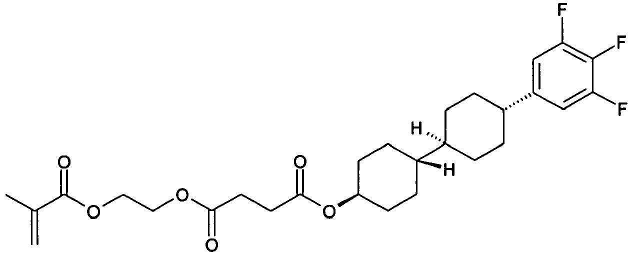 |
| 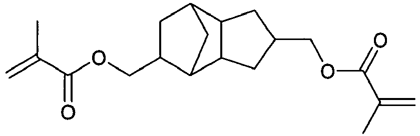 |
| 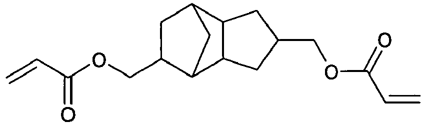 |
| 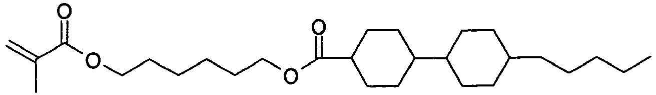 |
| RM-M2 |

Besonders bevorzugte Monomerverbindungen gemäß Formel (M-2-2) sind im Folgenden abgebildet:

| |
|---|
| 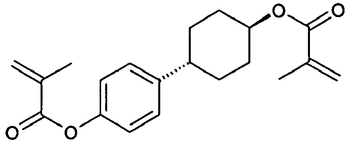 |
| 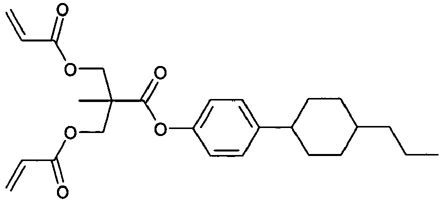 |
| 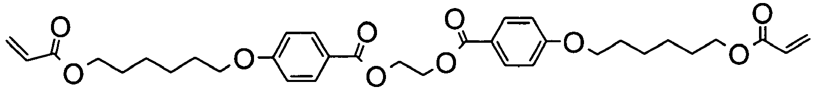 |
| 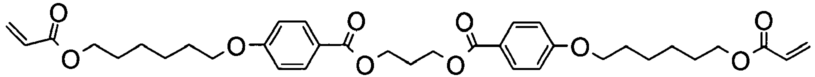 |
| 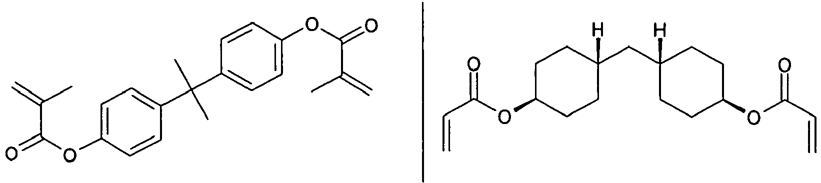 |
| 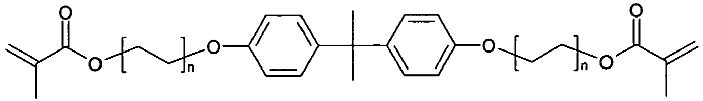 |
| 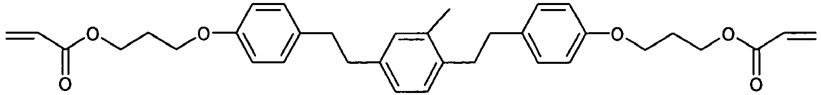 |
| 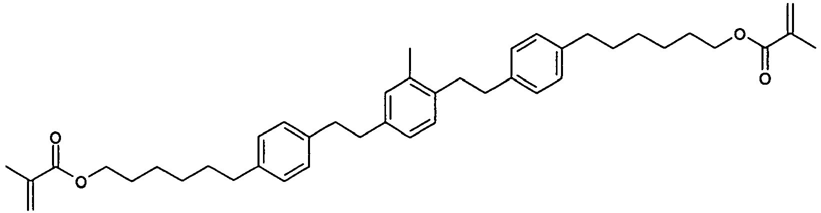 |
| 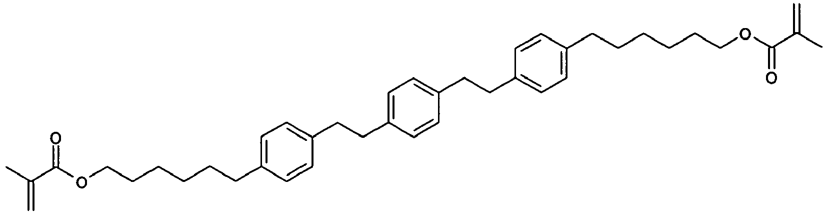 |
| 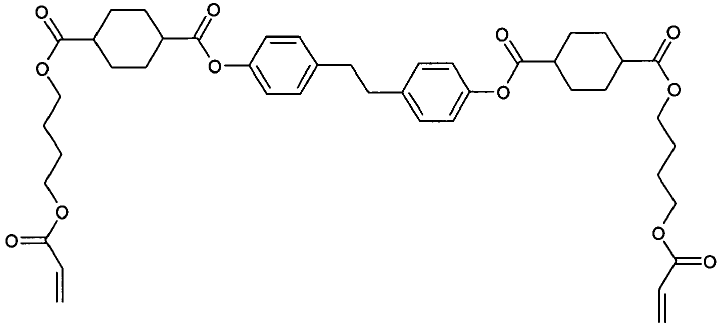 |
| 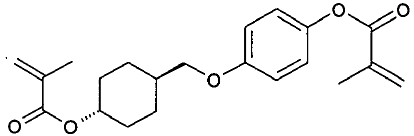 |
| 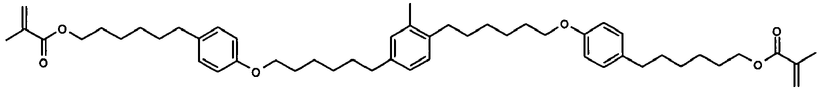 |
| 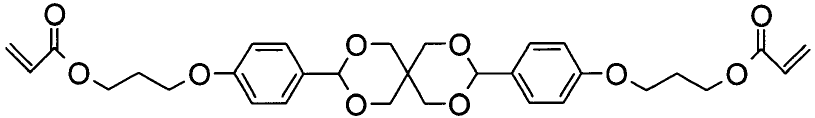 |
| 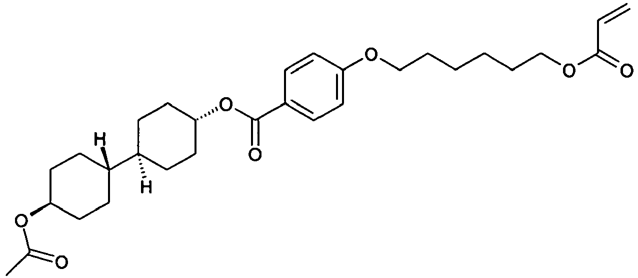 |
| 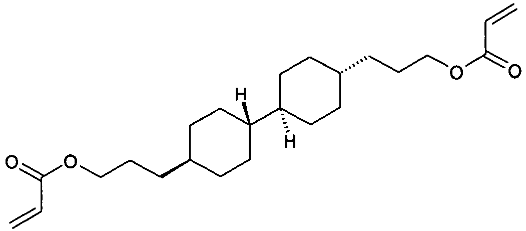 |
| 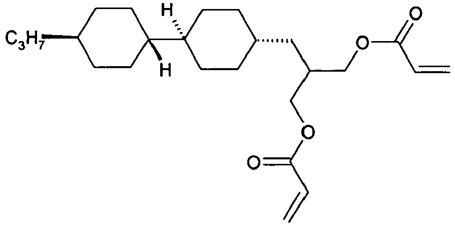 |
| 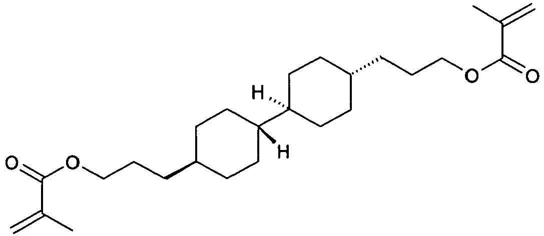 |
| 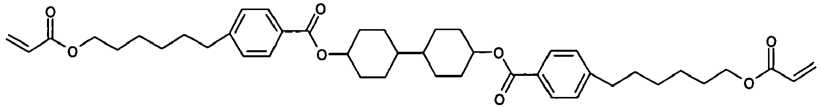 |
| 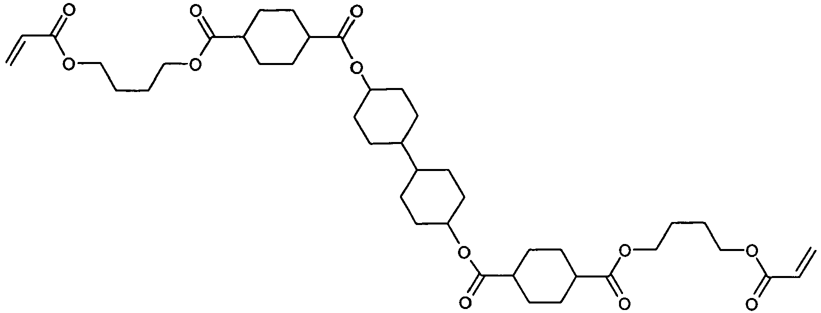 |
| 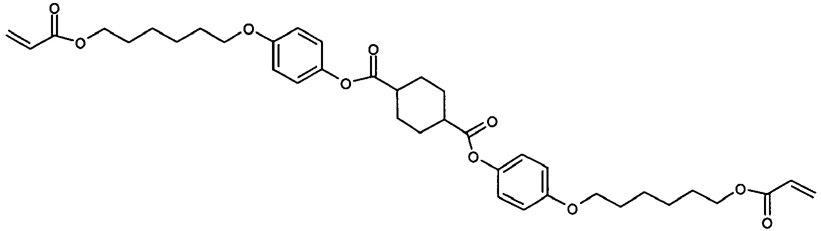 |
| 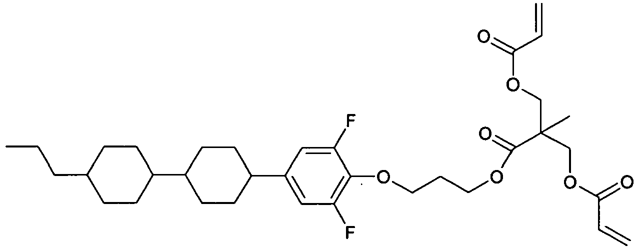 |
| 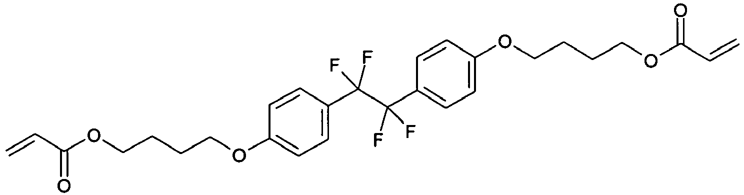 |
| 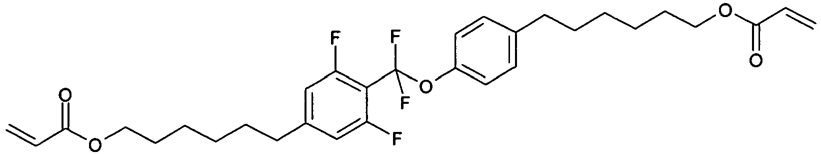 |
| 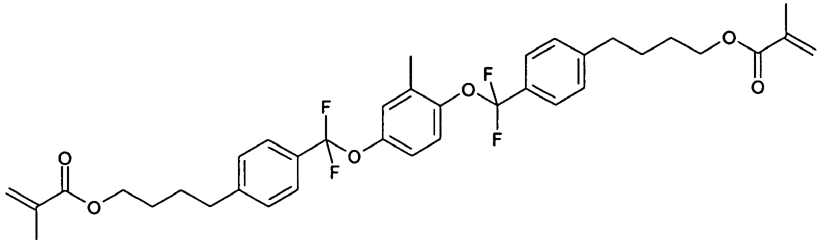 |
| 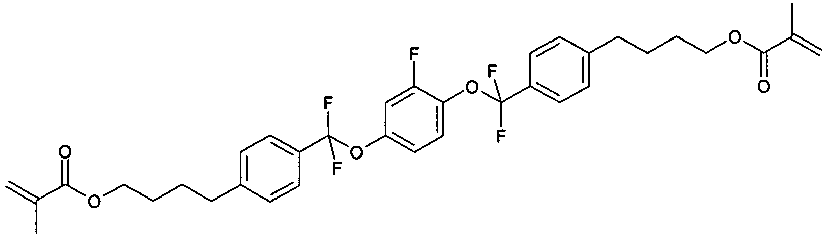 |
| 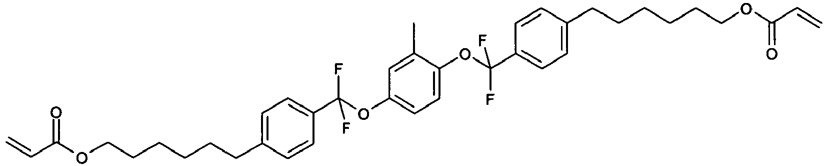 |
| 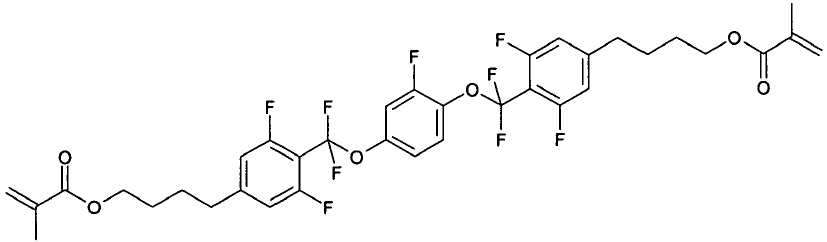 |
| 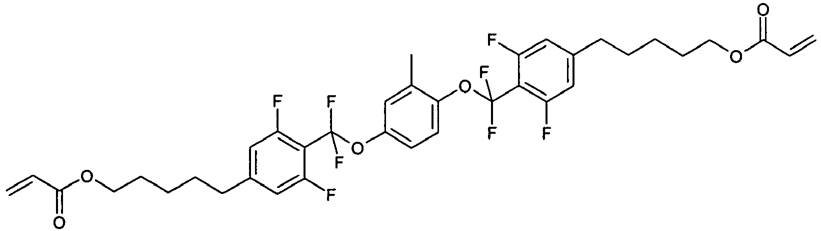 |
| 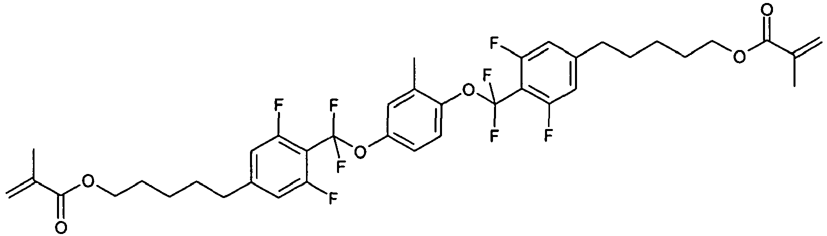 |
| 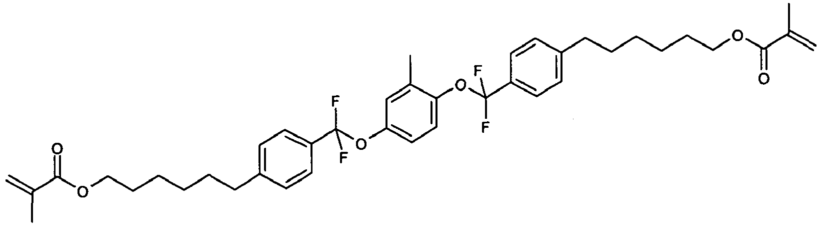 |
| RM-D2 |

Es kann auch bevorzugt sein, neben den oben genannten Monomeren der Formeln (M-1) oder (M-2) auch Monomere einzusetzen, welche keine mesogene Gruppe aufweisen. Solche Monomere können eine oder mehrere reaktive Gruppen, bevorzugt Acrylatgruppen, Vinylethergruppen oder Epoxidgruppen, aufweisen. Besonders bevorzugt weisen sie eine, zwei, drei oder vier Acrylatgruppen auf. Bevorzugte Monomerverbindungen dieses Typs sind in der folgenden Tabelle abgebildet:

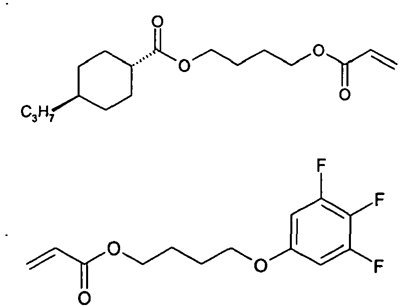

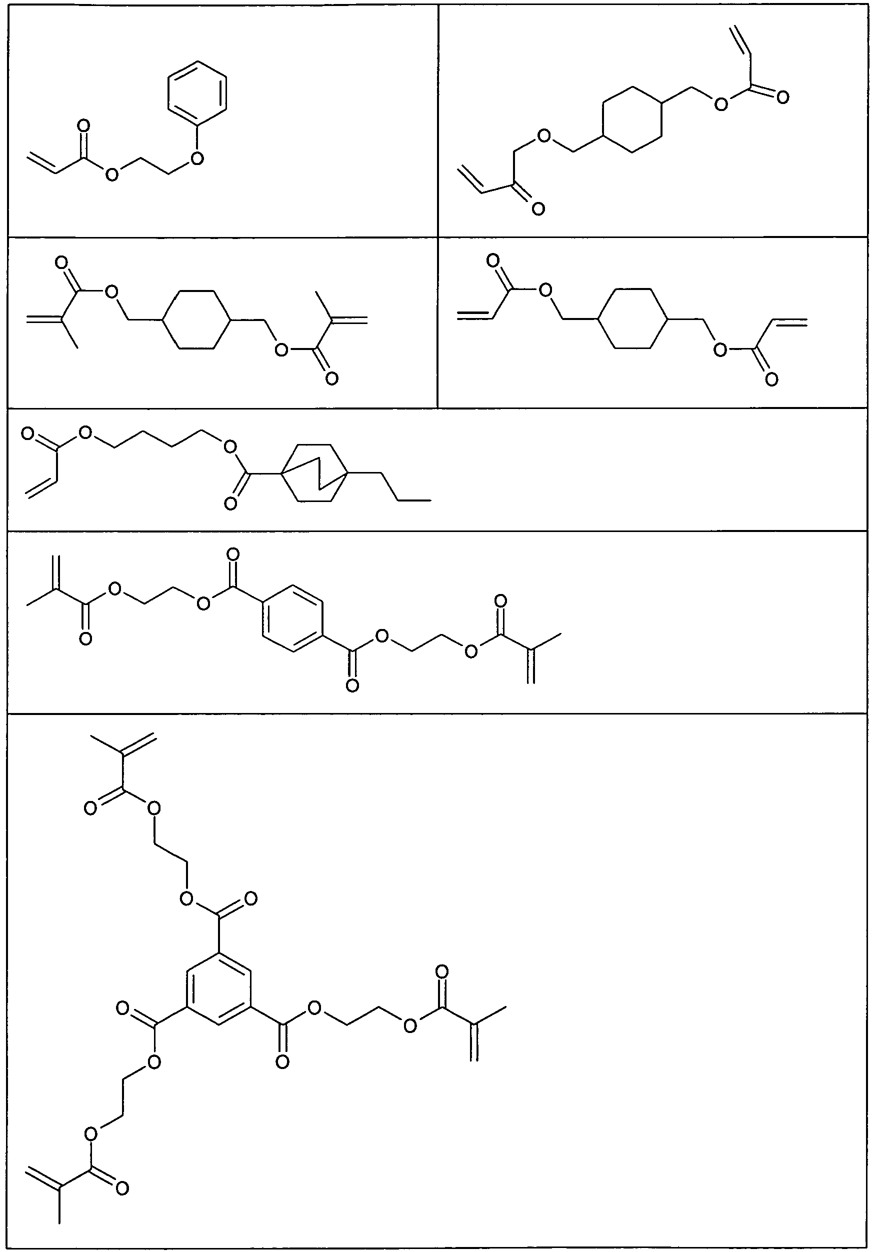

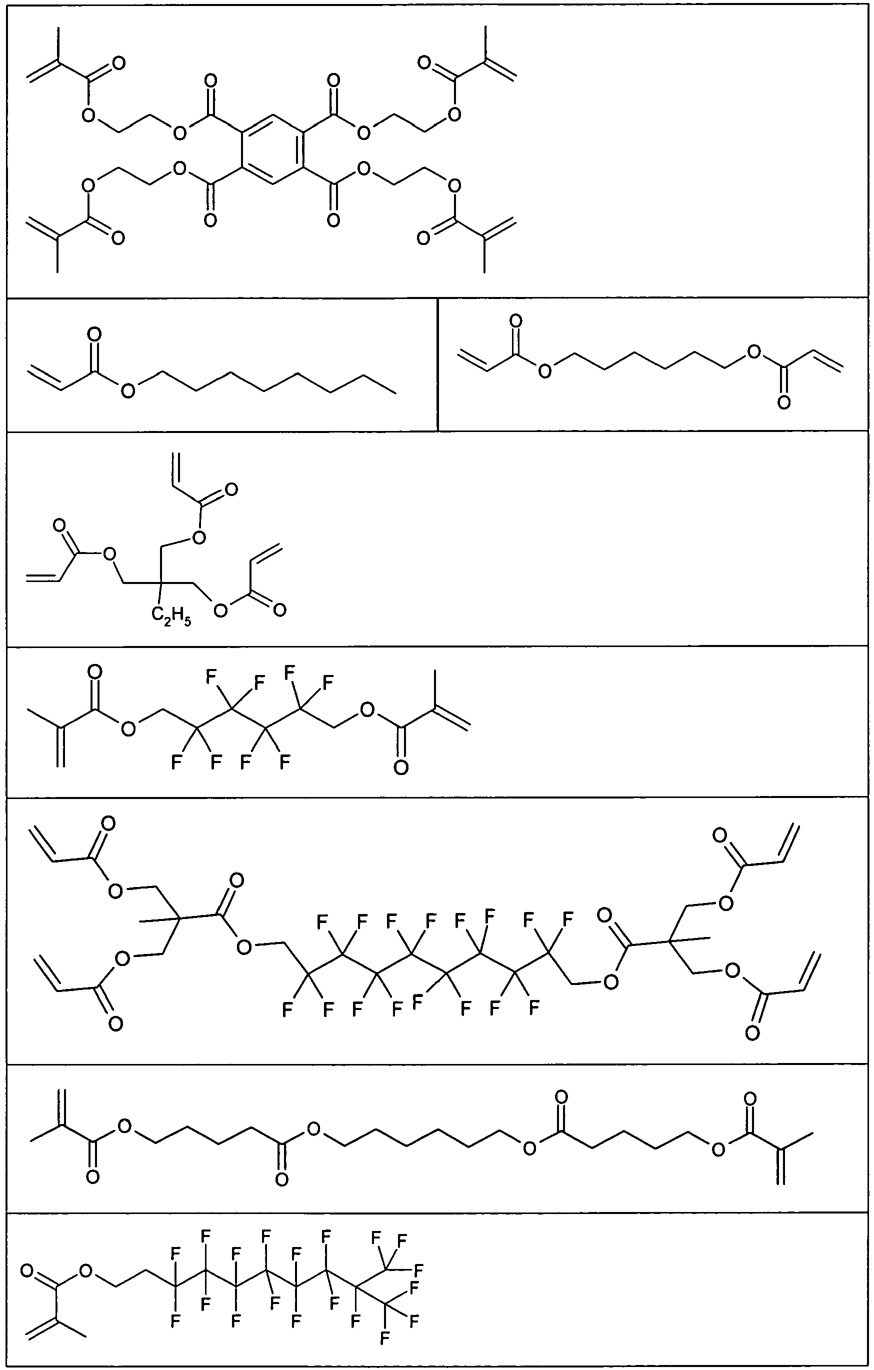

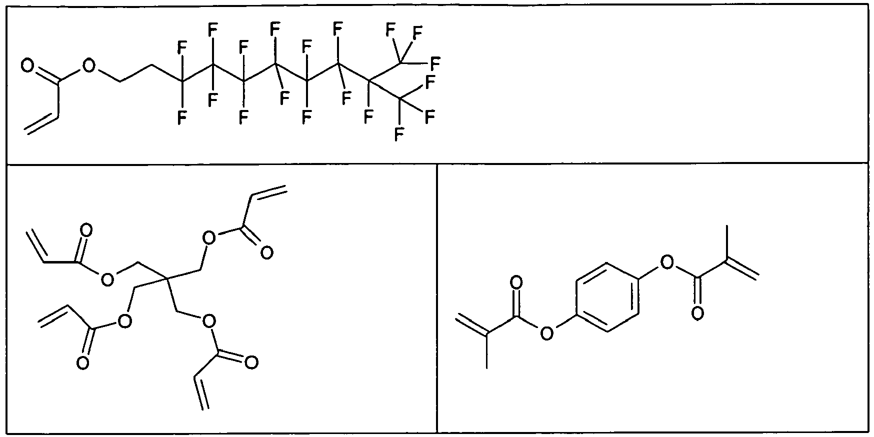

Zur Herstellung von erfindungsgemäßen Schaltelementen des oben genannten Typs A werden bevorzugt zu einem überwiegendem Anteil monofunktionelle Monomere, besonders bevorzugt Monomere mit genau einer Acrylatgruppe, eingesetzt. Bevorzugt beträgt der Anteil der genannten bevorzugten Monomere mehr als 60 % der Gesamtmenge der eingesetzten Monomere, besonders bevorzugt mehr als 80 % der Gesamtmenge der Monomere und ganz besonders bevorzugt mehr als 95 % der Gesamtmenge der Monomere.

Ganz besonders bevorzugt werden zu einem überwiegenden Anteil Monomere der oben aufgeführten Formel (M-1-2) eingesetzt, noch stärker bevorzugt werden zu einem überwiegenden Anteil Monomere der Formel (M-1-2) gemäß der obenstehenden Tabelle eingesetzt.

Zur Herstellung von erfindungsgemäßen Schaltelementen des oben genannten Typs B werden bevorzugt zu einem überwiegendem Anteil multifunktionelle Monomere, besonders bevorzugt Monomere mit genau zwei Acrylatgruppen, eingesetzt. Bevorzugt beträgt der Anteil der genannten bevorzugten Monomere mehr als 40 % der Gesamtmenge der eingesetzten Monomere, besonders bevorzugt mehr als 60 % der Gesamtmenge der Monomere und ganz besonders bevorzugt mehr als 80 % der Gesamtmenge der eingesetzten Monomeren.

Ganz besonders bevorzugt werden zu einem überwiegenden Anteil Monomere der oben aufgeführten Formel (M-2-1) oder (M-2-2) eingesetzt, noch stärker bevorzugt werden zu einem überwiegenden Anteil Monomere der Formel (M-2-1) gemäß der obenstehenden Tabelle eingesetzt.

Die Herstellung der Mischung der Schaltschicht, enthaltend mindestens eine flüssigkristalline Verbindung sowie mindestens ein Polymer, kann auf unterschiedliche Art und Weise erfolgen.

Bevorzugt ist eine Ausführungsform, bei der das Polymer durch Polymerisationsreaktion mindestens einer Monomerverbindung in Anwesenheit der flüssigkristallinen Verbindung hergestellt wird (in situ-Verfahren).

Unter Polymerisation in Anwesenheit der flüssigkristallinen Verbindung wird dabei insbesondere verstanden, dass eine Mischung enthaltend mindestens eine flüssigkristalline Verbindung sowie mindestens eine Monomerverbindung hergestellt wird, und dass anschließend die Polymerisationsreaktion durchgeführt wird, in der die mindestens eine Monomerverbindung zu einem Polymer reagiert. Das genannte Polymer liegt in diesem Fall nach Abschluss der Polymerisationsreaktion zusammen mit der mindestens einen flüssigkristallinen Verbindung in der Mischung vor. Die erhaltene Mischung kann direkt zur Herstellung der Schaltschicht verwendet werden oder weiteren Verarbeitungsschritten unterworfen werden.

Weiterer Gegenstand der Erfindung ist daher die Verwendung einer Mischung enthaltend mindestens eine flüssigkristalline Verbindung sowie mindestens eine Monomerverbindung zur Herstellung des erfindungsgemäßen Schaltelements.

Bevorzugt ist die Verwendung der Mischung enthaltend mindestens eine flüssigkristalline Verbindung sowie mindestens eine Monomerverbindung zur Herstellung der erfindungsgemäßen Schaltelements, wobei die Mischung dadurch gekennzeichnet ist, dass sie mindestens eine Monomerverbindung aufweist, welche ein Monoacrylat darstellt, und mindestens eine Monomerverbindung aufweist, welche ein Diacrylat darstellt.

Die Monomerverbindung, welche ein Monoacrylat darstellt, ist dabei bevorzugt ausgewählt aus Verbindungen der oben gezeigten Formel (M-1), besonders bevorzugt aus Verbindungen der oben gezeigten Formeln (M-1-1) und (M-1-2). Ganz besonders bevorzugt sind die oben gezeigten expliziten Verbindungen gemäß den Formeln (M-1-1) und (M-1-2).

Die Monomerverbindung, welche ein Diacrylat darstellt, ist dabei bevorzugt ausgewählt aus Verbindungen der oben gezeigten Formel (M-2), besonders bevorzugt aus Verbindungen der oben gezeigten Formeln (M-2-1) und (M-2-2). Ganz besonders bevorzugt sind die oben gezeigten expliziten Verbindungen gemäß den Formeln (M-2-1) und (M-2-2).

Die Polymerisationsreaktion der mindestens einen Monomerverbindung, in der das mindestens eine Polymer in Mischung mit der mindestens einen flüssigkristallinen Verbindung erhalten wird, stellt bevorzugt eine UV-Licht-induzierte Polyaddition dar.

Bevorzugt ist in der oben genannten Mischung enthaltend mindestens eine flüssigkristalline Verbindung sowie mindestens eine Monomerverbindung zusätzlich mindestens eine Photoinitiator-Verbindung enthalten. Die mindestens eine Photoinitiator-Verbindung ist bevorzugt in einer Konzentration von 0.01 % bis 2 % und besonders bevorzugt in einer Konzentration von 0.1 % bis 1 % in der Mischung vorhanden.

Bevorzugte Photoinitiator-Verbindungen gemäß der vorliegenden Erfindung sind in der folgenden Tabelle abgebildet:

| | |
|---|---|
| 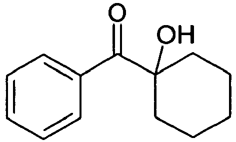 | 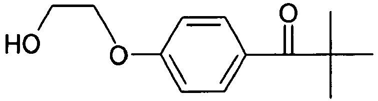 |
| 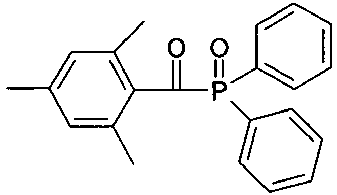 | 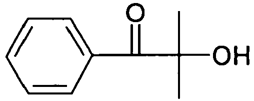 |
| | |
| 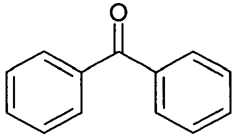 | 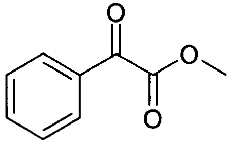 |
| | |
| 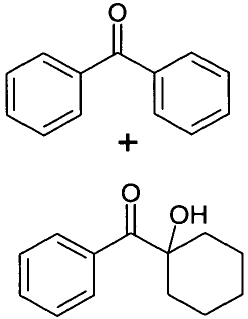 | 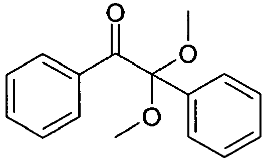 |
| | Irgacure 651 |
| 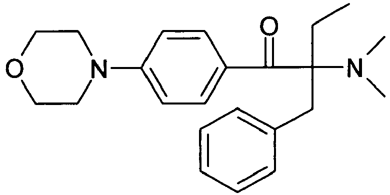 | 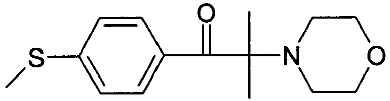 |
| | Irgacure 907 |
| 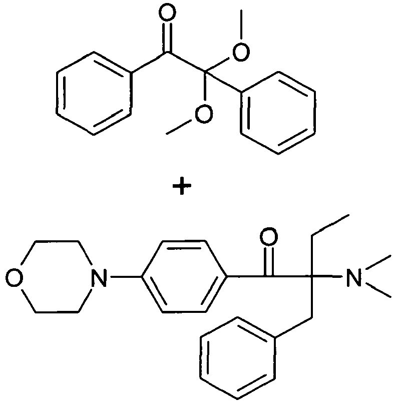 | 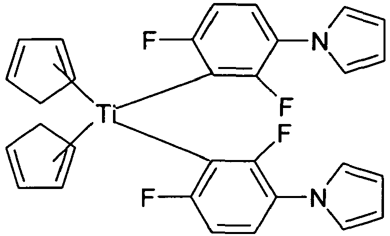 |
| | |
| 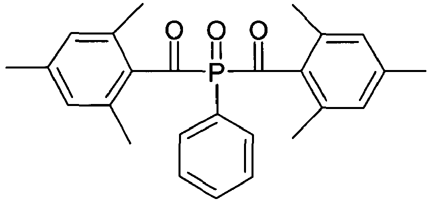 | 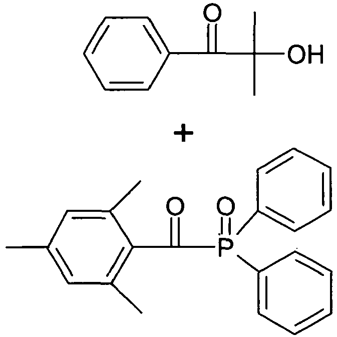 |
| | |
| 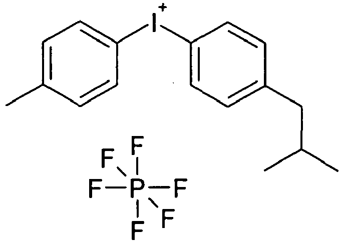 | |

Bevorzugte Beleuchtungssysteme zur Einleitung der Polymerisationsreaktion der Monomeren sind quecksilberbasierte Beleuchtungssysteme, beispielsweise H-, F- und G-Strahler. Besonders bevorzugt sind F-Strahler oder andere Beleuchtungssysteme mit niedrigem UV-B-Anteil und hohem UV-A-Anteil. Bevorzugterweise wird ein Filter verwendet, welcher Licht einer Wellenlänge von weniger als 320 nm, bevorzugt weniger als 340 nm und besonders bevorzugt weniger als 360 nm blockiert.

Weiterhin ist in der oben genannten Mischung enthaltend mindestens eine flüssigkristalline Verbindung und mindestens eine Monomerverbindung zusätzlich mindestens eine Verbindung enthalten, welche als Kettenübertragungsmittel (chain-transfer agent) wirkt. Chain-transfer agents reagieren in der Polymerisationsreaktion mit dem Polymer-Radikal zu einem Radikal und einem abgesättigten Polymer, welches nicht weiter reagiert. Das entstandene Radikal des Chain-transfer agents ist in der Lage, eine neue Polymerisationsreaktion zu initiieren. Durch die Verwendung von Chain-transfer agents kann unter anderem das Molekulargewicht der in der Polymerisationsreaktion erhaltenen Polymere kontrolliert werden.

Die chain-transfer agents sind bevorzugt in einer Konzentration von 0.1 % bis 10 %, besonders bevorzugt 1 % bis 8 % in der Mischung vorhanden. Die Konzentration dieser Verbindungen und anderer Mindermengenkomponenten wird bei der Angabe der Konzentrationen der flüssigkristallinen Verbindungen und des Polymers vernachlässigt.

Gemäß der vorliegenden Erfindung bevorzugt verwendete Chain-transfer agents enthalten mindestens eine C-Halogen, S-H, Si-H oder S-S-Bindung. Besonders bevorzugte Chain-transfer agents sind ausgewählt aus der Gruppe enthaltend die folgende Verbindung 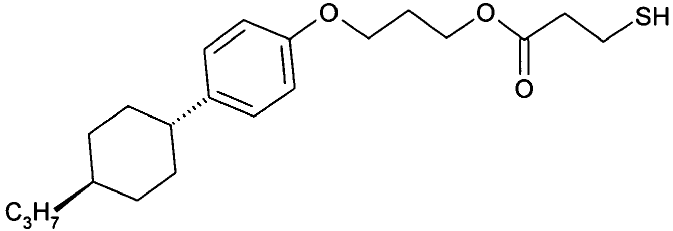 sowie 2-(Dodecylthiocarbonothioylthio)-2-methylpropionsäure, 2-Cyano-2-propyl-4-cyanobenzodithioat, 2-Cyano-2-propyl benzodithioat, 2-Cyano-2-propyldodecyltrithiocarbonat, 2-Cyanopropan-2-yl-*N*-methyl-*N*-(pyridin-4-yl)carbamodithioat, 2-Phenyl-2-propyl-benzodithioat, 4,4'-Thiobisbenzolthiol, 4-Cyano-4-(phenylcarbonothioylthio)pentansäure, 4-Cyano-4-[(dodecylsulfanylthiocarbonyl)sulfanyl]pentansäure, Bis(dodecylsulfanylthiocarbonyl)disulfid, Bis(thiobenzoyl)disulfid, Bromotrichloromethan, Cyanomethyldodecyltrithiocarbonat, Cyanomethyl-methyl(phenyl)carbamodithioat, Isooctyl-3-mercaptopropionat, Methyl-2-(dodecylthiocarbonothioylthio)-2-methylpropionat, Methyl-2-propionat-methyl(4-pyridinyl)carbamodithioat, N,N'-Dimethyl-N,N'-di(4-pyridinyl)thiuramdisulfid, Pentaerythritol-tetrakis(2-mercaptoacetat), Pentaerythritol-tetrakis(3-mercaptopropionat) und Trimethylolpropan-tris(3-mercaptopropionat).

Alternativ und ebenfalls bevorzugt ist eine Ausführungsform, gemäß der das Polymer durch Polymerisationsreaktion mindestens einer Monomerverbindung hergestellt wird, wobei die Schaltschicht enthaltend die flüssigkristalline Verbindung sowie das Polymer anschließend durch Mischen des Polymers und der flüssigkristallinen Verbindung hergestellt wird (zweischrittiges Verfahren).

Gegenstand der Erfindung ist somit auch die Verwendung einer Mischung enthaltend mindestens eine flüssigkristalline Verbindung sowie mindestens ein durch Polyadditionsreaktion erhaltenes Polymer zur Herstellung des erfindungsgemäßen Schaltelements.

Gemäß dieser Ausführungsform (zweischrittiges Verfahren) erfolgt, wie oben ausgeführt, eine Polymerisationsreaktion der mindestens einen Monomerverbindung, ohne dass gleichzeitig die mindestens eine flüssigkristalline Verbindung in der Mischung vorhanden ist. Die Polymerisation erfolgt bevorzugt in einem für Polymerisationsreaktionen typischerweise verwendeten Lösungsmittel, besonders bevorzugt in THF, Toluol, Butyrolacton oder NMP. Im Anschluss an die Polymerisation wird das Lösungsmittel entfernt und das Polymer mit der mindestens einen flüssigkristallinen Verbindung gemischt. Die erhaltene Mischung kann direkt zur Herstellung der Schaltschicht verwendet werden oder weiteren Verarbeitungsschritten unterworfen werden.

Zur Herstellung des Polymers können im zweischrittigen Verfahren analoge Verfahren wie beim in-situ-Verfahren angewendet werden, beispielsweise eine UV-Licht-induzierte Polyadditionsreaktion. Es können jedoch, aufgrund der abweichenden Rahmenbedingungen bei diesem Verfahren, auch andere Herstellverfahren für das Polymer eingesetzt werden.

Speziell geeignet und angepasst zur Verwendung zur Herstellung des erfindungsgemäßen Schaltelements ist eine Mischung enthaltend mindestens eine flüssigkristalline Verbindung, mindestens eine Monomerverbindung, welche eine monofunktionelle Verbindung, bevorzugt eine Monoacrylatverbindung darstellt, sowie mindestens eine Monomer verbindung, welche eine multifunktionelle Verbindung, bevorzugt eine Diacrylatverbindung darstellt, wobei mindestens eine Monomerverbindung eine oder mehrere mesogene Gruppen enthält. Eine solche Mischung ist daher ebenfalls Gegenstand der vorliegenden Erfindung.

Die Monomerverbindungen können dabei hohe Werte für die Doppelbrechung Δn aufweisen, oder sie können niedrige Werte für die Doppelbrechung Δn aufweisen.

Die Mischung wird erfindungsgemäß in einem folgenden Verfahrensschritt einer Polymerisationsreaktion unterzogen.

Weiterer Gegenstand der Erfindung ist daher die Mischung, welche aus der Polymerisationsreaktion der oben genannten Mischung resultiert.

Bevorzugte Ausführungsformen der flüssigkristallinen Verbindung, der monofunktionellen Monomer-Verbindung, der multifunktionellen Monomer-Verbindung, der Monoacrylatverbindung und der Diacrylatverbindung in den oben genannten Mischungen sind dieselben wie oben aufgeführt.

Im Rahmen der vorliegenden Erfindung wurde gefunden, dass die Verwendung von hohen Konzentrationen von Monomerverbindungen mit hohen Werten für die Doppelbrechung zu einer Erhöhung der Resttransmission und einer Verringerung der Empfindlichkeit des Schaltvorgangs führt (Typ B des Schaltelements, vgl. oben).

Umgekehrt kann durch die Verwendung von Monomerverbindungen mit niedrigen Werten für die Doppelbrechung und/oder durch die Verwendung von niedrigen Konzentrationen von Monomerverbindungen eine geringe Resttransmission und eine hohe Empfindlichkeit des Schaltvorgangs erreicht werden (Typ A des Schaltelements, vgl. oben).

Die vorliegende Erfindung ermöglicht es daher, die Eigenschaften des Schaltelements zwischen den Typen A und B variabel einzustellen.

Insbesondere wurde im Rahmen der vorliegenden Erfindung gefunden, dass das Verhältnis der Anteile von multifunktionellem zu monofunktionellem Monomer hohen Einfluss auf die Eigenschaften des Schaltelements hat. Durch eine Variation der Anteile können die Eigenschaften des Schaltelements zwischen den Typen A und B variabel eingestellt werden.

Nochmals insbesondere wurde gefunden, dass Monomerverbindungen mit zwei oder mehr Acrylatgruppen eine größere Wirkung auf die Resttransmission und die Empfindlichkeit des Schaltvorgangs haben als Monomerverbindungen mit einer Acrylatgruppe.

Die Verwendung von Monomerverbindungen mit zwei oder mehr Acrylatgruppen und mit hoher Doppelbrechung Δn führt zu Schaltelementen des Typs B, insbesondere wenn hohe Konzentrationen dieser Monomerverbindungen eingesetzt werden.

Hingegen wurde gefunden, dass die Verwendung von Monomerverbindungen mit einer Acrylatgruppe und mit hoher Doppelbrechung Δn alleine, auch in hoher Konzentration, nicht zu Schaltelementen des Typs B führt, d. h. keine relevante Erhöhung der Resttransmission und keine relevante Verringerung der Empfindlichkeit des Schaltvorgangs bewirkt. Besonders bevorzugt ist daher die Verwendung einer Mischung enthaltend mindestens eine flüssigkristalline Verbindung, mindestens eine Monoacrylatverbindung und mindestens eine Diacrylatverbindung in dem oben genannten Schaltelement des Typs B, wobei die Diacrylatverbindung eine Doppelbrechung Δn von mehr als 0.1, bevorzugt von mehr als 0.12 und besonders bevorzugt von mehr als 0.15 aufweist und in einer Konzentration von mehr als 4 %, bevorzugt von mehr als 6 % und ganz besonders bevorzugt von mehr als 8 % eingesetzt wird.

Weiterhin besonders bevorzugt ist daher die Verwendung einer Mischung enthaltend mindestens eine flüssigkristalline Verbindung, mindestens eine Monoacrylatverbindung und mindestens eine Diacrylatverbindung in dem oben genannten Schaltelement des Typs A, wobei die Diacrylatverbindung eine Doppelbrechung Δn von weniger als 0.15, bevorzugt von weniger als 0.12 und besonders bevorzugt von weniger als 0.1 aufweist und/oder in einer Konzentration von weniger als 4 %, besonders bevorzugt von weniger als 3 % und ganz besonders bevorzugt von weniger als 2 % eingesetzt wird.

Die folgenden Ausführungsbeispiele sollen die vorliegende Erfindung näher darstellen und verdeutlichen. Sie sollen nicht einschränkend bezüglich des Umfangs der Erfindung ausgelegt werden.

### Ausführungsbeispiele

### Beispiel 1:

Es werden die Mischungen 1, 2, 3 und 4 zubereitet. Sie enthalten jeweils die LC-Mischung A, welche die folgende Zusammensetzung aufweist:

| **LC-Mischun A** | |
|---|---|
| LC-Verbindung | % |
| 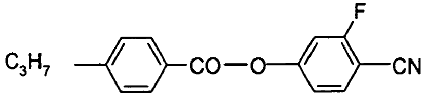 | 2 |
| PZG-3-N | |
| 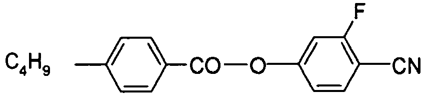 | 9 |
| PZG-4-N | |
| 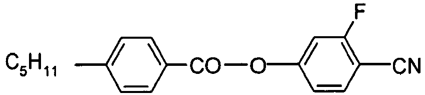 | 9 |
| PZG-5-N | |
| 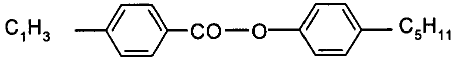 | 10 |
| PZP-1-5 | |
| 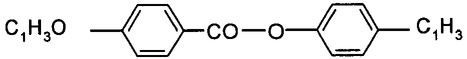 | 17 |
| PZP-10-1 | |
| 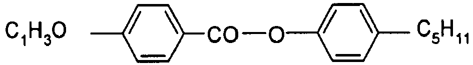 | 16 |
| PZP-1O-5 | |
| 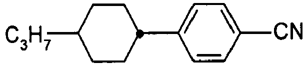 | 12 |
| CP-3-N | |
| 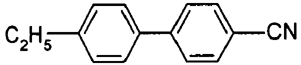 | 10 |
| PP-2-N | |
| 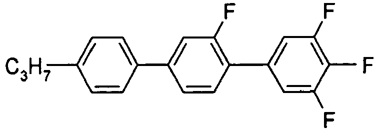 | 9 |
| PGU-3-F | |
| 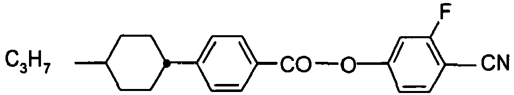 | 3 |
| CPZG-3-N | |
| 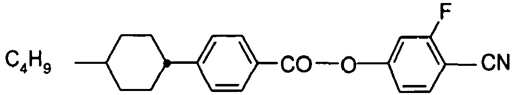 | 3 |
| CPZG-4-N | |

S-811 ist ein chiraler Dotand (Struktur s. Beschreibung). Die mit dem Kürzel RM bezeichneten Verbindungen sind Monomere. Ihre Strukturen sind in einer obenstehenden Tabelle abgebildet. Die Mischungen 2 und 4 entsprechen jeweils den Mischungen 1 und 3 mit dem Unterschied, dass die Starterverbindung Irgacure (Struktur s. Beschreibung) zugefügt wurde und die Polymerisation durchgeführt wurde.

Mischung 1: LC-Mischung A + 0,1% S-811 + 1,8% RM-D1 (Diacrylat) + 18,2% RM-M1 (Monoacrylat).

Mischung 2: LC-Mischung A + 0,1% S-811 + 1,8% RM-D1 (Diacrylat) + 18,2% RM-M1 (Monoacrylat). + 0,2% Irgacure 907. Polymerisierter Zustand

Mischung 3: LC-Mischung A + 0,1% S-811 + 10% RM-D1 (Diacrylat) + 10% RM-M1 (Monoacrylat).

Mischung 4: LC-Mischung A + 0,1% S-811 + 10% RM-D1 (Diacrylat) + 10% RM-M1 (Monoacrylat). + 0,2% Irgacure 907. Polymerisierter Zustand.

Die Mischungen werden in ein erfindungsgemäßes Schaltelement eingebracht und stellen darin die Schaltschicht dar. Die Schaltschicht liegt in der Ausführungsform einer TN-Zelle von 4 Mikrometern Schichtdicke vor. Die Polarisatoren des Schaltelements befinden sich in gekreuzter Stellung (90°).

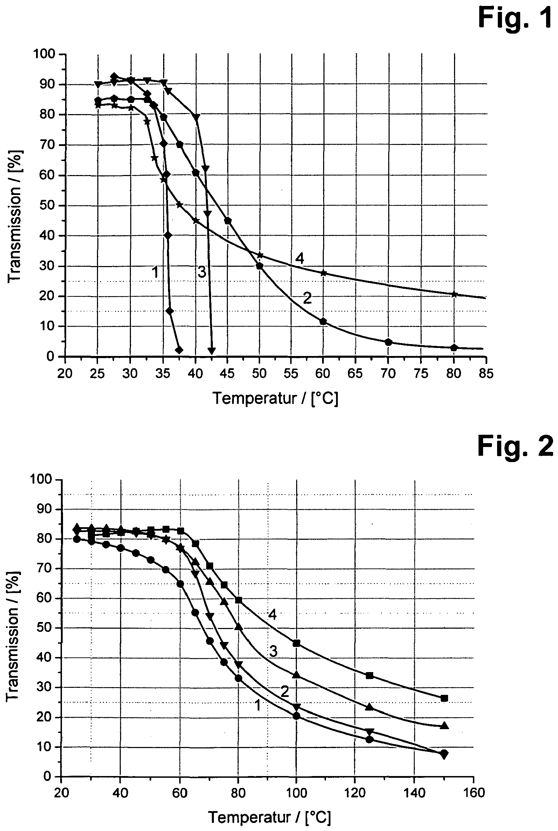

In Fig. 1 wird die Transmissionsänderung für die vier Mischungen jeweils in Abhängigkeit von der Temperatur gezeigt.

Es ist deutlich erkennbar, dass auch nach Polymerisation eine S-förmige Kurve für die Transmission in Abhängigkeit von der Temperatur erhalten wird, d. h. eine weitgehend konstante Transmission in den beiden Bereichen mit deutlich höherer Temperatur bzw. deutlich niedrigerer Temperatur als der Temperatur des Klärpunkt und eine sich rasch mit der Temperatur ändernde Transmission in der Nähe der Temperatur des Klärpunkts. Der Klärpunkt ist für die Kurve 2 verglichen mit der Kurve 1 deutlich hin zu höheren Temperaturen verschoben, für die Kurve 4 verglichen mit der Kurve 3 deutlich hin zu niedrigeren Temperaturen. Die Kurven 2 und 4 weisen eine Resttransmission im "geschlossenen Zustand" auf sowie eine verringerte Empfindlichkeit des Schaltvorgangs in Abhängigkeit von der Temperatur (weniger steile Kurve im Bereich des Klärpunkts). Kurven 2 und 4 und 4 unterscheiden sich untereinander insbesondere in Bezug auf die Resttransmission bei höheren Temperaturen. Diese ist bei Kurve 4 deutlich höher als bei Kurve 2.

Weiterhin ist hervorzuheben, dass die Mischungen 2 und 4 ein homogenes Aussehen und keine sichtbare Lichtstreuung aufweisen.

### Beispiel 2:

Es werden die Mischungen 1, 2, 3 und 4 zubereitet und polymerisiert (curing 3 Min,, 360 nm Kantenfilter, 37 mW/cm²).

Sie enthalten alle die folgende Grundmischung:
59,7% LC-Mischung A + 5% CGPC-3-3 + 5% CPZG-3-N + 0,1% S-811 + 0,2% Irgacure 651

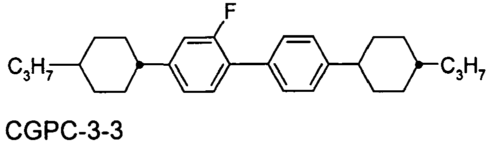

Zusätzlich enthält die Mischung 1:
   15% RM-M2 (Monoacrylat, niedriges Delta-n) + 15% RM-D2 (Diacrylat, niedriges Delta-n)
Zusätzlich enthält die Mischung 2:
   15% RM-M1 (Monoacrylat, hohes Delta-n) + 15% RM-D2 (Diacrylat, niedriges Delta-n)
Zusätzlich enthält die Mischung 3:
   15% RM-M2 (Monoacrylat, niedriges Delta-n) + 15% RM-D1 (Diacrylat, hohes Delta-n)
Zusätzlich enthält die Mischung 4:
   15% RM-M1 (Monoacrylat, hohes Delta-n) + 15% RM-D1 (Diacrylat, hohes Delta-n)

Die Substanzeigenschaften der Monomere RM-M2, RM-M1, RM-D2 und RM-D1 sind in der folgenden Tabelle aufgeführt (Strukturen vgl. obenstehende Tabelle).

| Substanz | Acrylattyp | Extrapolierter Klärpunkt | Extrapoliertes Delta-n |
|---|---|---|---|
| RM-M2 | Monoacrylat | -27,7 °C | 0,0196 |
| RM-M1 | Monoacrylat | 57,4°C | 0,1329 |
| RM-D2 | Diacrylat | -22,0°C | 0,0874 |
| RM-D1 | Diacrylat | 138,5°C | 0,1490 |

Die Mischungen werden in ein erfindungsgemäßes Schaltelement eingebracht und stellen darin die Schaltschicht dar. Die Schaltschicht liegt in der Ausführungsform einer TN-Zelle von 4 Mikrometern Schichtdicke vor. Die Polarisatoren des Schaltelements befinden sich in gekreuzter Stellung (90°).

In Fig. 2 wird die Transmissionsänderung für die vier Mischungen jeweils in Abhängigkeit von der Temperatur gezeigt.

Erneut weisen die Mischungen ein homogenes Aussehen und keine sichtbare Lichtstreuung auf.

Man erkennt deutlich, dass sich die Resttransmission mit Übergang von Mischung 1 über Mischung 2 über Mischung 3 hin zu Mischung 4 erhöht. Weiterhin verringert sich die Empfindlichkeit des Schaltvorgangs von Mischung 1 über Mischung 2 über Mischung 3 hin zu Mischung 4.

Das Schaltelement enthaltend Mischung 1 stellt ein Schaltelement des Typs A dar (geringe Resttransmission und hohe Empfindlichkeit des Schaltvorgangs), während das Schaltelement enthaltend Mischung 4 ein Schaltelement des Typs B darstellt (hohe Resttransmission und geringe Empfindlichkeit des Schaltvorgangs). Die Schaltelemente enthaltend Mischung 2 bzw. Mischung 3 stellen Übergangsformen dar.

Das vorliegende Beispiel zeigt also, wie durch geeignete Wahl von Mono- und Diacrylaten mit unterschiedlichen Werten für die Doppelbrechung unterschiedliche Transmissionskurven der Schaltelemente erhalten werden können, entsprechend den oben und in der Beschreibung dargestellten Typen A und B des erfindungsgemäßen Schaltelements.

### Beispiel 3:

Es werden 10 Mischungen hergestellt, welche alle die Komponenten LC-Mischung A, CPZG-3-N, CGPC-3-3, Irgacure 651 und S-811 enthalten. Zusätzlich sind in steigendem Anteil (4% bis 40%) die Monomerverbindungen RM-M2 und RM-D1 (vgl. oben) im Verhältnis 1:1 enthalten.

Die genauen Konzentrationen der Mischungen sind wie folgt:
LC-Mischung A (89.7-x%) + CPZG-3-N (5%) + CGPC-3-3 (5%) + Irgacure 651 (0,2%) + S-811 (0,1%) + x/2 % RM-M2 + x/2 % RM-D1, wobei
x = 4% für Mischung 1
x = 6% für Mischung 2
x = 8% für Mischung 3
x = 10% für Mischung 4
x = 12% für Mischung 5
x = 15% für Mischung 6
x = 17% für Mischung 7
x = 20% für Mischung 8
x = 30% für Mischung 9
x = 40% für Mischung 10.

Die Monomere stellen jeweils ein Monoacrylat mit niedriger Doppelbrechung (RM-M2) und ein Diacrylat mit hoher Doppelbrechung (RM-D1) dar.

Die Mischungen werden in ein erfindungsgemäßes Schaltelement eingebracht und stellen darin die Schaltschicht dar. Die Schaltschicht liegt in der Ausführungsform einer TN-Zelle von 4 Mikrometern Schichtdicke vor. Die Polarisatoren des Schaltelements befinden sich in gekreuzter Stellung (90°).

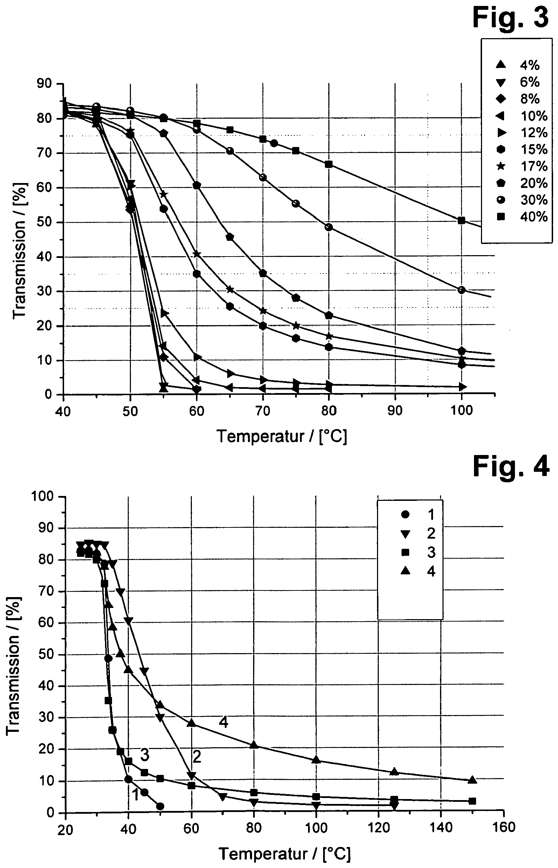

In Fig. 3 wird die Transmissionsänderung für die Mischungen jeweils in Abhängigkeit von der Temperatur gezeigt.

Das Beispiel zeigt, dass wie in Beispiel 2 ein Übergang zwischen Schaltelementen des Typs A zu Schaltelementen des Typs B erreicht werden kann, diesmal durch Erhöhung der Konzentration der Monomere in der Mischung.

Im Unterschied zu Beispiel 2 sind hier auch Mischungen mit sehr niedrigen Konzentrationen an eingesetztem Monomer gezeigt. In diesen Fällen kann eine sehr niedrige Resttransmission und eine hohe Empfindlichkeit des Schaltvorgangs erreicht werden.

### Beispiel 4:

Es werden die Mischungen 1 bis 4 hergestellt und polymerisiert.
Sie enthalten alle dieselbe Grundmischung:
   LC-Mischung A (99.7-x %), 0,1% S-811 und 0,2% Irgacure 907.
Zusätzlich enthält Mischung 1:
   x=10% Monomere enthaltend RM-M1 (Monoacrylat) : RM-D1 (Diacrylat) = 10:1
Zusätzlich enthält Mischung 2:
   x=20% Monomere enthaltend RM-M1 (Monoacrylat) : RM-D1 (Diacrylat) = 10:1
Zusätzlich enthält Mischung 3:
   x=10% Monomere enthaltend RM-M1 (Monoacrylat) : RM-D1 (Diacrylat) = 1:1
Zusätzlich enthält Mischung 4:
   x=20% Monomere enthaltend RM-M1 (Monoacrylat): RM-D1 (Diacrylat) = 1:1

Die Mischungen werden in ein erfindungsgemäßes Schaltelement eingebracht und stellen darin die Schaltschicht dar. Die Schaltschicht liegt in der Ausführungsform einer TN-Zelle von 4 Mikrometern Schichtdicke vor. Die Polarisatoren des Schaltelements befinden sich in gekreuzter Stellung (90°).

Erneut weisen die Mischungen ein homogenes Aussehen und keine sichtbare Lichtstreuung auf.

In Fig. 4 wird die Transmissionsänderung für die vier Mischungen jeweils in Abhängigkeit von der Temperatur gezeigt.

Es wird deutlich, dass mit Anstieg der Menge an eingesetztem Monomer in beiden Fällen (Mischung 2 gegenüber 1 und 4 gegenüber 3) eine erhöhte Resttransmission und eine geringere Empfindlichkeit des Schaltvorgangs auftritt.

Es besteht jedoch ein deutlicher Unterschied zwischen den Mischungen 4 und 2 in Hinblick auf die Resttransmission: in der Mischung 4, welche einen hohen Anteil an Diacrylat (Verhältnis 1:1) enthält, ist die Resttransmission bei gleicher Gesamtkonzentration an Monomer deutlich höher als in der Mischung 2 mit niedrigem Anteil an Diacrylat (Verhältnis Diacrylat zu Monoacrylat 1:10).

Die Empfindlichkeit des Schaltvorgangs ist jedoch bei beiden Mischungen ähnlich.

Durch Variation den Anteils an Diacrylat bei gleicher Gesamtkonzentration an Monomer lässt sich daher die Höhe der Resttransmission weitgehend unabhängig von der Empfindlichkeit des Schaltvorgangs beeinflussen.

## Patentansprüche

1. Temperaturgesteuertes Schaltelement zur Regulation des Lichtdurchtritts, enthaltend
- einen ersten Polarisator
- eine polarisationsbeeinflussende Schaltschicht, welche mindestens eine flüssigkristalline Verbindung sowie mindestens ein Polymer enthält, wobei das Polymer mindestens eine Wiederholeinheit enthaltend eine oder mehrere mesogene Gruppen umfasst, sowie
- einen zweiten Polarisator,
wobei die Schaltschicht zwischen den beiden Polarisatoren
angeordnet ist, **dadurch gekennzeichnet dass** das Polymer gebildet ist in einer Polymerisationsreaktion unter Einsatz von Monomeren enthaltend eine oder mehrere mesogene Gruppen, wobei der Anteil der Monomere enthaltend eine oder mehrere mesogene Gruppen bezogen auf die Gesamtmenge aller eingesetzten Monomere mindestens 90% beträgt.

2. Schaltelement nach Anspruch 1, **dadurch gekennzeichnet, dass** es als Schaltzustände einen Schaltzustand mit höherer Lichttransmission durch das Schaltelement und einen Schaltzustand mit geringerer Lichttransmission durch das Schaltelement aufweist.

3. Schaltelement nach Anspruch 2, **dadurch gekennzeichnet, dass** der Schaltzustand mit höherer Lichttransmission durch das Schaltelement bei niedrigeren Temperaturen des Schaltelements vorliegt, und der Schaltzustand mit geringerer Lichttransmission bei höheren Temperaturen des Schaltelements vorliegt.

4. Schaltelement nach Anspruch 2 oder 3, **dadurch gekennzeichnet, dass** der Zustand der Schaltschicht im Schaltzustand mit höherer Lichtdurchlässigkeit ein verdrillt nematischer Zustand ist, und dass der Zustand der Schaltschicht im Schaltzustand mit geringerer Lichtdurchlässigkeit ein isotroper Zustand ist.

5. Schaltelement nach einem oder mehreren der Ansprüche 1 bis 4, **dadurch gekennzeichnet, dass** es in einer baulichen Öffnung eines Gebäudes oder eines sonstigen nach außen abgeschlossenen Kompartiments angebracht ist.

6. Schaltelement nach einem oder mehreren der Ansprüche 1 bis 5, **dadurch gekennzeichnet, dass** es eine Flächenausdehnung von mindestens 0.05 m² aufweist.

7. Schaltelement nach einem oder mehreren der Ansprüche 1 bis 6, **dadurch gekennzeichnet, dass** es formflexibel und biegsam ist.

8. Schaltelement nach einem oder mehreren der Ansprüche 1 bis 7, **dadurch gekennzeichnet, dass** das Polymer in der Schaltschicht in einem Anteil von höchstens 30 % vorliegt.

9. Schaltelement nach einem oder mehreren der Ansprüche 1 bis 8, **dadurch gekennzeichnet, dass** das Polymer durch UV-Licht-induzierte Polyaddition gebildet wird.

10. Schaltelement nach einem oder mehreren der Ansprüche 1 bis 9, **dadurch gekennzeichnet, dass** das Polymer aus zwei oder mehr verschiedenen Monomerverbindungen gebildet wird, wobei mindestens eine Monomerverbindung eine monofunktionelle Verbindung darstellt und mindestens eine andere Monomerverbindung eine multifunktionelle Verbindung darstellt.

11. Schaltelement nach einem oder mehreren der Ansprüche 1 bis 10, **dadurch gekennzeichnet, dass** das Polymer aus Monomerverbindungen enthaltend jeweils eine oder mehrere Gruppen gewählt aus Acrylatgruppen, Vinylethergruppen und Epoxidgruppen gebildet wird.

12. Verwendung des Schaltelements nach einem oder mehreren der Ansprüche 1 bis 11 zur temperaturabhängigen Beeinflussung der Lichttransmission und/oder des Wärmeeintrags in einen Innenraum.

13. Verwendung nach Anspruch 12, wobei die Lichttransmission durch das Schaltelement im Bereich von 1000 bis 1500 nm Wellenlänge beeinflusst wird.

14. Verwendung einer Mischung enthaltend mindestens eine flüssigkristalline Verbindung sowie mindestens eine Monomerverbindung enthaltend eine oder mehrere mesogene Gruppen, wobei der Anteil der Monomerverbindung enthaltend eine oder mehrere mesogene Gruppen bezogen auf die Gesamtmenge aller Monomerverbindungen in der Mischung mindestens 90% beträgt, zur Herstellung eines Schaltelements nach einem oder mehreren der Ansprüche 1 bis 11.

## Claims

1. Temperature-controlled switching element for the regulation of the passage of light, comprising
- a first polariser
- a polarisation-influencing switching layer which comprises at least one liquid-crystalline compound and at least one polymer, where the polymer comprises at least one repeating unit containing one or more mesogenic groups, and
- a second polariser,
where the switching layer is arranged between the two polarisers, **characterised in that** the polymer is formed in a polymerisation reaction using monomers containing one or more mesogenic groups, where the proportion of the monomers containing one or more mesogenic groups, based on the total amount of all monomers employed, is at least 90%.

2. Switching element according to Claim 1, **characterised in that** it has, as switching states, a switching state having relatively high light transmission through the switching element and a switching state having relatively low light transmission through the switching element.

3. Switching element according to Claim 2, **characterised in that** the switching state having relatively high light transmission through the switching element exists at relatively low temperatures of the switching element, and the switching state having relatively low light transmission exists at relatively high temperatures of the switching element.

4. Switching element according to Claim 2 or 3, **characterised in that** the state of the switching layer in the switching state having relatively high light transmission is a twisted nematic state, and that the state of the switching layer in the switching state having relatively low light transmission is an isotropic state.

5. Switching element according to one or more of Claims 1 to 4, **characterised in that** it is installed in a structural opening of a building or another compartment which is sealed off from the outside.

6. Switching element according to one or more of Claims 1 to 5, **characterised in that** it has an area of at least 0.05 m².

7. Switching element according to one or more of Claims 1 to 6, **characterised in that** it is flexible in shape and bendable.

8. Switching element according to one or more of Claims 1 to 7, **characterised in that** the polymer is present in the switching layer in a proportion of at most 30%.

9. Switching element according to one or more of Claims 1 to 8, **characterised in that** the polymer is formed by UV light-induced polyaddition.

10. Switching element according to one or more of Claims 1 to 9, **characterised in that** the polymer is formed from two or more different monomer compounds, where at least one monomer compound is a monofunctional compound and at least one other monomer compound is a multifunctional compound.

11. Switching element according to one or more of Claims 1 to 10, **characterised in that** the polymer is formed from monomer compounds each containing one or more groups selected from acrylate groups, vinyl ether groups and epoxide groups.

12. Use of the switching element according to one or more of Claims 1 to 11 for influencing the light transmission and/or heat input into an inside space as a function of temperature.

13. Use according to Claim 12, where the light transmission through the switching element is influenced at a wavelength in the range from 1000 to 1500 nm.

14. Use of a mixture comprising at least one liquid-crystalline compound and at least one monomer compound containing one or more mesogenic groups, where the proportion of the monomer compound containing one or more mesogenic groups, based on the total amount of all monomer compounds in the mixture, is at least 90%, for the production of a switching element according to one or more of Claims 1 to 11.

## Revendications

1. Elément de commutation commandé en température pour la régulation de la transmission de la lumière, comprenant :
- un premier polariseur ;
- une couche de commutation influençant la polarisation, laquelle comprend au moins un composé cristallin liquide et au moins un polymère, où le polymère comprend au moins une unité récurrente qui contient un ou plusieurs composé(s) mésogène(s), et
- un second polariseur ;
où la couche de commutation est agencée entre les deux polariseurs, **caractérisé en ce que** le polymère est formé lors d'une réaction de polymérisation qui utilise des monomères qui contiennent un ou plusieurs groupe(s) mésogène(s), où la proportion des monomères qui contiennent un ou plusieurs groupe(s) mésogène(s), sur la base de la quantité totale de tous les monomères utilisés, est d'au moins 90%.

2. Elément de commutation selon la revendication 1, **caractérisé en ce qu'**il présente, en tant qu'états de commutation, un état de commutation présentant une transmission de lumière relativement élevée au travers de l'élément de commutation et un état de commutation présentant une transmission de lumière relativement faible au travers de l'élément de commutation.

3. Elément de commutation selon la revendication 2, **caractérisé en ce que** l'état de commutation présentant une transmission de lumière relativement élevée au travers de l'élément de commutation existe à des températures relativement faibles de l'élément de commutation, et l'état de commutation présentant une transmission de lumière relativement faible au travers de l'élément de commutation existe à des températures relativement élevées de l'élément de commutation.

4. Elément de commutation selon la revendication 2 ou 3, **caractérisé en ce que** l'état de la couche de commutation dans l'état de commutation présentant une transmission de lumière relativement élevée est un état nématique vrillé, et **en ce que** l'état de la couche de commutation dans l'état de commutation présentant une transmission de lumière relativement faible est un état isotrope.

5. Elément de commutation selon une ou plusieurs des revendications 1 à 4, **caractérisé en ce qu'**il est installé dans une ouverture structurelle d'un bâtiment ou dans un autre compartiment qui est rendu étanche par rapport à l'extérieur.

6. Elément de commutation selon une ou plusieurs des revendications 1 à 5, **caractérisé en ce qu'**il présente une aire d'au moins 0,05 m².

7. Elément de commutation selon une ou plusieurs des revendications 1 à 6, **caractérisé en ce qu'**il est flexible en termes de forme et **en ce qu'**il peut être fléchi.

8. Elément de commutation selon une ou plusieurs des revendications 1 à 7, **caractérisé en ce que** le polymère est présent dans la couche de commutation selon une proportion d'au plus 30%.

9. Elément de commutation selon une ou plusieurs des revendications 1 à 8, **caractérisé en ce que** le polymère est formé par polyaddition induite par lumière UV.

10. Elément de commutation selon une ou plusieurs des revendications 1 à 9, **caractérisé en ce que** le polymère est formé à partir de deux composés de monomère différents ou plus, où au moins un composé de monomère est un composé monofonctionnel et au moins un autre composé de monomère est un composé multifonctionnel.

11. Elément de commutation selon une ou plusieurs des revendications 1 à 10, **caractérisé en ce que** le polymère est formé à partir de composés de monomère dont chacun contient un ou plusieurs groupe(s) qui est/sont sélectionné(s) parmi des groupes acrylate, des groupes éther de vinyle et des groupes époxyde.

12. Utilisation de l'élément de commutation selon une ou plusieurs des revendications 1 à 11 pour influencer la transmission de la lumière et/ou l'entrée de chaleur à l'intérieur d'un espace intérieur en fonction de la température.

13. Utilisation selon la revendication 12, dans laquelle la transmission de la lumière au travers de l'élément de commutation est influencée à une longueur d'onde dans la plage de 1000 à 1500 nm.

14. Utilisation d'un mélange comprenant au moins un composé cristallin liquide et au moins un composé de monomère qui contient un ou plusieurs groupe(s) mésogène(s), dans laquelle la proportion du composé de monomère qui contient un ou plusieurs groupe(s) mésogène(s), sur la base de la quantité totale de tous les composés de monomère dans le mélange, est d'au moins 90%, pour la production d'un élément de commutation selon une ou plusieurs des revendications 1 à 11.
